(19)

**Europäisches Patentamt**
**European Patent Office**
**Office européen des brevets**

(11) **EP 4 291 526 B1**

(12) **EUROPEAN PATENT SPECIFICATION**

(45) Date of publication and mention
of the grant of the patent:
**15.10.2025 Bulletin 2025/42**

(21) Application number: **22753062.3**

(22) Date of filing: **08.02.2022**

(51) International Patent Classification (IPC):
*C01B 25/22* ^(2006.01)    *C01B 25/46* ^(2006.01)
*C01G 49/00* ^(2006.01)    *C02F 11/00* ^(2006.01)
*C05B 11/12* ^(2006.01)    *C05F 7/00* ^(2006.01)
*C01B 33/12* ^(2006.01)    *C02F 1/26* ^(2023.01)
*C02F 1/52* ^(2023.01)    *C02F 1/66* ^(2023.01)
*C02F 9/00* ^(2023.01)    *C05B 7/00* ^(2006.01)
*C05B 13/00* ^(2006.01)    *C05B 17/00* ^(2006.01)
*C05B 15/00* ^(2006.01)    *B09B 3/80* ^(2022.01)
*C02F 101/10* ^(2006.01)    *C02F 101/20* ^(2006.01)
*B09B 101/30* ^(2022.01)

(52) Cooperative Patent Classification (CPC):
**C02F 9/00; B09B 3/80; C01B 25/22; C01B 25/46;**
**C01B 33/126; C01G 49/0009; C05B 7/00;**
**C05B 13/00; C05B 15/00; C05B 17/00; C05F 7/00;**
B09B 2101/30; C02F 1/26; C02F 1/5236;
C02F 1/66;                              (Cont.)

(86) International application number:
**PCT/SE2022/050132**

(87) International publication number:
**WO 2022/173349 (18.08.2022 Gazette 2022/33)**

(54) **CHEMICAL PROCESSING OF SEWAGE SLUDGE ASH**

CHEMISCHE VERARBEITUNG VON KLÄRSCHLAMMASCHE

TRAITEMENT CHIMIQUE DE CENDRES DE BOUES D'ÉPURATION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Validation States:
**MA**

(30) Priority: **09.02.2021   SE 2150141**

(43) Date of publication of application:
**20.12.2023   Bulletin 2023/51**

(73) Proprietor: **EasyMining Sweden AB**
**191 29 Sollentuna (SE)**

(72) Inventors:
• **TUNSU, Cristian**
**752 57 Uppsala (SE)**
• **VAN DER WERF, Angela**
**756 53 Uppsala (SE)**
• **ROYEN, Hugo**
**756 44 Uppsala (SE)**
• **COHEN, Yariv**
**752 31 Uppsala (SE)**
• **SVÄRD, John**
**435 43 Pixbo (SE)**

(74) Representative: **AWA Sweden AB**
**Box 45086**
**104 30 Stockholm (SE)**

(56) References cited:
WO-A1-2011/025440    WO-A1-2011/025440
WO-A1-2014/178788    WO-A1-2020/169708
US-A- 4 216 012

**(Cont. next page)**

- **KYONG-JIN HONG ET AL.: "Study on the recovery of Phosphorus from the Waste-Activated Sludge Incinerator Ash", JOURNAL OF ENVIRONMENTAL SCIENCE AND HEALTH. PART A: TOXIC HAZARDOUS SUBSTANCES AND ENVIRONMENTAL ENGINEERING, TAYLOR & FRANCIS, US, vol. 40, no. 3, 30 November 2004 (2004-11-30), US , pages 617 - 631, XP009539248, ISSN: 1093-4529, DOI: 10.1081/ESE-200046614**
- **FLETCHER A.W., GAGE R.C.: "Dealing with a siliceous crud problem in solvent extraction", HYDROMETALLURGY., ELSEVIER SCIENTIFIC PUBLISHING CY. AMSTERDAM., NL, vol. 15, no. 1, 1 October 1985 (1985-10-01), NL , pages 5 - 9, XP055962353, ISSN: 0304-386X, DOI: 10.1016/0304-386X(85)90062-3**
- **BUDHATHOKI ROSHAN; VÄISÄNEN ARI: "Removal of silicon from CFB-derived fly ash leachate in the context of phosphorus recovery", HYDROMETALLURGY., ELSEVIER SCIENTIFIC PUBLISHING CY. AMSTERDAM., NL, vol. 179, 20 June 2018 (2018-06-20), NL , pages 215 - 221, XP085428132, ISSN: 0304-386X, DOI: 10.1016/j.hydromet.2018.06.007**

(52) Cooperative Patent Classification (CPC): (Cont.)
C02F 2101/105; C02F 2101/203; Y02A 40/20

**Description**

TECHNICAL FIELD

The present technology relates in general to chemical processing of sewage sludge ash and in particular to methods and arrangements for recovery of sewage sludge ash constituents.

BACKGROUND

Phosphorus is an essential nutrient for living organisms and has a non-replaceable role. In recent decades, the agricultural demand for phosphorus fertilizers has significantly increased. This is also forecasted to continue increasing due to population growth and rising living standards around the world. The raw material for mineral phosphorus fertilizer production and feed production is phosphate rock, which is a limited resource. In the European Union, both phosphate rock and phosphorus are considered critical raw materials. Many countries lack natural phosphorus deposits and are entirely dependent on imports. Since mining of phosphate rock is concentrated in only a few regions of the world, many countries are vulnerable to market fluctuations and geo-political factors. One of the measures proposed to reduce the import dependency of phosphorus and over-exploitation of natural deposits is the recovery of phosphorus from secondary sources. These include municipal and industrial wastewater, sewage sludge, sewage sludge ash and other wastes containing phosphorus. Governments and industries have recognised the importance of recovering phosphorus from secondary sources and some countries have started to implement legislation to pursue this.

The release of phosphorus to surface waters contributes to eutrophication. For this reason, phosphorus needs to be removed from domestic and industrial wastewaters during their treatment. This results in an accumulation of phosphorus in sewage sludge, which is a major by-product of wastewater treatment plants. Using this sludge as fertilizer is not a suitable option due to the large volumes produced and presence of heavy metals, organic contaminants and pathogens. Some of these drawbacks are mitigated by incinerating sewage sludge to produce sludge ash. This is done in specialized incinerators, in which wet sludge is pre-dried prior to incineration using recycled heat, to reduce its water content from 70 - 80 % to about 30 - 40 %. Incineration reduces the volume of sludge, destroys organic pathogens and results in a dry product with about 6 - 14 % wt. phosphorus. In comparison, phosphate rock contains about 12 - 16 % wt. phosphorus. However, despite the relatively high phosphorus content, sludge ash is not suitable for use as fertilizer. Although over 90 % of the phosphorus initially present in the wastewater ends up in the ash, the phosphorus compounds formed during incineration, e.g., calcium and aluminium phosphates, have low water solubility. Therefore, phosphorus cannot be dissolved and taken up by plants. Moreover, the heavy metals in the sludge, which are hazardous for living organisms, are concentrated in the ash due to the volume decrease. Co-incineration of sewage sludge with biomass can be done in conventional waste incineration plants but this results in ash with lower phosphorus content, typically below 5 % wt.

Due to the low water solubility and high thermal stability of calcium and aluminium phosphates and iron oxide, wet-chemical processing is preferred to recover phosphorus and iron from sludge ash. Several such processes are detailed in the literature and are briefly described below. These use a combination of leaching, precipitation, solvent extraction and/or ion exchange to recover sludge ash constituents, but not necessary all of them.

In the book "Phosphorus: Polluter and Resource of the Future - Removal and Recovery from Wastewater", IWA Publishing, chapter 25; a process for recovery of phosphorus from sludge ash named "LEACHPHOS" is described. The LEACHPHOS process relies on leaching sludge ash with dilute sulfuric acid. The leachate containing phosphorus, aluminium, iron and other dissolved impurities is separated from the undissolved residue using filtration.

The leachate undergoes stepwise neutralization to separate a mixed calcium, aluminium and iron phosphate product. The heavy metals end up in a mixed metal hydroxide sludge, which is precipitated at pH above 9. These mixed products have low market value and individual separation of the major constituents is not achieved. The phosphorus product cannot be directly used as fertilizer due to its low water solubility.

A process for phosphorus recovery was developed by the company Technicas Reunidas named "The PHOS4-LIFE process". This process uses sulfuric acid to leach sludge ash. Recovery of the dissolved iron is done by using solvent extraction. Information is not available regarding the extraction step of iron but since iron is in cationic form in sulfuric acid leachate, it is believed that iron is extracted with a solvent suitable for extracting iron in cationic form and that hydrochloric acid is then used for stripping the extracted iron from the loaded solvent. Steam evaporation is used to concentrate the iron chloride product. After the extraction of iron, phosphoric acid is separated using solvent extraction. This is further concentrated using steam evaporation to obtain technical grade phosphoric acid (75 % concentration). The metals ions left in solution after the extraction of phosphoric acid are precipitated as a mixed product at higher pH, which is achieved by addition of lime. The process requires the use of both sulfuric and hydrochloric acid, has high energy input for the evaporation stages; and separates a mixed metal hydroxide product with limited commercial value. A main disadvantage of using sulfuric acid for ash dissolution is that sulfuric acid reacts with the calcium content in the ash to form gypsum which is filtered together with the non-dissolved ash residue. This increases considerably the amount of residue that need to be disposed. Another disadvantage of using sulfuric acid is that all cations leached from the ash into solution are in form of sulphates (e.g. magnesium sulphate, etc.) When neutralizing a raffinate containing sulphates with lime (e.g. for precipitation of heavy metals) it generates a large amount of gypsum which makes the disposal costs high.

In a presentation at BALTIC 21 on September 28-30, Berlin, a process for phosphorus recovery from ash named "The Pasch process" was presented. The process uses dilute hydrochloric acid to leach sludge ash. The undissolved residue is separated using a parallel plate separator and filter; and is dewatered using a centrifuge. The metals dissolved, e.g., iron, lead, cadmium, copper, zinc, are extracted as a group using solvent extraction with a mixture of Alamine 336 and TBP. These are afterwards precipitated as a mixed hydroxide. Thus, individual separation of commercial metal compounds is not achieved. The phosphorus left in the raffinate after solvent extraction can be recovered using conventional phosphate precipitation however, the aluminium is not extracted by the Alamine 336 and TBP and is co-precipitated with the phosphorus product making its value low. The plant availability of such recovered phosphorus product is therefore low.

The former company EcoPhos suggested a process for phosphorus recovery from sludge ash based on leaching sludge ash or other raw phosphates with hydrochloric acid. Monocalcium phosphate in the leachate was converted to dicalcium phosphate by addition of calcium carbonate. Addition of sulfuric acid leads to precipitation of gypsum and generation of phosphoric acid. The separation of heavy metals is not described; and there is no consideration for the iron and aluminium dissolved from sludge ash.

Another process for phosphorus recovery by the former company EcoPhos is described in published international patent application WO2015091946A1. The process relies on leaching ash from the incineration of waste, including sewage sludge ash, with phosphoric acid. The leachate undergoes treatment with activated carbon. Phosphoric acid is separated from the dissolved metals using cation exchangers. The resin is regenerated with hydrochloric acid, which elutes mixtures of magnesium chloride and calcium chloride and of aluminium chloride and ferric chloride. The faith of the heavy metals is uncertain. The process does not recover iron and aluminium as separate commercial products; and does not separate calcium and magnesium from each other. The use of ion exchangers is less reliable, particularly for streams with high metal content and low phosphorus content. These can result in a premature loading of the ion exchangers and the breakthrough of metals in the phosphoric acid stream; short service spans; the need to elute the loaded resin with hydrochloric acid, which dilutes the metal solution and consumes chemicals; and the need to wash the residual hydrochloric acid in the ion exchange resin prior to treating additional phosphoric acid contaminated with metals, in order not to pollute the purified phosphoric acid product with hydrochloric acid.

The published international patent application WO2015067328A1 describes a method for treating ash from waste incineration to obtain compounds of aluminium, calcium, phosphorus and nitrogen. The ash is leached with a mixture of phosphoric acid and nitric acid to dissolve phosphorus as phosphoric acid and metals as metal nitrates. Calcium is precipitated as gypsum by adding sulfuric acid to the leachate. A mixture of aluminium hydroxide and aluminium phosphate is precipitated by further increasing the pH of the solution with lime. The remaining solution with phosphoric and nitric acid is concentrated via evaporation. Further addition of lime produces a mixture of calcium nitrate and calcium phosphate, which is recovered in solid form using evaporation-crystallization.

The published international patent application WO2015165481A1 describes a method for production of pure phosphoric acid, calcium sulphate, watersoluble calcium hydrogen phosphates and a metal salt solution by treating ash from waste incineration plants with raw phosphoric acid. The ash reacts with the raw phosphoric acid, lime and at least one sulphide and the leachate is separated from the precipitated heavy metal sulphides and the undissolved residue in a solid-liquid separation step. Gypsum can be precipitated from the leachate by adding sulfuric acid. Calcium hydrogen phosphate can be precipitated by adding tricalcium phosphate, calcium carbonate and/or calcium oxide.

The TetraPhos process by the company of Remondis is described in the book "Phosphorus: Polluter and Resource of the Future - Removal and Recovery from Wastewater" by IWA Publishing, 2018 in chapter 24. The process also relies on leaching sludge ash with phosphoric acid, followed by precipitation of gypsum using sulfuric acid. Subsequent ion exchange separates the metal ions, e.g., iron, aluminium and magnesium, from phosphoric acid. The metals in the ion exchange resin are eluted with hydrochloric acid to produce a mixed metal salt solution. The resulting phosphoric acid is further purified using membranes; and is concentrated using evaporation. The method has limited applicability for ashes with low phosphorus content and high soluble metal content. It does not recover iron, aluminium and other metals as separate commercial products. It requires the use and handling of both sulfuric and hydrochloric acid. Also, it uses ion exchangers which come with the aforementioned drawbacks. In addition, the use of membranes results in a less reliable process, e.g., fouling and short service spans.

The published international patent application WO2018046621A1 describes a process and device for recovering of phosphorus from sludge ash. The ash is leached with diluted phosphoric acid (7 - 14 %) to produce a solution enriched in phosphorus. Calcium in the leachate can be precipitated as gypsum by adding sulfuric acid. The resulting solution can be used for subsequent leaching of phosphate rock to further increase the concentration of phosphorus in solution. While the method allows for concentrating phosphorus with every leaching cycle, it does not separate a pure phosphorus stream, as the soluble impurities in sludge ash and phosphate rock also dissolve alongside phosphorus.

The European patent EP3266742B1 describes a method to produce phosphoric acid from primary and secondary raw materials containing phosphorus, including sludge ash, using a combination of acidic chemical digestion and electrodialysis and purification of crude phosphoric acid. The material is leached with a monovalent mineral acid, hydrochloric acid and/or nitric acid. Aluminium and iron are separated using solvent extraction with one or more organic extractants selected from di-(2-ethylhexyl) phosphoric acid (DEHPA), Cyanex 923, Cyanex 272 or mixtures of these. The crude phosphoric acid is subsequently concentrated to 40 - 70 % using vacuum evaporation, falling film evaporation, membrane distillation and/or reverse osmosis. This concentrate is further purified using solvent extraction. Recovery of the monovalent mineral acid from the concentrate is done using bipolar electrodialysis. Prior to electrodialysis, calcium and magnesium ions are precipitated from the concentrate as calcium and magnesium hydroxides. The method has high energy requirements for concentrating phosphoric acid and the electrodialysis step.

The published international patent application WO2020169708A1 describes a process for recovery of phosphoric acid from solid materials containing phosphorus, e.g., struvite, sludge ash, meat and bone meal ash, manure ash, calcium phosphate, and phosphate-containing minerals such as apatite, vivianite and phosphate rock. The solid material is reacted with a strong acid in a monophasic reaction medium also comprising an organic solvent. This leads to formation of phosphoric acid in the organic solvent and the phosphorus-depleted solid material. The organic solvent with phosphoric acid is separated from the remaining solid material and the phosphoric acid is recovered from the organic phase using conventional stripping. The method has limited industrial applicability for sludge ash due to the high loss of organic solvent in the undissolved ash residue. It is difficult to obtain full recovery of the solvent and clean-up of the residue. The process also presents very low phosphorus recovery yields. The only example for recovery of phosphorus from sludge ash describes extraction with a system comprising of sulfuric acid, sludge ash, water and n-propanol. The recovery efficiency was 15.8 % during 24 h.

The published international patent application WO9506004A1 describes a method for treating wastewater sludge using leaching with sulfuric acid, solvent extraction and stripping of iron and aluminium, sulphide precipitation of heavy metals, precipitation of phosphorus as hydroxyapatite or struvite, and precipitation of aluminium as aluminium hydroxide. Direct treatment of wastewater sludge without incineration leads to significantly larger consumption of chemicals and generation of large volumes of effluents due to the larger volume and high content of water of non-incinerated sludge.

A further method for chemical processing of sewage sludge ash is known from the document WO 2011025440 A1.

The published international patent application WO2014178788A1 describes several routes to recover phosphorus from sludge ash using leaching with hydrochloric acid and solvent extraction of metals with tributyl phosphate (TBP). All the solvent extraction steps presented involve prior treatment of the sludge ash leachate with a base to precipitate an intermediary compound, which is mainly a mixture of iron, aluminium and calcium phosphates. In this way, a preliminary concentration and partial purification of phosphorus is achieved. The intermediary precipitate is dissolved in hydrochloric acid, after which solvent extraction is performed. Thus, solvent extraction of metals and phosphorus is not performed directly after leaching. This intermediary precipitation step for iron, aluminium and calcium phosphates bypasses many of the drawbacks of applying solvent extraction directly after leaching, e.g., a lower phosphorus and iron concentration in solution and the presence of additional impurities. Such drawbacks are discussed in further detail later in this document. However, the intermediary precipitation step makes processing of sludge ash with solvent extraction more complex, expensive and increases chemical consumption. For instance, a base is needed to precipitate the intermediary compound, which is afterwards again dissolved in acid to dissolve phosphorus, aluminium, calcium, iron and the other constituents.

There is a need for better processes for recycling sludge ash, which guarantee not only recovery of phosphorus with high purity and yield, in a form that can be used in e.g. the fertilizer industry, but also recovery of other individual constituents with high purities and yields. For instance, recovery of iron separately from aluminium, recovery of calcium as a marketable product without losses during leaching, e.g. precipitation as gypsum, or recovery of magnesium and heavy metals is requested. Removal of these fractions from sludge ash generates an insoluble residue rich in silicates. This has important applications in the concrete industry, particularly if the hazardous heavy metals are removed. Due to the high volumes of sludge ash generated yearly, the use of this residue in the concrete industry leads to significant gas emission savings, as well as saving landfill space. Processing of sludge ash must preferably be achieved with minimal energy and chemical consumption, and minimum generation of waste. Many of the above processes fail to address more than one of these aspects.

## SUMMARY

The present invention relates to a method in accordance with claim 1.

Dependent claims refer to preferred embodiments of the invention.

A general object of the present technology is to provide a process for recycling sludge ash, which recovers phosphorus as well as other valuable constituents with high purity and yield in an energy and chemical consumption restrictive manner.

The above object is achieved by method claim 1.

In general words, a method for chemical processing of sewage sludge ash comprises dissolving a start material, emanating from sewage sludge ash, in an acid comprising hydrochloric acid. The start material comprising at least silicon and iron compounds. Undissolved residues are separated, whereby a leachate remains. At least one of iron and phosphorus is extracted from the leachate by liquid-liquid extraction with an organic solvent. The amount of colloidal silica being present in leachate provided to the step of extracting is controlled to be compatible with a silica crud amount in the liquid-liquid extraction with an organic solvent low enough for making the liquid-liquid extraction with an organic solvent operable. The step of controlling is performed by promoting coagulation to grow particles by adding a silica coagulant to at least one of said start material, dissolved start material emanating from sewage sludge ash and the leachate and/or by performing the dissolving step at an elevated temperature of at least 50°C. At least a part of a solution at least partly depleted in at least one of iron and phosphorus originating from the step of extracting at least one of iron and phosphorus is recirculated for dissolving the start material, emanating from sewage sludge ash. The recirculated part of the solution at least partly depleted in at least one of iron and phosphorus comprises chloride ions.

Also disclosed is an arrangement for chemical processing of sewage sludge ash comprises a dissolving reactor, a separating device, an extractor section, devices for controlling the amount of colloidal silica being present in leachate provided to the extractor section and a return pipe. The dissolving reactor is configured for dissolving a start material, emanating from sewage sludge ash, in acid comprising hydrochloric acid. The start material comprises at least silicon and iron compounds. The separating device is configured for separating undissolved residues, whereby a leachate remains. The extractor section is configured for extracting at least one of iron and phosphorus from the leachate by liquid-liquid extraction with an organic solvent. The devices for controlling the amount of colloidal silica being present in leachate provided to said extractor section are configured to control the amount to be compatible with a silica crud amount in the liquid-liquid extraction with an organic solvent low enough for making the liquid-liquid extraction with an organic solvent operable. The devices for controlling the amount of colloidal silica comprises a pre-treatment chamber configured for receiving the leachate and adding a silica coagulant into the leachate, wherein the pre-treatment chamber optionally comprises a separating device for removing coagulated silica particles from said leachate and/or comprises a heater arranged for providing an elevated temperature of at least 50°C in the dissolving reactor. The return pipe is configured for recirculating at least a part of a solution at least partly depleted in at least one of iron and phosphorus originating from said step of extracting at least one of iron and phosphorus, for dissolving a start material, emanating from sewage sludge ash. The recirculated part of the solution at least partly depleted in at least one of iron and phosphorus comprises chloride ions.

One advantage with the proposed technology is that valuable sewage sludge ash constituents can be extracted with a high purity and yield with low energy consumption and with low consumption of additional chemical substances. Other advantages will be appreciated when reading the detailed description.

BRIEF DESCRIPTION OF THE DRAWINGS

The invention, together with further objects and advantages thereof, may best be understood by making reference to the following description taken together with the accompanying drawings, in which:

FIG. 1 is a flow diagram of steps of an embodiment of a method for chemical processing of sewage sludge ash;

FIG. 2 is a part of a flow diagram of pre-treatment steps of an embodiment of a method for chemical processing of sewage sludge ash;

FIG. 3 is a part of a flow diagram of pre-treatment steps of another embodiment of a method for chemical processing of sewage sludge ash;

FIG. 4 is a flow diagram of part steps of an embodiment of a step for decreasing an amount of colloidal silica;

FIG. 5 is a flow diagram of part steps of an embodiment of a step for treating of sulphur;

FIG. 6 is a part of a flow diagram of pre-treatment steps of yet another embodiment of a method for chemical processing of sewage sludge ash;

FIG. 7 is a part of a flow diagram of pre-treatment steps of yet another embodiment of a method for chemical processing of sewage sludge ash;

FIG. 8 is a schematic drawing of an embodiment of an arrangement for chemical processing of sewage sludge ash, which is not part of the present invention;

FIG. 9 is a schematic drawing of an embodiment of a dissolving reactor;

FIG. 10 is a schematic drawing of an embodiment of pre-treatment chamber;

FIG. 11 is a schematic drawing of an embodiment of a general solvent extractor;

FIG. 12 is a schematic drawing of an embodiment of an iron extractor section with two solvent extractors;

FIG. 13 is a flow diagram of part steps of an embodiment of a step for extraction of iron;

FIG. 14 is a schematic drawing of an embodiment for scrubbing of impurities from organic phases loaded with iron;

FIG. 15 is a schematic drawing of an arrangement for neutralization of a ferric chloride product comprising hydrochloric acid;

FIG. 16 is a flow diagram of part steps of an embodiment of neutralization of a ferric chloride product comprising hydrochloric acid;

FIG. 17 is a flow diagram of part steps of treating iron of an embodiment of a method for chemical processing of sewage sludge ash;

FIG. 18 is a schematic drawing of an embodiment of an iron extractor section with one solvent extractor;

FIG. 19 is a schematic drawing of an embodiment of two-stage arrangement for chemical processing of sewage sludge ash;

FIG. 20 is an overview flow diagram of steps of an embodiment of a two-stage method for chemical processing of sewage sludge ash;

FIG. 21 is a diagram illustrating phosphate distribution between an aqueous phase and an organic phase;

FIG. 22 is a schematic drawing of an embodiment of a phosphorus extractor section;

FIG. 23 is a schematic drawing of arrangements of heavy-metal removing arrangements in an embodiment of a phosphorus extractor section;

FIG. 24 is a schematic drawing of an embodiment of a heavy-metal removing arrangement;

FIG. 25 is a schematic drawing of another embodiment of a heavy-metal removing arrangement;

FIG. 26 is a flow diagram of part steps of an embodiment of a step of recovering aluminium;

FIG. 27 is a schematic drawing of an embodiment of an aluminium separation arrangement;

FIG. 28 is a flow diagram of part steps of an embodiment of a step of recovering heavy metals;

FIG. 29 is a schematic drawing of an embodiment of a heavy-metal separation arrangement;

FIG. 30 is a flow diagram of part steps of an embodiment of a step of recovering magnesium;

FIG. 31 is a schematic drawing of an embodiment of a magnesium separation arrangement; and

FIG. 32 is a schematic drawing illustrating embodiments of recycled streams in an arrangement for for chemical processing of sewage sludge ash.

DETAILED DESCRIPTION

Throughout the drawings, the same reference numbers are used for similar or corresponding elements.

Sewage sludge ash is mainly comprised of oxygen, silicon, phosphorus, calcium, iron and aluminium, but typically also contains minor amounts of other elements, including magnesium, sodium, potassium and heavy metals, e.g., cadmium, copper, manganese, nickel, lead and zinc. The presence of arsenic and heavy metals in sludge ash, and leachability of hazardous compound contribute to the classification of this stream as hazardous waste requiring deposition in dedicated landfills or appropriate handling of heavy metals if the ash is used in other applications. Table 1 shows the elemental composition of five different sludge ashes. Ashes A, B and D were obtained from mono-incineration of sewage sludge, while ashes C and E were obtained from co-incineration of sewage sludge with wood chips. From Table 1 it can be seen that the phosphorus concentration of co-incinerated sludge ash (about 4 %) is lower than that of mono-incinerated sludge ash (about 8 %). Table 1 also describes the type of chemical used in the wastewater treatment plant to precipitate phosphorus. Three different groups of phosphorus precipitation chemicals are usually used: 1) precipitation chemicals based on ferric iron such as ferric chloride ($FeCl_3$) or ferric sulphate ($Fe_2(SO_4)_3$); 2) precipitation chemicals based on ferrous iron such as ferrous sulphate ($FeSO_4$) or ferrous chloride ($FeCl_2$); and 3) precipitation chemicals based on aluminium such as aluminium chloride ($AlCl_3$) or aluminium sulphate ($Al_2(SO_4)_3$).

Table 1. Elemental composition of ashes of incinerated sewage sludge (% wt.)

| Ash | Al | Mn | Fe | Na | Mg | P | S | K | Ca | Precipitation chemical |
|---|---|---|---|---|---|---|---|---|---|---|
| A | 6.51 | 0.14 | 2.97 | 0.49 | 0.48 | 6.93 | 0.12 | 0.78 | 4.47 | Al |
| B | 4.20 | 0.05 | 10.6 | 1.36 | 1.05 | 8.38 | 0.57 | 0.94 | 7.52 | Fe(II) |
| C | 4 .42 | 0.15 | 2.78 | 1.06 | 0.77 | 3.57 | 0.10 | 2.11 | 4.56 | Al |
| D | 5 .10 |  | 7.7 | 0.4 | 1.3 | 8.00 | 1.70 | 0.9 | 15.10 | Fe(III) |
| E | 0 .61 | 0.18 | 7.58 | 0.28 | 0.84 | 3 .96 | 0.26 | 0.68 | 5.40 | Fe(II) |

Regardless of the chemical used in the wastewater treatment plant, phosphorus in sludge ash is mostly present as calcium and aluminium phosphates, which have low water solubility. Because of this, wet chemical processes to recover phosphorus from the ash typically employ acidic leaching. This effectively dissolves the metallic phosphates and brings the phosphate ions in solution, from where they are recovered using hydrometallurgical techniques like precipitation, solvent extraction and ion exchange.

Many of the aforementioned processes to recover constituents from sewage sludge ash use sulfuric acid due to its low cost and for enabling precipitation of gypsum, which results in a phosphorus stream with lower calcium content. However, gypsum has generally a low commercial value. Moreover, coprecipitation of other elements in the leachate alongside gypsum is a concern and this can lead to contamination of the gypsum product and/or losses of potential recoverable fractions. If gypsum precipitates during leaching, it is lost in the undissolved ash residue, which means the bulk of calcium is not recovered from the ash and the volume of undissolved ash increases significantly.

Some processes use phosphoric acid for leaching. In this case, the solution is enriched with phosphorus dissolved from the ash, guaranteeing a stream with higher phosphorus content. However, this solution will be contaminated with heavy metals and other metals like iron, aluminium, calcium and magnesium. This requires additional purification, which is neither simple nor cheap, especially if using ion exchange. Most approaches target a separation of pure phosphoric acid and produce a mixture of the other metals, which has limited use and no commercial value.

Processes that use hydrochloric acid are in minority, leaving room for improvement. The use of hydrochloric acid for leaching has several attractive properties. For instance, in comparison with the use of sulphuric acid it removes any problems with gypsum precipitation during leaching. Hydrochloric acid is furthermore less expensive than phosphoric acid and since phosphorus is one of the constituents that is intended to be extracted, resources are not spent on recovering substances that are deliberately added to the process.

The intended approach according to the present disclosure is to leach sewage sludge ash with hydrochloric acid and thereafter separate individual compounds of the elements iron and phosphorus in solution through a solvent extraction with TBP. Preferably, also selective precipitation of aluminium, heavy metals, magnesium, calcium, sodium and potassium is performed. Leaching of sludge ash with hydrochloric acid followed by solvent extraction was, as such, described before, e.g., in the Pasch process or in the European patent EP3266742B1 and the international patent publication WO2014178788A1.

However, in the Pasch process, iron and other metals in the leachate are extracted as a group using an organic mixture of Alamine 336 and TBP. The metals extracted in the organic phase are stripped together and precipitated as mixed hydroxides, which means they are not recovered as individual compounds. The process uses solvent extraction to remove the metallic contaminants from the leachate containing phosphorus. After solvent extraction, phosphorus is left in the raffinate in a diluted form and this solution requires further treatment to recover phosphorus. This can e.g. be evaporation of a significant amount of water, which is energy intensive or conventional precipitation of a phosphorus compound with low water solubility. Such a phosphorus compound with low water solubility will thus not be suitable as fertilizer without chemical conversion to a more soluble product. The European patent EP3266742B1 describes solvent extraction with the organic compounds di-(2-ethylhexyl) phosphoric acid (DEHPA), Cyanex 923 and Cyanex 272 or mixtures of these to extract iron and aluminium. Solvent extraction is used in combination with bipolar electrodialysis to regenerate the acid used for leaching, a process that is energy intensive and sensitive to contaminants in solution.

One of the applicant's prior inventions, disclosed in the international patent application publication WO2014178788A1, describes leaching of sewage sludge ash with hydrochloric acid and subsequent solvent extraction of iron and phosphorus with TBP. However, the solvent extraction steps described in patent WO2014178788A1 are not performed immediately after leaching sewage sludge ash with hydrochloric acid, which, in contrast, is the intention in the present invention. Instead, in patent WO2014178788A1, the leachate is treated with a base to obtain an intermediary precipitate containing a mixture of calcium, iron and aluminium phosphates and other co-precipitated elements. Thus, a preliminary concentration and purification of phosphorus is obtained. This intermediary precipitate is separated from the original leachate and re-dissolved again in hydrochloric acid, after which solvent extraction with TBP is performed.

However, the use hydrochloric acid for leaching of sewage sludge ash is not as such free from additional problems. As mentioned in the background, leaching with hydrochloric acid typically gives a relatively low phosphorus and/or iron concentration in solution and additional impurities are also present, which may make solvent extraction difficult. It has for instance been found that leaching with hydrochloric acid gives a leachate that comprises non-neglectable amounts of colloidal silica, which renders an application of a direct solvent extraction process unusable.

In the published international patent application WO2014178788A1, this was overcome by using an intermediate precipitation step. Such a solution operates in general well but involves an unfavourably high consumption of added chemical substances. This is because the method described in WO2014178788A1 requires chemicals to precipitate the intermediary phosphorus compound in a separate step after leaching, a filtration step to isolate and clean the intermediary compound and a subsequent dissolution step with acid to re-dissolve phosphorus and the other metallic constituents of the intermediary precipitate in order to facilitate the subsequent solvent extraction steps.

The present invention, however, does not involve any intermediary step, and can be applied to a wide range of sludge ashes or sludge ash materials originating from previous processing of sludge ash, e.g. leaching at least a part of one or more constituents. Such ashes include those with very low phosphorus content and high content of iron, calcium, aluminium and other impurities. This leads to significant savings of chemicals, fewer process steps and the need for less equipment. In order to achieve a process that is more efficient concerning consumption of added chemical substances, the process should be based on extraction from a direct sewage sludge ash leachate based on hydrochloric acid.

Surprisingly, it has been seen that hydrochloric acid is able to leach more silicon compared to nitric or sulfuric acid. The dissolution yields are furthermore higher at lower acid concentrations and lower temperatures. The solubility limits of silicon species at acidic pH are indeed very low. The solubility limit for silicic acid at pH 2 is approximately 150 ppm. Above this concentration, silicic acid polymerizes and forms colloidal particles, precipitates, or a gel. Depending on conditions, these forms can evolve slow, which is not desired, especially if they occur during solvent extraction. Colloidal silica can lead to emulsification, crud formation, and high entrainment losses in any subsequent solvent extraction. It has been found that even low levels of colloidal silica, as low as 50 ppm, can interfere and make solvent extraction of e.g. iron and phosphorus with TBP practically impossible.

Colloidal silica will, with time, grow into larger, filterable, silica particles, but such a process is very slow and therefore not suitable for any industrial use. In order to make such an approach operable, the amount of colloidal silica in being present in leachate entering the solvent extraction has to be actively controlled. To this end, the amount of colloidal silica in the leachate has to be actively decreased or formation of colloidal silica should be actively mitigated during the leachate process. In other words, a step of controlling the amount of colloidal silica being present in leachate entering the solvent extraction stage is to be present.

Due to their very small size (0.01-0.5 $\mu$m), colloidal silica particles are very difficult to remove using conventional methods, such as sedimentation, filtration or centrifugation. This step may, however, be implemented in other ways, which will be described more in detail further below.

Another important aspect of a hydrochloric acid based process is that the efficiency of solvent extraction of iron and phosphorus is favored by a high ionic strength in the solution, and then in particular of chlorides. Such a salting-out effect during the solvent extraction enables a more selectable operation of the extraction. This can be favoured by a recirculation of at least a part of the raffinate, comprising chloride ions, after solvent extraction to be used in leaching of sewage sludge ash. The return and re-use of streams from various steps of the process is key to assure the ionic strength needed for the separation of iron and phosphorus using solvent extraction. The recirculation also assures the water balance and minimizes the amounts of secondary wastes produced.

A basic process based on these considerations opens up for a variety of different extraction steps, where valuable constituent of the sewage sludge ash can be extracted in pure fractions and in relatively high yields, which typically makes such extracted compounds valuable for continued use.

The present technology thus provides an improved way to operate the hydrochloric acid leaching of sewage sludge ash-containing materials, followed by solvent extraction and optionally precipitation of dissolved constituents. This technology enables recovery the majority of the iron in the sludge ash as iron chloride compounds. It also enables recovery of phosphorus as a high value product such as phosphoric acid or ammonium phosphates. It also enables recovery of aluminium as commercial compounds, e.g., aluminium phosphate, aluminium hydroxide, sodium aluminate and/or sodium aluminium phosphate. It also enables recovery of heavy metal contaminants as, e.g., metal hydroxides and/or sulphides. It also enables recovery of magnesium as commercial compound, e.g., magnesium hydroxide. It also enables recovery of calcium as commercial compound, e.g., calcium chloride. It also enables recovery of sodium as commercial compound, e.g., sodium chloride. It also enables recovery of potassium as commercial compound, e.g., potassium chloride. It also enables recovery of a clean undissolved silicate sand ash residue for commercial use, e.g., in the concrete industry. The technology also opens up for improvement of the overall effectiveness of the process and minimization of any generation of secondary wastes and chemical consumption by re-using and recirculating side-streams. This will also, as was indicated above, provide favourable operating conditions in various steps of the process, e.g., the ionic strength needed for selective separation.

Since sludge ash is an inhomogeneous stream, which can contain many fractions with different chemistry and composition, the present invention can take different embodiments, which distinguish themselves by the way the process steps are arranged, the omission of steps or insertion of additional steps if necessary and operating process steps at different conditions, e.g., temperature, acidity, pH etc. Various embodiments are detailed later in the description, all supported by research data.

Some often-used terminology in the present disclosure is to be interpreted as follows:

*Leaching, leaching agent, leachate* - Leaching refers to the removal of a soluble fraction contained in a solid phase as a solution. This is achieved by treating the solid phase with a solution called leaching agent. The solution obtained after leaching is called leachate and contains the constituents of the soluble fraction as ions.

*Solvent extraction or liquid-liquid extraction*- A separation method in which the chemical species to be separated are partitioned between two immiscible liquid phases: an aqueous phase (e.g., the leachate) and an organic phase which contains, among others, an extractant (see below). When referring to the solvent extraction of a particular element, this implies the solvent extraction of an extractable complex or compound containing said particular element. For example, in the text, extraction of phosphoric acid by TBP is often referred to as extraction of phosphorus.

*Extractant* - An active component, typically organic, which can bind the species of interest, enabling their extraction.

*Diluent* - A liquid, in this context organic, in which an extractant and a modifier are dissolved to form the organic phase.

*Modifier* - A substance added to the organic phase to increase the solubility of the extractant, salts of the extractant, or ion species derived from extraction or stripping. Also added to suppress emulsion formation.

*Stripping or back-extraction* - The opposite of extraction; the elution of the extracted compounds from a loaded organic phase with an aqueous solution to form an aqueous solution containing the species extracted.

*Scrubbing* - Similar to stripping but typically refers to the selective removal of extracted species that are not desired in the strip product, e.g., co-extracted impurities. Usually performed prior to stripping.

*Raffinate* - An aqueous phase from which a solute (dissolved specie) has been removed by extraction. In other words, the aqueous phase after solvent extraction.

*Crud* - the material resulting from the agitation of an organic phase, an aqueous phase and fine particles, that form a stable mixture. This can result in large losses of organic and/or the inability to run solvent extraction.

*Salting out* - Enhancing the extraction of a specie to the organic phase by increasing the ionic strength of the aqueous phase, e.g., by addition of an acid, salt or other chemicals capable of achieving this.

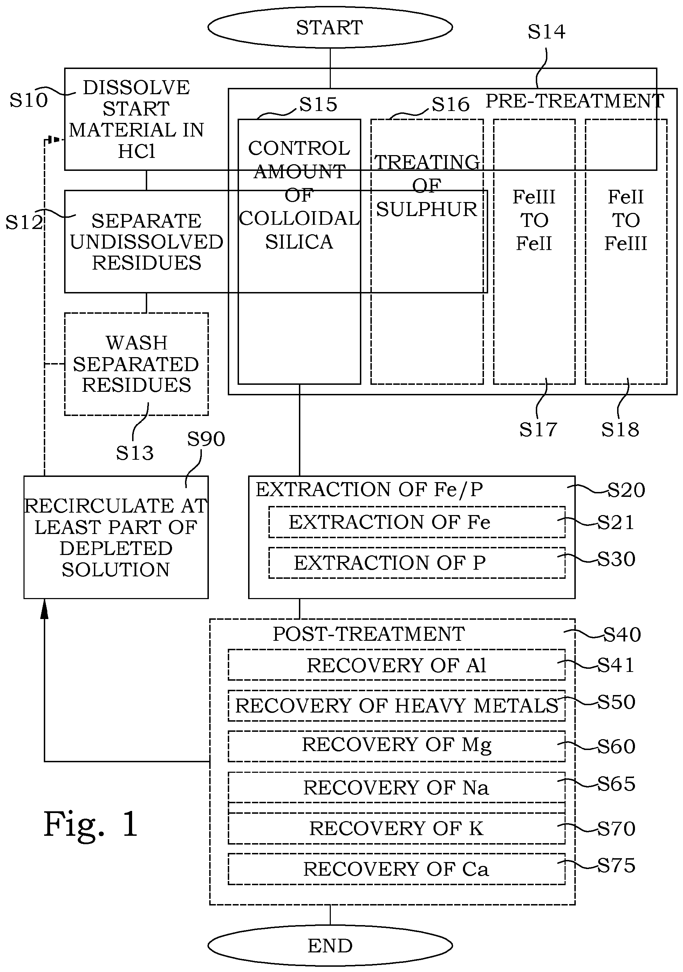

Figure 1 illustrates a flow diagram of steps of an embodiment of a method for chemical processing of sewage sludge ash. In step S10, a start material is dissolved in acid comprising hydrochloric acid. The start material emanates from sewage sludge ash. The start material can thus be the sewage sludge ash provided from an incineration process, but may also be e.g. undissolved residues from a previous dissolution of sewage sludge ash, which still contain constituents desired to be recovered. The start material comprises at least silica and iron. In other words, this initial step comprises leaching of sewage sludge ash or sewage sludge-ash containing materials.

Sewage sludge ash or sewage sludge ash-containing material is thus contacted with the leaching solution. The leaching solution comprises hydrochloric acid and a suitable aqueous diluent, typically water, but may also have contributions from streams that are returned from various steps of the process. Furthermore, other compounds may also be added during leaching, e.g., oxidizing or reducing agents, coagulants for colloidal silica, anti-foaming agents, other acids, bases, pH buffers and/or salts, as will be discussed more in detail further below. The presence of all of these constituents is not always needed and this depends, among others, on the type of ash leached, the leaching and separation yields desired in the following steps, or if pre-treatment of the leachate is carried out concomitant with leaching or as a separate step, as will be discussed further below.

The dissolving step S10 can be controlled to leach only part of the constituents of the sludge ash material. It is thus possible to control how much of one or more constituents dissolve by e.g. controlling the amount of acid in the leaching solution and process parameters like leaching time, temperature, mixing conditions, atmosphere, addition of oxidizing or reducing agents, liquid-to-solid ratio, particle size, ionic strength and others. For example, the bulk of iron in sludge ash can be leached using high concentrations of hydrochloric acid and/or elevated temperature, while a smaller percentage of the iron is leached at ambient temperature with diluted acid.

Since sludge ash typically contains a high amount of non-soluble silicates, the leaching step will not completely dissolve the sludge ash and will result in the production of a leachate and an undissolved solid residue. In step S12, undissolved residues are separated. Thereby a leachate remains. It can also be described as a recovery of the leachate from the undissolved sewage sludge ash residue, typically using a solid/liquid separation step, e.g., filtration, sedimentation, centrifugation etc. Due to its high silicate content and the removal of soluble constituents, the residue is suitable for use as material in e.g. the concrete industry.

The step S12 may optionally also comprise a part step S13 of cleaning of the undissolved residue to produce a silicate product. Cleaning of the undissolved ash residue, e.g., washing off residual leachate, can be done with a suitable cleaning agent, typically water, with or without additional additives. Such additives could e.g. be compounds to neutralize residual acid and/or to stabilize one or more constituents. The used cleaning agent, e.g., wash water with washed residual leachate, can be discarded. Alternatively, this can be treated separately to recover its constituents, re-used for further cleaning of residues, and/or used somewhere else in the process, e.g., mixed with the leachate and/or leaching solution.

In step S15, the amount of colloidal silica in dissolved sewage sludge ash is controlled, i.e., with the above indicated composition of the start materials, decreased. The amount of colloidal silica being present in leachate provided to a step of extracting, described here below, is controlled to be compatible with a silica crud amount in the liquid-liquid extraction with an organic solvent low enough for making the liquid-liquid extraction with an organic solvent operable. This can be performed as a separate process or as an at least partially common process with the steps S10 and/or S12, as indicated in the flow diagram. For instance, in different embodiments, the dissolving process of S10 can be influenced to result in a lower content of colloidal silica, or colloidal silica caused to form larger silica particles may be separated in step S12. The step S15 may also in other embodiments be completely separate from the steps S10 and S12.

The step S15 can be considered as one part step of a step S14 of pre-treatment of the leachate. This step S14 of pre-treatment of the leachate may optionally also comprise other types of pre-treatment of the leachate. In addition to colloidal silica, sulphur, if there is any, is also typically leached with hydrochloric acid. Sulphur may precipitate as gypsum, at least if the leachate is allowed to be aged. In an optional step S16, the leachate is pre-treated, concerning sulphur, in order to either speed up the precipitation of gypsum, which then typically will be separated together with undissolved residues, or prohibit gypsum formation, whereby sulphur will follow into the continued process. As for the colloidal silica case, such pre-treatment of the sewage sludge ash leachate may be performed separately and/or concomitant with the leaching.

As will be discussed in further detail later in this disclosure, it was found that ferrous iron is less efficiently extracted by liquid-liquid extraction than ferric iron. In an optional step S17, ferric iron in the leachate is reduced into ferrous iron, which later in the process will lead to a lower extraction efficiency for iron. In an optional step S18, ferrous iron in the leachate is instead oxidized into ferric iron, which later in the process will lead to a higher extraction efficiency. Which one of these steps to be performed, if any at all, depends on the actual approach for iron extraction selected in a later step of the process, as will be discussed further below.

The process then continues with separation, purification and recovery of elements leached. In step S20, at least one of iron and phosphorus is extracted from the leachate by liquid-liquid extraction with an organic solvent. Different embodiments of the part processes will be discussed further below, describing separation, purification and recovery of iron, part step S21, and/or separation, purification and recovery of phosphorus, part step S30.

In an optional step S40, different types of post-treatments of the raffinate from the step S20 may be performed. Typically, such post-treatments may include further separation of valuable elements emanating from the sewage sludge ash. This may e.g. comprise a step S41 for separation and recovery of aluminium, a step S50 for separation and recovery of heavy metals, a step S60 for separation and recovery of magnesium, a step S65 for separation and recovery of sodium, a step S70 for separation and recovery of potassium and/or a step S75 for separation and recovery of calcium. Some of these steps may also be performed in combination in different embodiments. Different types of such processes are discussed in detail further below.

In step S90, at least a part of a solution depleted in at least one of iron and phosphorus, is recirculated. The solution depleted in at least one of iron and phosphorus originates from the step S20 of extracting at least one of iron and phosphorus, possibly via the optional step S40 of post-treatment. The recirculated part of the solution depleted in at least one of iron and phosphorus comprises chloride ions. The recirculate solution is used for dissolving a start material, emanating from sewage sludge ash. In one embodiment, this dissolving using recirculated solution is a subsequent step S10. The recycling, re-use and/or recirculation of process streams contributes to minimize generation of secondary wastes and chemical consumption. It may also assure that some of the process conditions needed to perform several aforementioned steps are met.

The step of recirculating S90 at least a part of a raffinate is preferably controlled to provide a concentration of chloride salts and/or hydrochloric acid in the leachate of at least 1 M, according to the findings discussed in the examples.

In different embodiments of the present technology, the ash leachate goes through several steps in which different constituents in solution are selectively separated, purified and converted to commercial compounds. This is preferably done using solvent extraction with a suitable solvent such as TBP, and precipitation. However, as mentioned above, before the actual extractions may begin pre-treatment actions are necessary.

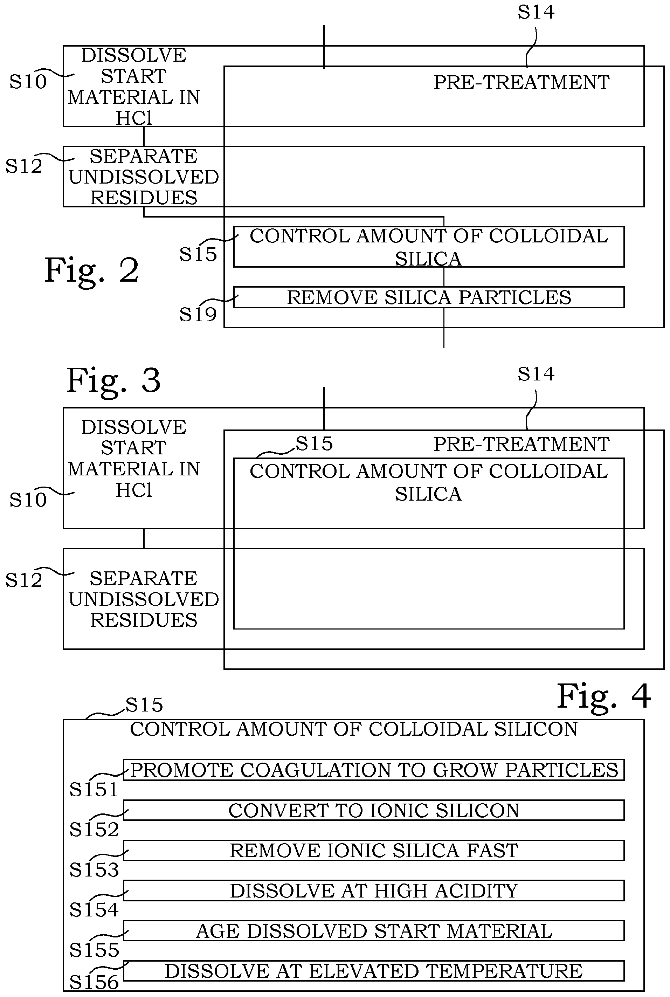

Figure 2 discloses a flow diagram of a part embodiment of a step S14 of pre-treatment of the sewage sludge ash leachate. As indicated above, this step involves a part step S15, in which the amount of colloidal silica in the dissolved sewage sludge ash is controlled.

None of the prior art mentioned above describes the occurrence of colloidal silica and its problematic influence on extraction. However, it has been discovered that colloidal silica indeed is present, and that colloidal silica negatively affect the solvent extraction steps to the point where these are not possible to perform due to irreversible crud formation. Due to the high amount of silicates in sewage sludge ash and despite their low solubility, silicon species will be present in the leachate, at least in a concentration of several hundred ppm.

When different types of sewage sludge ash and sludge ash materials were leached with hydrochloric acid at room temperature and solvent extraction was carried out directly after the solid-liquid separation of the leachate from the undissolved ash residue, it was not possible to operate the process due to irreversible formation of crud. This very stable emulsion negatively affected phase disengagement and rendered the organic phase unusable for stripping and re-use for extraction. Responsible for crud formation was silica present in the leachate. Silicon is a major constituent in sewage sludge ash, and it is found that some will be released in solution during leaching. Acids do not readily attack silicates such as quartz. However, many silicate minerals contain metal ions, typically sodium, potassium, iron, magnesium and aluminium. These are dissolved during leaching, causing the three-dimensional silicate structures to fall apart and essentially depolymerize into silicic acid. Silicon in solution starts life as silicic acid and then reacts along two separate pathways: dissociation and polymerization. As mentioned before, the solubility limit for silicic acid in acidic solutions is very low, approximately 150 ppm at pH 2. Above this limit, silicic acid polymerizes to form colloidal particles, precipitates, or a gel. The very small colloidal silica particles present in the leachate are able to stabilize an emulsion of oil in water, hindering phase separation, which is the basis for silica crud formation in solvent extraction.

Table 2 shows the composition of various leachates obtained after leaching sewage sludge ash with hydrochloric acid. The leaching process and the leaching behaviour of the other sewage sludge ash constituents will be addressed in more detail later, but now the focus is on silica. The leachates in table 2 had a pH <0. The data shows that the amounts of silicon leached are lower when leaching is done with more concentrated hydrochloric acid and are lower at higher Liquid-to-Solid (L:S) ratio.

Table 2 - Concentration of elements in sludge ash leachates after leaching sludge ash with hydrochloric acid solutions of different concentration at various volume/weight L:S ratios.

| Element | Concentration unit | Leaching conditions and concentration of elements in the leachate | | |
|---|---|---|---|---|
| | | 3 M HCl, L:S 3:1, 21 °C, 20 min | 6 M HCl, L:S 3:1, 21 °C, 20 min | 6 M **HCl,** L:S 4:1, 21 °C, 20 min |
| Al | g/l | 3.44 | 3.60 | 2.62 |
| Ca | g/l | 27.70 | 27.30 | 20.50 |
| Fe | g/l | 3.46 | 4.93 | 3.36 |
| K | g/l | 0.64 | 0.70 | 0.48 |
| Mg | g/l | 6.92 | 7.01 | 5.31 |

(continued)

| Element | Concentration unit | Leaching conditions and concentration of elements in the leachate | | |
|---|---|---|---|---|
| | | 3 M HCl, L:S 3:1, 21 °C, 20 min | 6 M HCl, L:S 3:1, 21 °C, 20 min | 6 M **HCl,** L:S 4:1, 21 °C, 20 min |
| Na | g/l | 1.03 | 1.07 | 0.81 |
| P | g/l | 29.6 | 29.6 | 23.1 |
| As | mg/l | 4.2 | 4.0 | 3.3 |
| B | mg/l | 10.1 | 11.0 | 8.2 |
| Ba | mg/l | 7.2 | 3.8 | 3.6 |
| Cd | mg/l | 0.8 | 0.9 | 0.6 |
| Co | mg/l | 2.7 | 2.9 | 2.1 |
| Cr | mg/l | 4.0 | 5.1 | 3.3 |
| Cu | mg/l | 180 | 191 | 143 |
| Mn | mg/l | 161 | 173 | 129 |
| Mo | mg/l | 1.6 | 1.8 | 1.3 |
| Ni | mg/l | 9.3 | 10.5 | 7.7 |
| Pb | mg/l | 51 | 53 | 38 |
| S | mg/l | 573 | 617 | 510 |
| Si | mg/l | 275 | 151 | 134 |
| Sr | mg/l | 475 | 473 | 364 |
| Zn | mg/l | 783 | 780 | 615 |

The leachates in table 2 were used in solvent extraction experiments using organic phases containing an organophosphorus extractant, e.g., a trialkyl phosphate (TBP), kerosene and a long chain organic alcohol as phase modifier, but also a trialkyl phosphine oxides (Cyanex 923), kerosene and a long chain organic alcohol as phase modifier. Crud was formed in all systems. Analysis of the raffinates after solvent extraction showed a decrease of the silica concentrations in solution, confirming its involvement in crud formation. Crud was more preeminent as the Organic-to-Acid (O:A) ratio decreased. Crud involved the formation of beaten egg-white like emulsions in the organic phase and at the interface, which were stable days after concluding the tests, rendering the organic phase unusable. At O:A ratios 1:1 and lower, crud was spread in the entire organic phase. Testing several types of kerosene, including a pure aliphatic one, 1-dodecanol or 1-decanol as phase modifier, and testing various concentrations of extractant, diluent and modifier in the organic phase always led to crud. Moreover, crud formed when mixing leachate with the diluent and/or modifier alone. Crud occurred when using leachates with low ionic strength (low acidity and/or low calcium chloride content), where extraction of iron and phosphorus was less efficient, and when using leachates with increased ionic strength (higher hydrochloric acid and/or higher calcium chloride content), where extraction of iron and phosphorus was efficient. Filtration of the leachate through 0.45 $\mu$m PVDF filters prior to solvent extraction did not prevent crud formation since colloidal silica particles are very small in size (0.01-0.5 $\mu$m). It is unfeasible that such particles can be removed at industrial scale in a cost-effective manner using conventional filtration or centrifugation.

In a further experiment, the leaching behavior in dependence of the hydrochloric acid concentration during leaching was further investigated.

Sludge ash was leached with hydrochloric acid solutions at ambient temperature (21 °C) and liquid/solid ratio of 3/1 v/w for 30 min. The hydrochloric acid concentrations used were 3 M, 6 M and 9 M. The leachate was separated from the undissolved residue by filtration (1 $\mu$m pore size).

Immediately after filtration, a filtrate sample was diluted with deionized water to stabilize the solution and prevent unwanted precipitation of silicon species. The elemental concentrations in solution were quantified using ICP-MS. The results are presented in Table 3 below.

Table 3. Analysis of sludge ash leachates prepared by leaching sludge ash with either 3 M, 6 M and 9 M hydrochloric acid solution at ambient temperature (21 °C) and liquid/solid ratio 3/1 v/w for 30 min.

| Element | Concentration unit | 3MHCl | 6 M HCl | 9 M HCl |
|---|---|---|---|---|
| Ca | g/L | 29.35 | 29.15 | 28.50 |
| Fe | g/L | 4.25 | 6.25 | 18.65 |
| K | g/L | 0.90 | 1.04 | 1.11 |
| Mg | g/L | 6.60 | 6.60 | 7.00 |
| Na | g/L | 1.08 | 1.12 | 1.15 |
| S | g/L | 1.11 | 0.93 | 0.27 |
| Si | mg/L | 324.00 | 168.00 | 115.50 |
| Al | g/L | 3.44 | 3.47 | 3.61 |
| As | mg/L | 4.69 | 4.58 | 5.25 |
| B | mg/L | 16.40 | 17.00 | 15.65 |
| Ba | mg/L | 2.88 | 2.37 | 3.34 |
| Cd | mg/L | 0.72 | 0.78 | 0.79 |
| Co | mg/L | 2.78 | 2.95 | 3.79 |
| Cr | mg/L | 4.29 | 5.30 | 14.90 |
| Cu | mg/L | 180.00 | 185.00 | 209.50 |
| Mn | mg/L | 160.50 | 170.00 | 180.00 |
| Mo | mg/L | 2.81 | 3.26 | 3.18 |
| Ni | mg/L | 9.20 | 10.40 | 17.20 |
| P g/L | g/L | 28.05 | 28.10 | 29.00 |
| Pb | mg/L | 34.95 | 37.85 | 38.90 |
| Sr | mg/L | 440.00 | 427.00 | 422.00 |
| Zn | mg/L | 750.00 | 805.00 | 855.00 |

The results show that, by controlling the hydrochloric acid concentration, it is possible to control the amount of silicon that end up in the leachate (including colloidal silica), and also the amounts of other elements like iron, sulfur, chromium, nickel etc. This allows control of the recovery rates of the ash constituents. Less silicon was present in solution when using more concentrated hydrochloric acid and more iron and heavy metals were dissolved.

This example shows that the total silicon concentrations in solution (including colloidal silica) and the leaching behavior of sludge ash constituents can be controlled by controlling the hydrochloric acid concentration during leaching. This affects the stability of the solution, e.g., post-precipitation of calcium sulphate, and the amount of crud formation during solvent extraction.

The hydrochloric acid concentration is also affecting the solvent extraction efficiency of phosphorus and iron.

The three leachates were subjected to batch solvent extraction tests immediately after preparation. Samples from each leachate were mixed for 5 minutes with organic solutions containing TBP (organic/aqueous ratio 1/1). Two organic phases were tested: i) 30 % vol. TBP, 30 % vol. 1-decanol and 40 % vol. kerosene; and ii) 80 % vol. TBP and 20 % vol. 1-decanol. Irreversible crud formed every time, regardless of the leachate used, the amount of TBP and 1-decanol in the organic phase or the presence/absence of kerosene. However, less crud formed when sludge ash was leached with 9 M hydrochloric acid, which correlates with the lower concentration of silicon quantified in this leachate (115.5 mg/L). The extraction yields for iron and phosphorus were significantly higher when sludge ash was leached with more concentrated acid, confirming that it is possible to control the extraction process by controlling the concentration of acid used for leaching the ash. In fact, the extraction yields for iron and phosphorous from the 3 M acid leachate were very low - about 2 % with 30 % vol. TBP solution. However, the efficiency improved significantly when the chloride content in solution was increased, for example by having an internal recirculation of chloride containing streams (chloride salts and/or hydrochloric acid). In contrast, for the 6 M HCl leachate, the extraction yield for iron increased to about 90 % due to the higher acidity and chloride concentration. Increased extraction yields could also be obtained by dosing chloride salts to the 3 M ash leachate to increase the ionic strength and recirculating internal flows to maintain a sufficiently high concentration of chloride ions. For example, dosing of calcium chloride significantly increased the recovery efficiencies of iron and phosphorus. Addition of 1 M calcium chloride to the leachate increased the extraction yield of iron from 2 % to 25 % per stage; 1.5 M calcium chloride to 53 %; and 2 M calcium chloride to 78 %.

It was observed that colloidal silica particles grow slowly and some eventually precipitate if the leachate is aged for enough time, which ranged from hours to even weeks depending on pH, initial silicon content and other parameters. However, crud still occurred when using leachates aged for several weeks, in which precipitation was seen and removed via 0.45 $\mu$m filtration prior to solvent extraction. This was because colloidal silica did not precipitate completely despite the long aging time, and solvent extraction processes are sensitive to very low amounts of total suspended solids. For solvent extraction, a total suspended solids concentration of less than 20 ppm is considered ideal, although many plants operate with average total suspended solids above 40 ppm. We saw that low levels of silica, of which as little as 50 ppm is present as colloidal silica, can cause crud.

A further experiment shows that ageing can decrease the amounts of silicon in the leachate. Aging promotes growing of colloidal silica particles, which are initially very small, submicron particle size, and do not settle. The speed of the process depends on several factors, not limited to solution pH, what other elements are present in solution, temperature, and initial silicon concentration. Growing the silica particles to a sufficient size enables their filtration and/or settling. The leachates produced in the example referred to in Table 3 were aged for 48 hours by letting them stand in closed recipients. The aged leachates were filtered with 1 $\mu$m pore size at various points in time to remove particles that may have grown above 1 $\mu$m. Table 4 below shows the total concentrations of silicon measured at various points in time. The results show a slow decrease in silicon concentrations. The decrease was larger at higher hydrochloric acid concentration, e.g., more effective for the 9 M acid vs 6 M, and the latter more effective than 3 M. Solvent extraction tests performed similarly to those in the example further above led to formation of crud, even at the lowest silicon concentration, i.e., 95.2 ppm or mg/L.

Table 4. The silicon concentrations (mg/L) in the fresh and aged leachates produced in example 1 above, after additional filtration (1 $\mu$m).

| Time | Si concentration in solution (mg/L) and acid concentration used for leaching | | |
|---|---|---|---|
| | 3 M HCl | 6 M HCl | 9 M HCl |
| 0 h (fresh leachate) | 324.0 | 168.0 | 115.5 |
| 7 h | 321.2 | 164.7 | 112.4 |
| 24 h | 307.9 | 157.1 | 102.9 |
| 48 h | 302.3 | 149.5 | 95.2 |

Ageing is thereby proved to reduce the silicon concentrations. However, it is presently believed that ageing has to be combined with other colloidal silica controlling actions in order to achieve leachates suitable for solvent extraction.

Further experiments were made to investigate the role of the temperature on leaching of silica. These experiments show surprisingly that temperature and time control during leaching, optionally coupled with choosing the hydrochloric acid concentration, can be effectively used to minimize crud formation during the solvent extraction processing of sludge ash.

Sludge ash was leached with 6 M hydrochloric acid at liquid/solid ratio 3/1 v/w but at higher temperatures for longer time: i) 60 °C for 5 hours and ii) 90°C for 1 hour. Compared with leaching at ambient temperature, a significant decrease in the silicon content in solution was observed in both cases (Table 5).

Table 5. Amounts of silicon in solution when performing leaching of ash with 6 M hydrochloric acid at different temperatures and leaching times (liquid/solid ratio 3/1 v/w).

| 21 °C, 0.5 h | 21 °C, 0.5 h | 60 °C, 5 h | 90 °C, 1 h |
|---|---|---|---|
| mg/L total Si | 168.0 | 51.8 | 37.1 |

The findings were very surprising since the prior art literature suggested other behaviors. According to the literature, for example Lenher and Merrill, 1917, the solubility of silicon in hydrochloric acid is significantly higher at higher temperatures. According to the literature, more silicon was expected in solution when performing leaching of sludge ash at 60 °C or 90 °C but, surprisingly, that was not the case here, where a start material emanating from sewage sludge ash was used. When performing solvent extraction batch tests with the leachates obtained at 60 °C and 90 °C, no significant crud was observed (organic:aqueous ratio 1: 1, 80 % vol. TBP).

The observations made above were found also to be valid when sewage sludge ash was replaced by sewage sludge ash which was already leached before with hydrochloric acid solution to remove the bulk of the phosphorus and part of (but not the majority) of iron. With this start material, leaching was done at temperatures above ambient temperature using at least 6 M HCl. This aimed at dissolving iron to produce an iron rich solution with low amount of phosphorus, which was afterwards used in solvent extraction tests. Like in the previous example, the leaching step gave less silicon in solution compared to leaching at ambient temperature, and crud did not form with 80 % TBP at organic/aqueous 1:1. The subsequent treatment of the leachate with a silica coagulant followed by filtration decreased the silicon concentration from several tenths of mg/L to about 6 mg/L. This solution was subjected to solvent extraction in counter-current separation equipment (multiple mixer-settler units), and the process was operated continuously for several days without silica crud.

From these surprising findings, it was concluded that performing the dissolving step at an elevated temperature of at least 50°C could provide leachates compatible with an operable liquid-liquid extraction with an organic solvent.

Surprisingly, although the literature e.g. "Dealing with a siliceous crud problem in solvent extraction", Hydrometallurgy 15 (1985), mentions treatment of leachates containing silica with activated carbon as a means to mitigate silica crud during solvent extraction, this was unsuccessful here. Treatment of sludge ash leachates with active carbon followed by filtration through 0.45 $\mu$m PVDF filters did not prevent crud formation with TBP. The literature, e.g. "Coagulation of colloidal silica by calcium ions, mechanism, and effect of particle size", Journal of Colloid and Interface Science, volume 53, issue 3, 576-588, 1975 also mentions that colloidal silica can be absorbed on calcium ions at high concentration of calcium in solution but, surprisingly, this was not effective for the sludge ash leachates tested here and up to 2.7 M calcium concentration in solution. Addition of a flocculant to the leachate did not solve the problem either since the colloidal silica particles were too small to be affected by flocculation agents. It was seen that dilution of the leachate with water, hydrochloric acid or salt solutions minimizes crud formation, but this was due to the decrease of the silica concentration in solution due to dilution. However, this is not feasible as it increases the aqueous volumes in the process, consumes chemicals or water; and requires a larger process capacity.

However, crud formation was avoided by adding a fluorine source to the leachate, in this case ammonium fluoride. This converted insoluble colloidal silica particles to ammonium fluorosilicate, which has a solubility limit in water at 25 °C of about 185 g/L. In one embodiment, addition of $NH_4F$ was used to form $(HN_4)_2SiF_6$. In other words, in one embodiment, the step of decreasing colloidal silica comprises addition of sources of fluorine such as e.g. $NH_4F$, HF, NaF or $CaF_2$ to convert colloidal silica to fluorosilicate species, such as e.g. $(HN_4)_2SiF_6$.

Crud was also avoided by using a coagulant designed for binding and growing colloidal silica particles facilitating their removal from solution using conventional solid-liquid separation techniques, e.g., a clarifier, filtration or centrifugation. This method is an alternative to addition of fluorine ions if fluorine is not desired further down in the stream. Adding several hundred ppm coagulant to the leachate precipitated colloidal silica immediately, enabling its removal using filtration, and avoided crud during solvent extraction. Silicon in solution can exist both as soluble silicon species, e.g., silicic acid, and insoluble colloidal silica, which forms from the dissociation and polymerization of silicic acid. Coagulation will only precipitate the latter.

Addition of silica coagulant to the leaching reactor during leaching of ash, followed by one filtration to remove both the undissolved ash residue and coagulated silica was in an experiment effective in facilitating subsequent processing of the resulting leachate in mixer-settlers without silica crud. A concentration of 36.4 mg/L silicon was quantified in the solution. Addition of silica coagulant to the leachate, after this was already separated from the undissolved ash reside, and removal of the coagulated silica using filtration also allowed operation without silica crud. This was obtained regardless of using TBP solutions diluted with 1-decanol and/or kerosene, e.g., 40 % vol. TBP or 75 % vol. TBP, or undiluted TBP.

This example shows that i) coagulation of silica is effective when leaching sludge ash at ambient temperature (21 °C) with 3 M hydrochloric acid solution, regardless of if the coagulation agent is added during or after leaching of ash; and ii) after removal of colloidal silica with coagulation, the solvent extraction process can be run continuously in counter-current separation units (multiple mixer-settlers) without silica crud. Without coagulation, such a leachate can contain above 300 mg/L silicon (see table 3), which caused crud during the solvent extraction of iron and phosphorus with TBP even when using only one organic-aqueous mixing stage. Multiple separation stages which are common in the industry (e.g., mixer-settlers), accentuate the problem and can render the process inoperable.

The former may not cause crud directly but can be extracted by the organic phase and stripped. If extracted and stripped, silicic acid or other ionic silicon species can be concentrated in the strip product if varying O:A ratios are used, as can be the case in the present invention. Colloidal silica can form in the strip product due to a concentration of ionic silicon above the stability threshold and/or due to pH changes, and can cause crud. To prevent this, a silica coagulant or fluorine source can be added the aqueous phase, i.e. the strip solution and/or strip product, to mitigate crud formation and facilitate phase separation in later stages of the solvent extraction process. It was seen that the presence of a silica coagulant in solution assisted in precipitating newly formed colloidal silica. This was also observed for sewage sludge ash leachates that were left to age for several days after colloidal silica was removed via coagulation and filtration. Generally, it is therefore recommended to carry out the solvent extraction process as soon as possible after coagulation and removal of colloidal silica from the leachate.

According to the presently presented technology, colloidal silica is controlled in a pre-treatment step. This can be carried out at different points in the process, preferably prior to contacting the sewage sludge ash leachate with the organic phase. In one embodiment, illustrated in Figure 2, the step S15 of decreasing the amount of colloidal silica is performed after the sewage sludge ash is leached with hydrochloric acid and the leachate is separated from the undissolved residue. In other words, in one embodiment, the controlling of colloidal silica is performed at least partly in the leachate after the step of separating undissolved residues, whereby the method comprises the additional step S19 of removing coagulated silica particles from the leachate.

In another embodiment, illustrated in Figure 3, the pre-treatment is done during leaching, i.e. together with step S10. In this case, in one embodiment, a silica coagulant or a fluorine source is added to the leaching reactor together with the ash and leaching agent. In another embodiment, the leaching is performed at an elevated temperature, preferably above 50°C, whereby the amount of colloidal silica in the leachate becomes low. In other words, in some embodiments, the controlling of colloidal silica is performed at least partly concurrently to the dissolving step.

These two embodiments may of course also be combined, wherein a part of the step S15 of controlling the amount of colloidal silica is performed concurrently to the dissolving and another part is performed after separation of residues.

It has thus been surprisingly proven by the present inventors that crud formation is avoided if the coagulant is either: 1) added first to the leaching agent, which is then mixed with the sludge ash, followed by filtration of the solution after leaching is concluded; 2) added to the leaching agent-sludge ash slurry during mixing but before filtration; 3) added to the leachate after filtration followed by removal of the precipitated silica fraction; or 4) combinations of the above, where only a part of the silica is decreased in each step.

It has been seen that, although not optimal, it is even possible to precipitate colloidal silica by addition of the coagulant to the leachate after filtration and run the solvent extraction directly afterwards without removing the precipitated silica from solution. This approach mitigates much of the crud due to growth of silica particles via coagulation but operation under such conditions is not considered ideal and can still lead to losses of organic due to crud.

In experiments, it was not possible to completely remove colloidal silica using ordinary filtration or centrifugation, but it was demonstrated that removal could be achieved using a coagulant specifically formulated for colloidal silica. The coagulant binds and grows colloidal silica particles enabling their removal using sedimentation, clarification or filtration, and, even without the removal step, allows solvent extraction operation with significantly lower losses of the organic phase.

Besides the alternatives of promoting coagulation to grow the particles and the conversion of colloidal silica to ionic silicon and removal of the ionic silicon, also other alternatives are feasible. If a very fast process is used, ionic silicon present in the leachate may be removed before it converts into colloidal silica. The silicon decreasing step is then part of the ordinary dissolving and separation steps.

Also, the opposite time schedule may be usable, permitting the dissolved sewage sludge ash to age to provide time for growth of silica. This may typically be performed after the separation of residues, but may also be performed at least partially before.

From the experiments, it was also seen that the amount of colloidal silica could be controlled by performing the dissolving step by high-acidity solutions. The controlling step then is part of the ordinary dissolving and separation steps.

From the experiments, it was concluded that performing the dissolving step at an elevated temperature of at least 50°C could provide leachates compatible with an operable liquid-liquid extraction with an organic solvent.

In other words, in one embodiment illustrated in Figure 4, the step of decreasing colloidal silica comprises at least one of:

-    promoting, as in step S151, coagulation to grow the particles;
-    conversion, as in step S152, of colloidal silica to ionic silicon, with optional removal of the ionic silicon;
-    fast removal, as in step S153, of ionic silicon before it converts to colloidal silica;
-    performing, as in step S154, the dissolving step by high-acidity solutions;
-    ageing, as in step S155, the dissolved sewage sludge ash to promote at least one of conversion of ionic silicon to colloidal silica and growth of colloidal silica particles; and
-    leaching, as in step S156, at elevated temperatures.

As mentioned above, the pre-treatment step S14, and the step S15 of decreasing the amount of colloidal silica, can be performed after the step of dissolving S10 or surprisingly also concomitant with the step of dissolving S10. In the latter case, the colloidal silica coagulant is added during leaching. An advantage for this is that the removal of the coagulated silica can take place with the undissolved ash residue, rendering a second solid-liquid separation step S19 to remove precipitated silica unnecessary.

In addition to colloidal silica, sulphur is typically also leached with hydrochloric acid as seen in table 2. This can precipitate from the leachate as calcium sulphate, e.g., gypsum. The literature e.g. "Composite Fouling of Calcium Sulfate and Calcium Carbonate in a Dynamic Seawater Reverse Osmosis Unit", MSc. Thesis. The University of New South Wales, Sydney, Australia. 2005, mentions that the induction period for gypsum (the appearance of gypsum crystals) in aqueous solutions of inorganic salts is especially increased by the presence of iron ions.

It was observed by the present inventors that for leachates similar to those in table 2, precipitation of sulphur occurred slowly after filtration, sometimes for several days. This is not desired since the presence of gypsum particles in the leachate can cause crud during solvent extraction and complicate the process.

Additional aging can be, of course, coupled with the pre-treatment step to ensure gypsum forms and precipitates prior to solvent extraction.

Alternatively, the induction period can be prolonged to allow operation to be performed before gypsum forms. This can be done by addition of substances which were previously known by a person skilled in the art to increase the induction period, e.g., sodium carboxymethyl-cellulose, sodium hexametaphosphate or polyacrylamide.

Also, sulphur precipitation was found to be faster at high calcium concentrations in the background. Therefore, the slow precipitation could be avoided by assuring a high calcium concentration in the leaching solution.

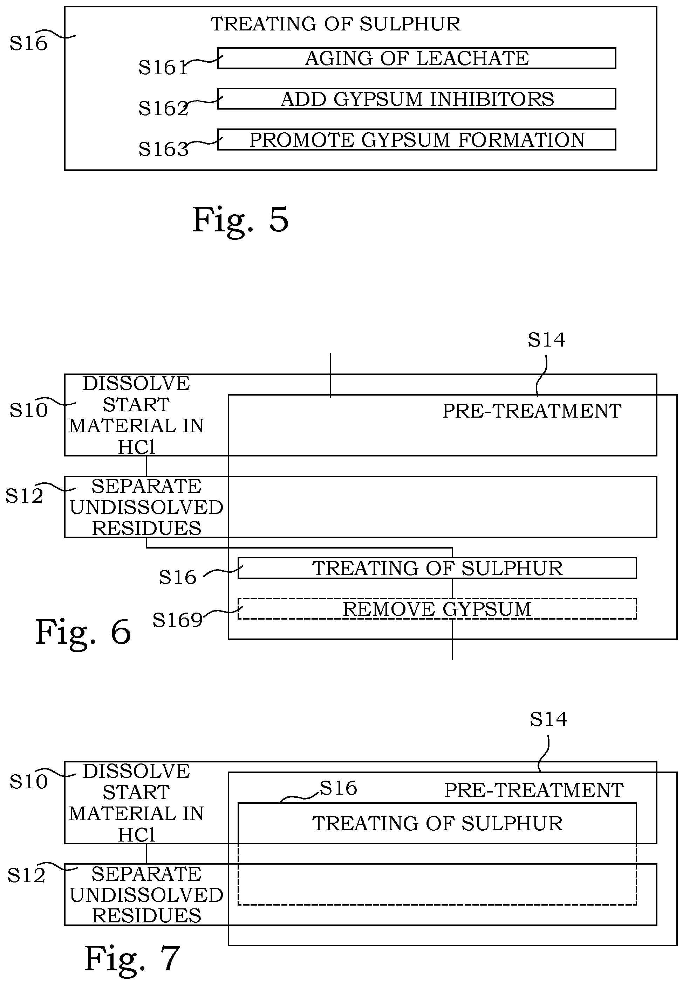

This is summarized in Figure 5, where different embodiments of the step S16 of treating of sulphur are illustrated. In step S161, the leachate from the dissolving of a start material is allowed to age. In step S162, the gypsum inhibitors are added to the leachate from the dissolving of a start material. In step 163, gypsum formation is promoted. This is preferably performed by assuring a high calcium concentration in the leaching solution and/or by addition of gypsum seeding particles to promote gypsum precipitation. The steps S161 and S163 may also be combined.

In other words, in one embodiment, the start material comprises sulphur. The method for chemical processing of sewage sludge ash comprises the further step of preventing precipitation of calcium sulphate to occur just before or during the step of extracting at least one of iron and phosphorus, by adding $CaSO_4$ inhibitors before the step of extracting at least one of iron and phosphorus. The term "just before" should be interpreted as a time period that does not permit any process of solid/liquid separation to be performed.

In another embodiment, the start material comprises sulphur. The method for chemical processing of sewage sludge ash comprises the further step of preventing precipitation of calcium sulphate to occur just before or during the step of extracting at least one of iron and phosphorus, by performing aging of the leachate and/or speeding $CaSO_4$ precipitation before the step of extracting at least one of iron and phosphorus.

The precipitation of sulphur as gypsum is in preferred embodiments accelerated by increasing the calcium chloride content in the leachate. This is also advantageous for the subsequent solvent extraction. The ionic strength of the leachate is increased which leads to an enhancement of the solvent extraction of iron and phosphorus. This will be elaborated further below. The supply of calcium is preferably achieved by addition of calcium chloride to the leachate, by returning calcium chloride-rich aqueous raffinate after the extraction of phosphoric acid to the leaching step replacing water, or by a combination of both.

Different embodiments to achieve a high concentration of calcium in the leachate and achieve faster precipitation of gypsum can be identified, concerning timing. In Figure 6, an embodiment is illustrated where the step S16 of treating sulphur is performed after the actual leaching is ended. Dosing of calcium chloride salting-out reagent to the leachate after leaching is performed. A step S169 of removing gypsum is then performed. Preferably, this measure can be performed together with e.g. addition of the silica coagulant, as discussed above, to facilitate precipitation and filtration of gypsum together with silica. The precipitation of gypsum positively affects filtration of silica since gypsum is a good filter aid. Steps S19 of Fig. 2 and step S169 of Fig. 6 can then be combined.

Alternatively, addition of substances which increase the induction period of gypsum may be performed after the actual leaching is ended. Since the sulphur then remains in the solution, no removing step S169 is needed.

Ageing the leachate for enough time to precipitate gypsum prior to solvent extraction can also be performed after the actual leaching is ended. This can be coupled with a silica treatment step, if any and can be done in settling tanks, clarifiers and/or similar equipment.

Alternatively, as illustrated in Figure 7, the step S16 can at least to a part be performed together with the dissolving step S10. In one embodiment, a high calcium background is assured during leaching to facilitate precipitation of gypsum. This can be done by addition of e.g. calcium chloride during leaching, by returning calcium chloride-rich aqueous raffinate after the extraction of iron and/or phosphate to the leaching step, thereby replacing water or by a combination of both. This causes gypsum to precipitate during leaching with higher yield. This also enables a separation, e.g. filtration, of precipitated gypsum together with the undissolved ash residue in step S12.

Alternatively, addition of substances which increase the induction period of gypsum may be performed together with the dissolving step S10.

Furthermore, as indicated above, addition of $CaSO_4$ seed particles may also improve the rate in which gypsum is precipitated. Such $CaSO_4$ seed particles may be provided at the latest during the step of dissolving S10 and/or as seed particles to the leachate after the step S12 of separating undissolved residues.

In other words, in one embodiment, the speeding of $CaSO_4$ precipitation comprises:

- addition of calcium chloride at the latest during the step of dissolving;

- addition of calcium chloride to the leachate after the step of separating undissolved residues;
- returning calcium chloride-rich aqueous raffinate resulting after a preceding the step of extracting iron and/or phosphorus at the latest during the step of dissolving;
- returning calcium chloride-rich aqueous raffinate resulting after a preceding the step of extracting iron and/or phosphorus after the step of separating undissolved residues;
- addition of $CaSO_4$ seed particles at the latest during said step of dissolving (S10); and/or
- addition of $CaSO_4$ seed particles to said leachate (206) after said step of separating (S12) undissolved residues (204).

Recovery of iron from the sludge ash leachate may be performed using an organic phase containing TBP as extractant. The form in which iron ions are present in the leachate, e.g., ferrous or ferric, also referred to as Fe(II) and Fe(III), respectively, determines if this is effectively extracted or not by TBP. It has been found that extraction of iron by TBP significantly decreases if ferric iron is reduced to ferrous iron using a reducing agent, e.g., addition of metallic iron to the leachate. The opposite is also true. To facilitate extraction of ferrous iron by TBP, oxidation to ferric iron can be done with an oxidizing agent.

This opens up for different approaches concerning extraction of iron. Oxidation can be exploited to maximize recovery of iron, e.g., if unextractable ferrous iron is present in sludge ash or leachate. With reference to Figure 1, a step of oxidation S18 of Fe(II) into Fe(III) can be coupled with the pre-treatment step S14. The oxidation can be done during and/or after the dissolving step S10. An oxidizing agent can, e.g., be hydrogen peroxide, ozone, chlorine gas etc.

In other words, in one embodiment, the method for chemical processing of sewage sludge ash comprises a further step of oxidizing any Fe(II) in the leachate into Fe(III) before the step of extracting S20.

At the contrary, reduction can be used to minimize extraction of iron, e.g., bypass iron extraction and proceed with the recovery of phosphorus. This may be preferable for ashes and/or leachates with very low iron content, where the benefit of recovering iron does not compensate the increased complexity of recovering both iron and phosphorus. Such a step of reduction S17 of Fe(III) into Fe(II) can be coupled with the pre-treatment step S14. The reduction can be performed during and/or after the dissolving step. Metallic iron or other reducing species will reduce ferric iron in solution, Fe(III), to ferrous iron, Fe(II). One advantage is that impurity ions can also be reduced, e.g. Cu(II) to metallic copper, which will precipitate.

In other words, in one embodiment, the method for chemical processing of sewage sludge ash comprises a further step of reducing any Fe(III) in the leachate into Fe(II) before the step of extracting S20. In such a case, the step S20 may in a particular embodiment comprise the step S30 of extracting phosphorus, but lack procedures for iron extraction.

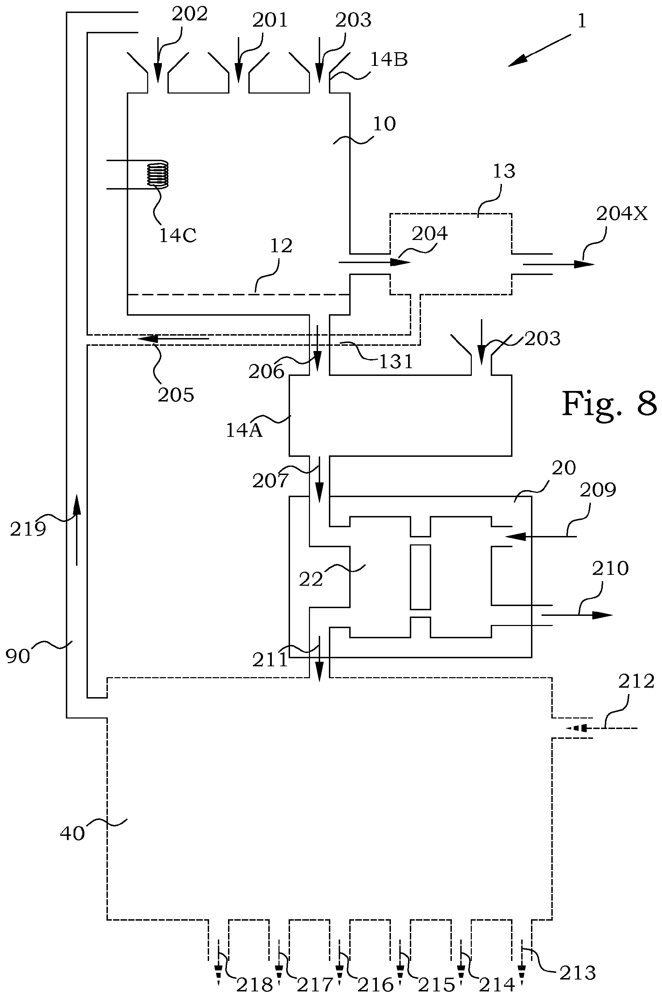

Figure 8 illustrates schematically an arrangement 1 for chemical processing of sewage sludge ash. A dissolving reactor 10 has an inlet for a start material 201. This start material 201 emanates from sewage sludge ash and comprises at least silica and iron. The dissolving reactor 10 also has an inlet for an acid 202 comprising hydrochloric acid. The start material emanating from sewage sludge ash is dissolved, at least partially, in the dissolving reactor. A separating device 12, e.g. a filter, separates undissolved residues 204 from a leachate 206. Preferably, the arrangement 1 for chemical processing of sewage sludge ash also comprises a washing chamber 13 configured for washing the separated undissolved residues 204 from remaining acid, resulting in a washed residue product 204X. Used washing liquid 205 may be returned into suitable stages in the process by return pipes 131. Alternatively, the washing liquid 205 may be provided to the extractor section 20 (described further below), e.g., mixed into the leachate 206 or the leachate 207 (described below).

The arrangement 1 for chemical processing of sewage sludge ash further comprises devices 14A, 14B, 14C for controlling the amount of colloidal silica being present in leachate 207 provided to the extractor section 20. These devices may comprise an inlet 14B for additives 203 into the dissolving reactor and/or at least one pre-treatment chamber 14A into which the additives 203 may be introduced and/or a heater 14C arranged for providing an elevated temperature of at least 50°C in the dissolving reactor 10. This will be discussed more in detail further below. A leachate 207 with less or no colloidal silica is resulting.

The arrangement 1 for chemical processing of sewage sludge ash further comprises an extractor section 20 having equipment 22 for liquid-liquid extraction with an organic solvent. The equipment 22 for liquid-liquid extraction is configured for extracting at least one of iron and phosphorus from the leachate 207 with less or no colloidal silica. A stripping liquid 209 is added and results in the provision of at least one liquid 210 comprising iron and/or phosphorus. A raffinate 211 at least partly depleted in iron and/or phosphorus is provided from the extractor section 20.

Preferably, the arrangement 1 for chemical processing of sewage sludge ash further comprises a post-treatment section 40, in which remaining constituents in the raffinate 211 by use of different post-treatment additives 212 may be separated and recovered, e.g. aluminium 213, heavy metals 214, magnesium 215, sodium 216, potassium 217and/or calcium 218.

Raffinate, possibly post-treated, is at least a part recirculated. A raffinate 211 at least partly depleted in iron and/or phosphorus originating from the extractor section 20 can by a return pipe 90 be brought back to the inlet of the dissolving reactor 10, for dissolving a start material, emanating from sewage sludge ash. The recirculated part 219 of the raffinate 211 at least partly depleted in iron and/or phosphorus comprises chloride ions.

Preferably, the return pipe 90 comprises means for controlling an amount of recirculated raffinate to obtain a concentration of chloride salts and/or hydrochloric acid in the leachate of at least 1 M.

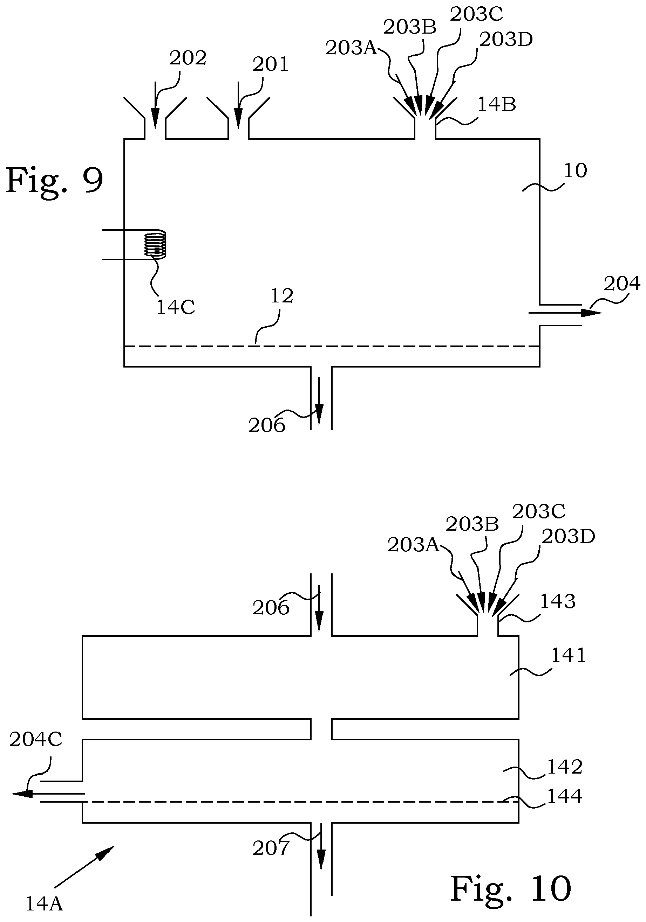

Figure 9 illustrates schematically one embodiment of a dissolving reactor 10, in which devices for decreasing the amount of colloidal silica in dissolved sewage sludge ash have been integrated. In this embodiment an inlet 14B is provided, through which additives 203A can be introduced into the dissolving reactor 10. These additives 203A may, as was described further above, promote coagulation to grow the silica particles from colloidal silica or may convert colloidal silica to ionic silicon, which may remain in solution if adequately soluble, or precipitate at least partly into any undissolved residuals 204 if the solubility limit is reached. Silica particles grow until they may be separated by the separating device 12. The control of the amount of colloidal silica is thereby surprisingly possible to performed concurrently to the dissolution itself and within the same dissolving reactor 10.

In an analogue manner, additives 203B, for preventing precipitation of calcium sulphate to occur in or during the transport to the extractor section 20, may be entered. For instance, $CaSO_4$ inhibitors may be introduced, which mitigates precipitation of gypsum. Thereby, the sulphur will continue through the arrangement in solution. Alternatively, additives for speeding $CaSO_4$ precipitation may be added, whereby gypsum precipitates and is separated by the separating device 12 together with the undissolved residuals 204. The treatment of sulphur is thereby surprisingly possible to be performed concurrently to the dissolution itself and within the same dissolving reactor 10.

Also oxidizing or reducing additives can be added to influence the oxidation state of the iron ions, and possibly also for other metals. A reduction agent 203C, such as e.g. iron metal, may be used for reducing Fe(III) into Fe(II). Alternatively, an oxidation agent 203D, may be used for oxidizing Fe(II) into Fe(III). The treatment of the iron oxidation state is thereby surprisingly possible to performed concurrently to the dissolution itself and within the same dissolving reactor 10.

Figure 9 also illustrates or a heater 14C. The heater is arranged for providing an elevated temperature in the dissolving reactor 10. This may be performed by heating the acid 202 before or in connection to the entering into the dissolving reactor and/or heating the acid during the leaching process in the dissolving reactor.

Figure 10 illustrates one embodiment of a pre-treatment chamber 14A. This pre-treatment chamber 14A could be used as a complement or alternative to the arrangements for decreasing the amount of colloidal silica in dissolved sewage sludge ash of Figure 9. In a first mixing chamber 141, additives 203A may be added through an inlet 143. These additives 203A may, as was described further above, promote coagulation to grow the silica particles from colloidal silica or may convert colloidal silica to ionic silicon. Silica particles grow until they reach separable sizes. The pre-treatment chamber 14A comprises in this embodiment an ageing chamber 142 in which precipitations may settle and silica particles are allowed to grow. Any precipitation and silica particles 204C may be separated by a separating device 144, giving a pre-treated leachate 207. In alternative embodiments, either the mixing chamber 141 or the ageing chamber 142 may be omitted and in further other embodiments the mixing chamber 141 and the ageing chamber 142 may be combined.

In an analogue manner, additives 203B, for preventing precipitation of calcium sulphate to occur in or during the feed to the extractor section 20, may be entered. For instance, $CaSO_4$ inhibitors may be introduced, which mitigates precipitation of gypsum. Thereby, the sulphur will continue through the arrangement in solution. Alternatively, additives for speeding $CaSO_4$ precipitation may be added, whereby gypsum precipitates 204C and is separated by the separating device 144.

Also oxidizing or reducing additives can be added to influence the oxidation state of the iron ions, and possibly also for other metals. A reduction agent 203C, such as e.g. iron metal, may be used for reducing Fe(III) into Fe(II). Alternatively, an oxidation agent 203D, may be used for oxidizing Fe(II) into Fe(III).

In one embodiment, the step of extracting at least one of iron and phosphorus from the leachate by liquid-liquid extraction with an organic solvent comprises a step of extracting iron from the leachate by liquid-liquid extraction with an organic solvent.

As mentioned above, recovery of iron from the sludge ash leachate may be performed as iron chloride using an organic phase containing TBP as extractant. A long chain alcohol, e.g., decanol can be used as modifier and kerosene can be used as diluent if required. Other organic compounds and mixtures may also be suited for this purpose. It has been identified that, although iron is extracted by TBP in preference to phosphorus and most other impurities in the leachate, some co-extraction of phosphorus, calcium and other minor elements indeed occurs.

The amounts of elements that co-extract with TBP alongside iron can be decreased if extraction is performed close to the loading capacity of the organic phase with iron. Such a situation may be achieved by controlling the organic-to-aqueous (O:A) ratio and/or the content of TBP in the organic phase. Iron can thus be controlled to be concentrated in the loaded organic phase by performing extraction at low O:A ratios. Oppositely, co-extraction of e.g. iron and phosphorus may be achieved by performing extraction at high O:A ratios. There is thus a possibility to adapt the properties of the extraction process to fit, e.g., to the content of a leachate.

However, as briefly mentioned before, also the content of the leachate can be controlled to certain degree by different operating conditions during the leaching procedure. This opens for different approaches for recovery of iron and phosphorus as well as other constituents of the leachate.

Another aspect of preferred embodiments of the present technology therefore focuses on the control of the leaching and extraction selectivity of sewage sludge ash constituents by controlling the process conditions, e.g., temperature, pH, pressure, time, mixing speed and mixing time, presence of oxidizing or reducing species, ash particle size, L:S ratio, O:A ratio and others. This allows to control the amount of sewage sludge ash constituents that dissolve and get extracted in the different stages of the process, thus enabling the individual separation of constituents, e.g., separation of iron from aluminium, of calcium from magnesium, separation of a pure phosphorus stream, and assuring that the separated compounds have high purities.

For example, the dissolution yields of several constituents can be controlled during leaching, allowing to obtain leachates rich in both iron and phosphorus, or leachates rich in phosphorus but low in iron. Table 6 shows the leaching yields of iron and phosphorus when sewage sludge ash was leached using hydrochloric acid solutions of different concentration and/or different leaching times and/or different temperatures and/or different L:S ratios. The leaching yields for calcium were similar to those for phosphorus. At ambient temperature and different acid concentrations, the leaching yields for aluminium were in the range 30 - 35 %. It was already shown in table 2 that less silica is leached if the concentration of hydrochloric acid is increased and/or the L:S ratio is decreased. Since these parameters strongly influence the leaching process, they can also be selected to achieve desired leaching yields for iron and phosphorus, which will have an influence on both the concentration of elements in the leachate and in the undissolved residue after leaching.

For example, in one embodiment, leaching can be done at e.g. ambient conditions and at low L:S ratio with diluted hydrochloric acid solution to produce a leachate with a low iron:phosphorus ratio. A corresponding undissolved silicate residue then contains the bulk of iron.

In another embodiment, using more concentrated hydrochloric acid solution and/or higher temperatures and/or longer leaching time, leachates with higher iron:phosphorus ratio than in the previous case can be obtained. This allows higher recovery rates of these elements from sludge ash and the production of a clean, iron-depleted undissolved silicate residue.

Table 6 - Leaching yields of iron and phosphorus when sludge ash was leached with hydrochloric acid solutions using different process parameters, such as temperature, leaching time and L:S ratio.

| Leaching temperature | HCl conc. (M) | L:S ratio (w/v) | Leaching time (h) | Fe leaching yield (%) | P leaching yield (%) |
|---|---|---|---|---|---|
| 21 °C | 2 - 6 | 2 - 6 | 0.75 | 14 - 17 | 91 - 92 |
| 21 °C | 9 | 1 | 0.75 | 30 | 82 |
| 21 °C | 3 - 6 | 2 | 0.75 | 17 - 24 | 91 - 92 |
| 21 °C | 9 - 12 | 2 | 0.75 | 60 - 90 | 96 - 97 |
| 21 °C | 1 | 3 | 0.75 | 2 | 42 |
| 21 °C | 6 | 3 | 0.75 | 28 | 92 |
| 21 °C | 8 | 3 | 0.75 | 54 | 95 |
| 21 °C | 3 | 3 | 0.166 - 2 | 14 - 16 | 90 - 91 |
| 90 °C | 6 | 3 | 0.5 - 7 | 91 - 99 | 99 - 99.9 |
| 80 °C | 6 | 3 | 1 | 93 | 99 |

In yet another embodiment, sequential leaching can be performed to obtain leachates with different iron:phosphorus ratios. For example, in a first phase, leaching is performed to leach the bulk of phosphorus while iron is not fully dissolved. Preferably dissolution of iron is then kept to a minimum. This is typically achieved by using hydrochloric acid of lower concentration and/or a short leaching time and/or low temperature. If dissolution of iron is kept low, a significant amount of iron is left in the undissolved silicate ash residue. In a subsequent second phase, this residue is processed to recover iron and/or other undissolved constituents and obtain a silicate product with low iron and low impurity content. To achieve this, leaching is performed with concentrated hydrochloric acid and/or elevated temperature and/or longer leaching time. Such a leachate will typically have a high iron:phosphorus ratio, higher than leaching sewage sludge ash in only one step. The raffinate after extraction of iron can be efficiently used for leaching of fresh sewage sludge ash and/or can be re-used in other steps of the process and/or can be processed according to embodiments described herein.

The three embodiments above will be discussed in more detail below.

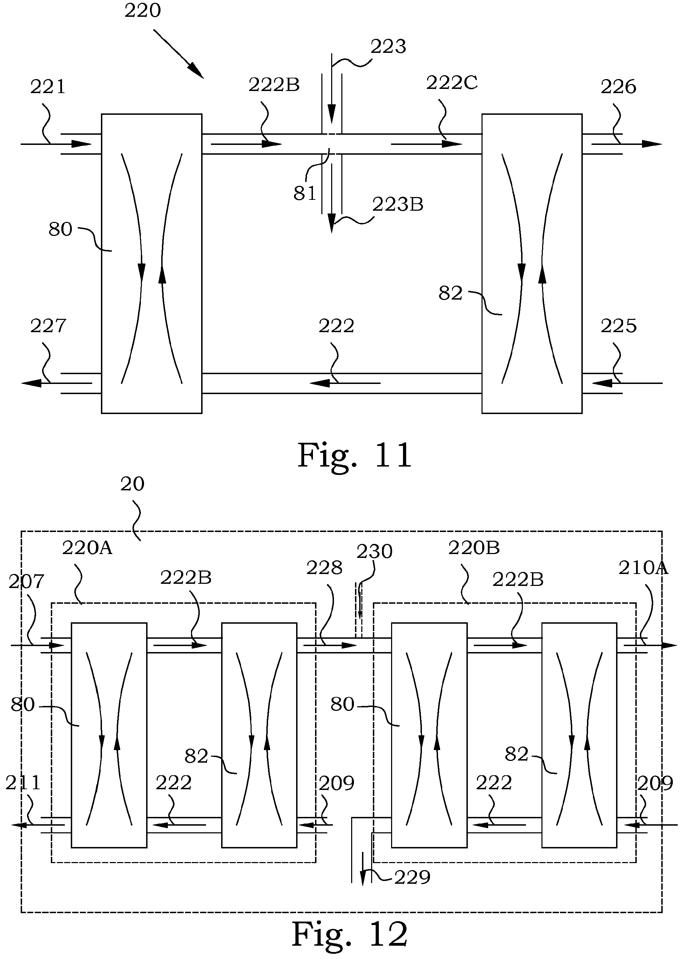

In the different embodiments of the present technology, iron is extracted from the other constituents of the leachate using solvent extraction. An embodiment of a general solvent extraction principle in the shape of a solvent extractor 220 is schematically illustrated in Figure 11. An input aqueous solution 221 is provided to a contact vessel 80, where iron is extracted by an organic phase 222, giving an iron loaded organic phase 222B. A raffinate 227 is outputted from the contact vessel 80 to the continued recovering process, e.g., a phosphorus extraction step. The iron loaded organic phase typically also comprise co-extracted phosphorus, calcium and other minor impurities. A scrubbing 81 of co-extracted impurities from the loaded organic phase 222B can optionally be performed by using a scrubbing liquid 223, whereby a loaded scrubbing liquid 223B and a scrubbed organic phase 222C are formed. The scrubbed organic phase 222C may still comprise e.g. some phosphorus and calcium, but typically of a lower concentration. In a stripping vessel 82, iron is stripped from the loaded or scrubbed organic phase 222B or 222C to a strip solution 225, giving an iron loaded strip solution 226. The organic phase 222 is recovered and may be reused for a next extraction.

As it will be discussed later, the iron loaded strip solution 226 can be processed further to remove impurities, to concentrate iron and/or to neutralize any hydrochloric acid extracted and stripped alongside iron.

A wide variety of organic extractants are suggested in the literature for the extraction of iron ions from chloride media: solvating reagents (trialkyl phosphates such as tributyl phosphate (TBP), alkyl phosphine oxides such as trioctyl phosphine oxide or Cyanex 923), amines (Alamine 336, Aliquat 336), acidic extractants (Cyanex 272, DEHPA, aliphatic monocarboxylic acids) and alcohols (decanol or other long chain aliphatic alcohols). Combination of different extractants, e.g., solvating and acidic, can be used to enhance extractability and/or selectivity. Tributyl phosphate is a commercial solvating extractant reagent commonly used in the phosphate industry for purification of phosphoric acid by solvent extraction. Tributyl phosphate is non-flammable, has low toxicity and a low solubility in water of ca 0.4 grams per litre at room temperature. Furthermore, the solubility decreases with increasing temperature and increased phosphoric acid concentration in the aqueous phase. Due to the relatively high density of TBP (about 0.98 kg/L), it is commonly mixed with a diluent, such as aliphatic kerosene, in order to improve the physical separation between TBP and the aqueous phase.

According to performed experiments, in contact with a concentrated salt solution such as a calcium chloride, the density difference can be sufficient to avoid the use of a diluent if stripping can be run in a way that enables efficient phase separation. However, the ability of TBP to extract both iron and phosphoric acid from hydrochloric acid media also poses problems since this means there is risk that the iron and/or phosphoric acid streams produced by solvent extraction with TBP can be contaminated with phosphorus and/or iron, respectively.

Extraction of ferric iron with TBP can occur according to Equation (1), which shows that every mole of iron is extracted together with one mole hydrochloric acid. This means that in order to extract iron, enough hydrochloric acid needs to be present in the leachate. The extracted iron can be stripped using water or other solutions, e.g., diluted acid solutions, salt solutions or basic solutions if the pH after stripping is low enough to prevent precipitation of iron. The hydrochloric acid extracted by TBP is also stripped, leading to an acidic strip product, which will be a mix of hydrochloric acid and iron chloride if stripping is done with water. Since extraction of iron by TBP is favoured at higher acidity, the stripping process stops to become effective if the strip solution is too acidic. In other words, re-extraction of iron from the strip product may occur concomitant with stripping. Thus, there is a limit on the O:A ratio that is possible to use for stripping with water. This dictates how concentrated the strip product will be.

$$\text{Fe}^{3+} + 2\,\text{TBP} + \text{HCl} = \text{HFeCl}_4{*}2\text{TBP} \hspace{4cm} (1)$$

Since TBP is able to extract phosphoric acid with high yield, which is elaborated further below when discussing the recovery of phosphorus, controlling the uptake of iron and phosphorus during the solvent extraction processes is a key aspect of this technology. Such control enables to obtain high purity iron and phosphorus streams. Leaching of sewage sludge ash with 3 M hydrochloric acid solution at a L:S ratio 3:1 units (L/kg), followed by solvent extraction with TBP led to rather poor extraction efficiency for iron and phosphorus due to the low ionic strength of the leachate. Increasing the ionic strength of the leachate by addition of about 2 M solid metal chloride salts to the leachate and/or performing leaching of sludge ash with more concentrated hydrochloric acid, e.g., 6 M, gave significantly better extraction yields for iron and phosphorus. Preferably, the ionic strength should be controlled to be high.

Ionic strength control can be achieved in at least three different ways. In order to enhance or optimize extraction yields for iron and phosphorus, leaching of sludge ash may be performed with a leaching agent containing an initial hydrochloric acid and/or salt content selected so that the leachate obtained under certain operating conditions, e.g. leaching time, L:S ratio, temperature, etc., will contain a high enough ionic strength of hydrochloric acid and chlorides to assure the desired extraction yields. If referring to Figure 8, the leaching agent can thus be included in the streams 201 or 202.

In an alternative or complementary embodiment, addition of hydrochloric acid and/or salt can be performed during leaching by one or more compounds, e.g. by the stream 203. Recycled process streams 219 capable of increasing the ionic strength of the leachate to assure the desired extraction yields may also be used.

In yet an alternative, the addition of hydrochloric acid and/or salt and/or of one or more compounds and/or recycled process streams capable of increasing the ionic strength of the leachate can be performed after leaching to assure the desired extraction yields.

Of course, the above alternatives can be combined in different ways, two or three of them can either be used at the same time or at different times during a production session. For instance, in the beginning of a production session, when no recycled process streams have been used, salt can be introduced after leaching, while at a later stage, recycled process streams added during leaching may be sufficient to reach the preferred ionic strength.

In one of the applicant's previous inventions, disclosed in the international patent application publication WO2014178788A1, it was described that iron was extracted in preference to phosphorus with an organic phase containing 30% TBP from an aqueous solution with 21.42 g/L iron and 26.69 g/L phosphorus at O:A ratio 1:1. In this particular case, the raffinate after solvent extraction contained 0.74 g/L iron and 27.53 g/L phosphorus, meaning an organic phase with over 20 g/L iron and no phosphorus was obtained. However, it can be observed that typical sludge ash leachates obtained at ambient temperature using mild hydrochloric acid solutions contain significantly less iron (3-5 g/L), as seen in table 2. This is a consequence of the low leaching yields for iron at these conditions (table 5). The high iron content in the aqueous phase in the international patent application publication WO2014178788A1 (21.42 g/L) was achieved after addition of a base to a similar sludge ash leachate to precipitate an intermediary calcium-iron-aluminium phosphate compound, which was afterwards dissolved in hydrochloric acid. The aqueous solution wasn't thus obtained directly from sewage sludge ash, but was produced by an additional chemical treatment by addition of a base to an ash leachate. This approach also allowed to prepare an aqueous phase with sufficient ionic strength to assure efficient extraction of iron with TBP and production of a concentrated and relatively pure loaded organic phase, which can be stripped to obtain iron chloride with low phosphorus content.

It was not possible to obtain the same iron extraction results using the same extraction conditions and sewage sludge ash leachates in table 2 but without this intermediary precipitation step. To obtain a concentrated iron product from such sewage sludge ash leachates after removal of colloidal silica, extraction with TBP has preferably to be carried out at low O:A ratio to concentrate iron in the organic phase. Furthermore, stripping is preferably performed at high O:A ratio if further concentration of iron in the strip product is desired. Furthermore, the extraction yields for iron were low without addition of a suitable salting-out reagent to the 3 M hydrochloric acid leachates. It is not feasible to perform extraction of iron at high O:A ratios for leachates with such low iron content, which is characteristic to ashes with very low iron content and/or when leaching is done with mild hydrochloric acid solution at ambient temperatures, as this results in too diluted organic phases also containing significant amounts of phosphoric acid. Although iron is extracted in preference to phosphorus, it was surprisingly not possible to obtain a relatively pure loaded organic phase or iron strip product due to co-extraction of phosphorus alongside iron even at O:A ratios lower than 1:1. Increasing the amount of TBP in the organic phase above 30% vol. and/or increasing the O:A ratio led to increased co-extraction of phosphorus. Decreasing the amount of TBP negatively affected extraction of iron. For the embodiment described here, it was established by the experiments that a favourable extraction of iron with minimal extraction of phosphorus requires adjusting the amount of TBP in the organic phase and the extraction O:A ratio to the amount of iron present in the leachate so that the organic phase loads as much iron as possible, preferably close to the loading capacity of TBP. Overloading the organic phase with iron hinders co-extraction of phosphorus, which is mostly left in the aqueous phase, e.g., the leachate. Nonetheless, co-extraction of phosphorus could not be avoided entirely. Due to the low O:A ratio needed to extract and concentrate iron in the organic phase and the high O:A ratio needed in the stripping step to further concentrate iron in the strip product, a significant amount of co-extracted phosphorus (13.0 g/L) and calcium (8.95 g/L) ended up together in the strip product with iron (30.4 g/L) (see Table 7). The bulk of the phosphorus was, however, left unextracted in the raffinate, which may be recovered in a subsequent phosphorus solvent extraction step. The bulk of the other impurity elements in the leachate did not end up in the iron strip product.

Table 7. Solvent extraction of elements in a leachate obtained by leaching sewage sludge ash with 3 M hydrochloric acid solution at ambient temperature. Calcium chloride was added to the leachate to increase its ionic strength. Extraction was performed with 40 % TBP at low O:A ratio and stripping was performed with water at high O:A ratio to maximize the concentration of iron in the strip product and minimize the co-extraction of phosphorus.

| Element | Concentration unit | Leachate | Raffinate | Strip product |
|---------|---------------------|----------|-----------|----------------|
| Al | g/L | 3.45 | 3.47 | <0.03 |
| Ca | g/L | 103 | 102 | 8.9 |
| Fe | g/L | 2.71 | 0.31 | 30.40 |
| K | g/L | 0.81 | 0.81 | 0.005 |
| Mg | g/L | 3.65 | 3.73 | <0.03 |
| Na | g/L | 2.34 | 2.25 | <0.03 |
| P | g/L | 22.8 | 21.7 | 13.0 |

(continued)

| Element | Concentration unit | Leachate | Raffinate | Strip product |
|---------|-------------------|----------|-----------|---------------|
| As | mg/l | 3.84 | 3.48 | 6 |
| B | mg/l | 11.70 | 10.80 | 6.90 |
| Ba | mg/l | 8.11 | 7.95 | 0.36 |
| Cd | mg/l | 0.73 | 0.70 | 0.56 |
| Co | mg/l | 1.23 | 1.22 | <0.03 |
| Cr | mg/l | 4.09 | 3.93 | <0.05 |
| Cu | mg/l | 102.00 | 79.20 | 367.00 |
| Mn | mg/l | 150.00 | 150.00 | 2.32 |
| Mo | mg/l | 2.36 | 0.23 | 12.6 |
| Ni | mg/l | 4.13 | 3.97 | <0.1 |
| Pb | mg/l | 32.80 | 33.10 | 0.20 |
| S | mg/l | 115.00 | 108.00 | <40 |
| Sr | mg/l | 405.00 | 400.00 | 2.22 |
| Zn | mg/l | 236.00 | 215.00 | 262.00 |

As a summary, the amounts of elements that co-extract with TBP alongside iron can be reduced if extraction is performed close to the loading capacity of the organic phase with iron. Such a situation may be achieved by controlling the organic-to-aqueous (O:A) ratio and/or the content of TBP in the organic phase. Iron can be concentrated in the loaded organic phase by performing extraction at low O:A ratios. Stripping of iron from the loaded organic phase is performed with a suitable stripping solution, typically water, but other solutions can also be used. Stripping can be done at high O:A ratio to further concentrate iron in the strip product. Stripping results in a depleted organic phase, which is recirculated and re-used in the solvent extraction process. Additional fresh organic phase can be added to make up for any losses. Furthermore, additional treatment of the organic phase can be done, e.g., washing with sodium carbonate or sodium hydroxide solution to remove dibutyl phosphate and/or monobutyl phosphate decomposition products that can form during extraction and/or stripping.

Due to the varying O:A ratios used during extraction and stripping of iron, phosphorus, calcium and other co-extracted impurities can be concentrated in the strip product together with iron, particularly if the ash leachate contains little iron compared to phosphorus, calcium and other extractable species. To further purify the iron strip product, this is subjected again to a similar solvent extraction and stripping cycle. If needed, the ionic strength of the aqueous feed can be increased to enhance extraction of iron. This can be achieved by adding a compound or mixture of compounds, e.g., hydrochloric acid and/or metal chloride salt, or by mixing the solution with a stream with high ionic strength from another step of the process, e.g., the calcium chloride rich solution after precipitation of magnesium, sodium and potassium (i.e. after step S70 in Figure 1). The composition of the organic phase in this second extraction step can be tailored to the amount of iron in the aqueous phase to facilitate extraction of iron close the loading capacity of the organic phase, where selectivity is maximized. Another advantage of a subsequent solvent extraction - stripping cycle is the further concentration of iron in the iron chloride product, typically achieved by performing extraction at lower O:A ratios and stripping at higher O:A ratios. It was observed that two solvent extraction - stripping cycles to extract iron are sufficient to obtain a relatively concentrated iron chloride solution with a low amount of phosphorus and other impurities. If desired, a third subsequent solvent extraction - stripping can be done to obtain iron chloride products of even higher purity; and this can be repeated. The raffinate after the second solvent extraction step for iron contains unextracted impurities, mostly phosphorus and calcium. Due to performing the first extraction of iron at low O:A ratio and stripping at high O:A ratio, the volume of raffinate will be low enough to facilitate its accommodation in various steps, e.g., in the leaching step, the beginning of the solvent extraction steps or in other steps. It was observed that phosphorus can be effectively scrubbed from the organic phase loaded with iron using concentrated hydrochloric acid. This leaves iron in the organic phase while phosphorus is back-extracted in hydrochloric acid; and can be exploited to obtain purer iron chloride products with decreased phosphorus content.

Therefore, a particular aspect according to this embodiment of the present technology is a subsequent processing of the strip product after the solvent extraction of iron using the same extractant to obtain iron chloride of high purity and, at the same time, increase the concentration of iron in the final product. It was determined by experiments that the amounts of impurities that co-extract with iron can be controlled and decreased by adjusting the TBP concentration and extraction O:A ratio to the iron content in the aqueous phase, and performing extraction as close to the iron loading capacity of the organic phase. Therefore, a subsequent extraction step for iron operating at these conditions was implemented.

Figure 12 illustrates a general embodiment for subsequent processing of a strip product after a first solvent extraction of iron using solvent extraction to obtain iron chloride of high purity and, at the same time, increase the concentration of iron in the final product. The iron solvent extraction arrangement comprises two solvent extractors 220A and 220B connected in series. A leachate 207 depleted in colloidal silica is entered into the contact vessel 80 of the first solvent extractor 220A, and iron together with at least one of phosphorus, calcium and possibly also some other contaminants are loaded into the organic phase 222, giving an iron loaded organic phase 222B. The composition of the organic phase 222 and/or process parameters can preferably be tailored to the composition of the aqueous phase to influence the extraction selectivity. A raffinate 211 is outputted to be post-treated and/or to a part used for recirculating chloride and/or calcium ions. In the stripping vessel 82 of the first solvent extractor 220A, iron is stripped from the loaded organic phase 222B to a stripping liquid 209, giving an intermediate strip solution 228 loaded with iron together with at least on of phosphorus, calcium and possibly also some other contaminants.

The intermediate strip solution 228 is used as the input aqueous solution to the second solvent extractor 220B. The intermediate strip solution 228 is entered into the contact vessel 80 of the second solvent extractor 220B, and iron is loaded into the organic phase 222, giving an iron loaded organic phase 222B. The composition of the organic phase 222 and/or process parameters can preferably be tailored to the composition of the intermediate strip solution 228. For instance, additives 230, such as hydrochloric acid or other compounds, e.g. salts, can optionally be added. In such a way, the ionic strength can be adapted to enhance extraction. A second stage raffinate 229, comprising at least one of phosphorus calcium and some other contaminants is outputted and can preferably be reused in the process, e.g. in the leaching or pre-treatment process. In this way, the phosphorus is re-entered into the process. In the stripping vessel 82 of the second solvent extractor 220B, iron is stripped from the loaded organic phase 222B to a stripping liquid 209, giving a strip solution in form of a liquid 210A comprising iron.

Note that optional scrubbing stages can be implemented for the loaded organic phases 222B, similar to Figure 11 above.

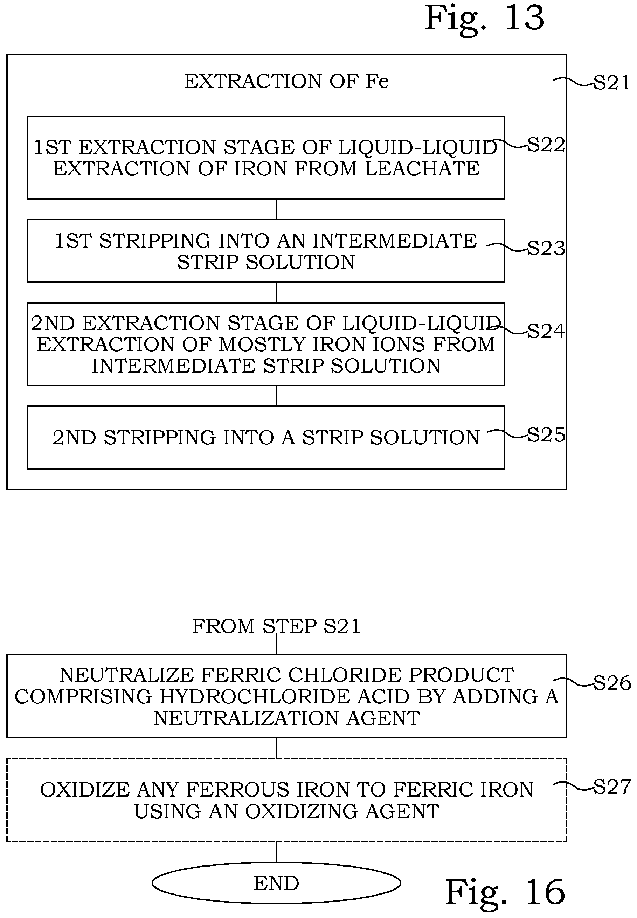

Figure 13 illustrates an embodiment of a step S21 of extraction of Fe. In step S22, a first extraction stage of a liquid-liquid extraction of preferably a majority of iron from the leachate is performed. In step S23, a first stripping into an intermediate strip solution is performed. In step S24 a second extraction stage of a liquid-liquid extraction of preferably essentially only iron from the intermediate strip solution is performed. In step S25, a second stripping into a strip solution is performed.

Somewhat more in detail, the aqueous feed for a subsequent solvent extraction step for iron, e.g., the intermediate strip solution 228, is thus the iron strip product obtained in a previous solvent extraction step for iron. This feed is typically contaminated with at least one of calcium, phosphorus and other minor elements (see table 7). Preferably, more concentrated organic phases are used in this step to avoid premature loading and facilitate extraction at low O:A ratios. This is preferable since it allows further concentration of iron in the organic phase. At the same time, performing stripping at O:A ratio above 1 allows further concentration of iron.

The intermediate strip solution 228 is acidic and contains a minimum amount of hydrochloric acid in mol/L that is equal to the concentration of iron in mol/L if extraction of iron with TBP occurs according to equation 1. The hydrochloric acid, together with the calcium and phosphorus compounds in solution contribute to the ionic strength needed for extracting iron to the organic phase. If needed, the ionic strength can be increased by addition of fresh hydrochloric acid and/or other salting-out agents, as indicated by the additives 230. These additives may also be a complete or partial recycling of one or more streams with high ionic strength obtained from other process steps.

For example, it was determined by experiments that the extraction yield for iron is positively affected by addition of hydrochloric acid solution and/or chloride salts to the aqueous phase. Table 8 shows how the strip product after the first solvent extraction and stripping step can be further concentrated and purified in a subsequent solvent extraction step. The data shows the amounts of calcium, phosphorus and minor impurities like aluminium, copper and zinc are significantly reduced using subsequent extraction-stripping steps. Here, two extraction-stripping steps are presented but the number of steps can be adjusted to the nature and composition of the sludge ash, e.g. more than two steps can be considered for ashes with low iron content and/or a high content of co-extractable impurities.

Table 8 - Concentration and purification of iron from phosphorus, calcium and other co-extracted impurities in a subsequent solvent extraction-stripping step.

| Element | Concentrat ion unit | Strip product after the first extraction and stripping step | Raffinate after the second extraction of iron | Loaded organic phase after the second extraction of iron | Strip product after the second extraction and stripping step |
|---------|---------|---------|---------|---------|---------|
| Ca | g/L | 7.4 | 7.9 | 0.2 | 0.3 |
| Fe | g/L | 33.9 | 0.8 | 41.2 | 54.9 |
| P | g/L | 12.4 | 13.2 | 0.7 | 0.9 |
| Al | mg/L | 34.5 | 35.3 | 3.6 | 4.7 |
| Cu | mg/L | 336 | 356 | 0.4 | 0.5 |
| Zn | mg/L | 228 | 214 | 16.6 | 22.1 |

In other words, in one embodiment, the step of extracting iron from the leachate comprises at least two extraction stages. A first extraction stage comprises at least partly selective liquid-liquid extraction of an iron content and subsequent stripping into an intermediate strip solution. Preferably, a majority of an iron content is extracted, and preferably the iron is extracted as $FeCl_3$. A second extraction stage comprises selective liquid-liquid extraction of mostly iron ions from the intermediate strip solution and subsequent stripping into a second strip solution. Preferably, essentially only iron is extracted, and typically in the form of $FeCl_3$. In this way higher iron purity in the recovered iron product and/or higher iron concentration can be achieved.

This principle can be utilized further by adding further extraction stages. In other words, the subsequent extraction stages then comprise at least one further extraction stage to achieve even higher iron purity in a recovered iron product and/or higher iron concentration, compared to the second strip solution.

This is advantageously used for solutions with lower iron:phosphorus ratio, e.g., below 1. This may be the case, e.g., in applications where the step of dissolving the start material is performed at ambient temperature with an acid having a hydrochloric acid concentration lower than 3 M. Preferably, the first extraction stage comprises matching of a loading capacity of the organic solvent to a content of Fe(III) in the leachate by controlling of a relative amount of the organic solvent to the leachate. Also preferably, the second extraction stage and/or any further extraction stage comprises controlling of a loading capacity of the organic solvent to be in the vicinity of or lower than a content of Fe(III) in the first stripping solution by controlling of a relative amount of the organic solvent to the first stripping solution. If the loading capacity is somewhat higher than the Fe(III), some contaminating substances may be co-extracted in higher amounts. In many cases, such contaminations may be acceptable, or they can be removed at a later stage. However, the amount of contaminants generally increases with increased loading capacity. A raffinate from the liquid-liquid extraction of the second extraction stage and/or any further extraction stage is preferably recycled to be used in a subsequent step of dissolving a start material.

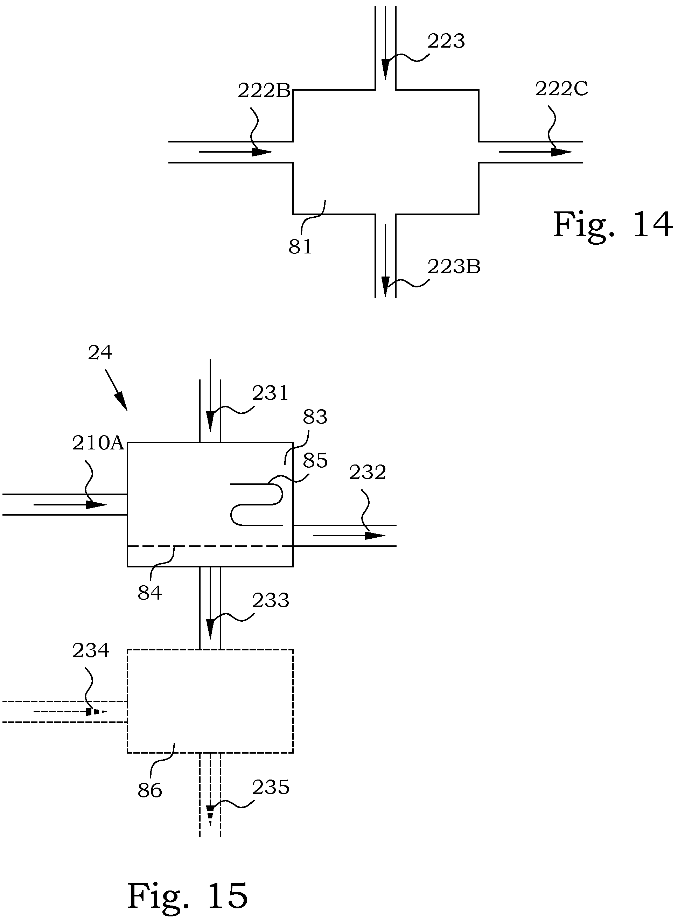

It was determined by experiments that co-extracted phosphorus also can be selectively scrubbed from iron by treating the loaded organic phase in the liquid-liquid extraction with at least mildly concentrated hydrochloric acid. Figure 14 illustrates a general embodiment for scrubbing of impurities from organic phases loaded with iron. The scrubber 81 is configured for scrubbing co-extracted impurities from the loaded organic phase 222B with a scrubbing liquid 223. Thereby a loaded scrubbing liquid 223B and a scrubbed organic phase 222C are formed.

The selectivity was found to be higher when the loaded organic phase 222B was scrubbed with hydrochloric acid instead of water. Selectivity increased with increasing the hydrochloric acid concentration. For example, a loaded organic with 16.6 g/L iron and 2.90 g/L phosphorus was scrubbed with 15 % hydrochloric acid solution at O:A ratio 10:1. This removed 0.5 % of iron and 54 % of phosphorus in one stage. Calcium and copper were also scrubbed efficiently, together with some of the co-extracted arsenic, cadmium and zinc. Scrubbing at O:A ratio 20:1 instead of 10:1 also improved selectivity, but it was determined that increasing the hydrochloric acid concentration is more important.

However, stripping after scrubbing with 15 % hydrochloric acid became slightly less efficient than stripping without scrubbing, due to extraction of hydrochloric acid during scrubbing. It was mentioned before that the efficiency of the stripping process is dictated, among others, by the amount of acid in the strip solution. A high acidity and/or ionic strength promotes extraction of iron by TBP, which means that stripping becomes less effective once a high enough acidity and/or ionic strength is present in the strip product. Scrubbing of impurities with hydrochloric acid will therefore result in a more acidic strip product due to the aforementioned extraction of hydrochloric acid. The scrubbed organic phase 222C may still comprise e.g. some phosphorus and calcium, but typically of a lower concentration.

The loaded scrubbing liquid 223B comprises mainly Ca and P, but as mentioned above typically also other impurities. The phosphorus content is typically considered as valuable as such and since the loaded scrubbing liquid 223B preferably also comprises hydrochloric acid, it is preferred that the loaded scrubbing liquid 223B is returned at some stage to the process. For instance, the loaded scrubbing liquid 223B may be used during the leaching, or it can be used for increasing the ionic strength in the leachate.

It was determined by experiments that water stripping of iron is preferred over hydrochloric acid solution as it leads to higher stripping yields. Basic solutions like sodium hydroxide, potassium hydroxide or other soluble bases can also be used. It was determined by the inventors that stripping with 0.5 M sodium hydroxide solution led to slightly better stripping yields compared to water. However, the O:A ratio and base concentration needs to be selected accordingly, to prevent precipitation of iron hydroxide due to too high pH of the resulting strip product. The literature (e.g. Sato T., 2002. Liquid-liquid extraction of iron (III) from hydrochloric acid solutions by tributyl phosphate, Shingen-to-Sozai 118, 612-616) reports that the extraction efficiency of iron from hydrochloric acid using TBP decreases with increasing temperature. This suggests that higher temperatures during stripping can lead to higher concentrations of iron in the strip product. Surprisingly, it was, however, determined by experiments that the concentration of iron in water strip products decreases with increasing temperature, and the trend was linear for the temperatures studied (0-70°C). Preferably, stripping is performed at lower temperatures to assure a higher iron concentration in the strip product.

One of the main applications of iron chloride is as a coagulant in wastewater treatment plants. According to equation (1), the ferric chloride product will also contain a significant amount of free hydrochloric acid, at least a 1:1 molar ratio of acid:iron considering that TBP also can extract hydrochloric acid without iron. Typically, the free hydrochloric acid content in commercial ferric chloride coagulants ranges from 0 - 2 %. For these reasons, neutralization of some of the free acid in the iron product may be desired. According to embodiments of the present technology, this can be done in several ways. Neutralization can be carried out using conventional bases like sodium hydroxide, calcium hydroxide or equivalent. However, this will contaminate the final iron solution with sodium, calcium etc., which may or may not be acceptable by final users.

For production of high purity iron chloride coagulants, neutralization is therefore preferably performed with iron oxides, iron hydroxides, oxyhydroxides and/or metallic iron or a material that contains at least one of these, e.g., magnetite. Ferric oxide, ferrous oxide or mixed oxides can be used. Depending on the chemical used for neutralization, the final iron chloride product can contain ferric chloride, ferrous chloride or a mix of these two. It was seen by experiments that neutralization with either metallic iron powder of iron oxide was significantly slower at ambient temperature compared to elevated temperature. Addition of metallic iron to a hydrochloric acid solution with dissolved ferric iron and other impurities leads to two main chemical processes. A first process is reduction of species, e.g. ferric iron to ferrous iron, or divalent copper to metallic copper, which precipitates. The second process is reaction of hydrochloric acid with metallic iron, with generation of hydrogen, i.e. neutralization. Upon adding reduced metallic iron powder to the acidic strip products containing iron, the inventors observed that reduction of ferric iron to ferrous iron occurred in preference to neutralization of hydrochloric acid. This was most evident at lower temperatures, which did not favour the latter process. These processes were studied at ambient temperature (21°C) and elevated temperatures (60-95°C) using acidic iron chloride products with hydrochloric acid obtained after solvent extraction with TBP. The stoichiometric amount of metallic iron needed for complete reduction of iron and neutralization of hydrochloric acid was added to the solution. In all cases, reduction was significantly faster than neutralization. Reduction occurred in just a few minutes, indicated by a change in colour from yellow, which is characteristic to ferric iron, to pale green-blue, which is characteristic to ferrous iron. At ambient conditions, gas generation of hydrogen was not significant despite stirring metallic iron with the leachate for several hours. Much of the metallic iron added remained undissolved even after 24 hours. Only small gas bubbles were seen forming slowly. The pH remained acidic even after 68 hours, at which point much of the metallic iron added was still not dissolved. At elevated temperatures, intense bubbling, i.e. hydrogen generation, was evident, indicating that neutralization of the acid was more effective. Nonetheless, at 60°C, neutralization was considerably slower than reduction. The pH of the solution was still below 0 and iron powder was present in solution 1.5 hours later. At 95°C, the reaction was significantly faster and most of the iron dissolved in 4 hours, when the pH of the solution increased to pH 2.

Neutralization of the free hydrochloric acid with metallic iron is also an effective way to minimize the amount of impurities in the iron product, specifically those that can also be reduced and are insoluble in their reduced form, e.g., copper. Neutralization with ferric hydroxide or oxyhydroxide has advantages, notably a fast reaction at ambient temperature without generation of hydrogen. Neutralization of the free acid using iron compounds has the advantage of increasing the iron content in the final product through the chemical reactions of these compounds with the constituents of the solution.

One embodiment of an arrangement 24 for neutralization of a ferric chloride product comprising hydrochloric acid is schematically illustrated in Figure 15. The ferric chloride product comprising hydrochloric acid can e.g. be the liquid 210A comprising iron of Figure 12 but can also be the resulting of other embodiments, described further below. The liquid 210A comprising iron is here used as a typical example. The liquid 210A comprising iron is introduced into a neutralization chamber 83 together with a neutralization agent 231, e.g. metallic iron, iron oxides, iron hydroxides and/or oxyhydroxides. The neutralization agent 231 neutralizes at least a part of the hydrochloric acid of the liquid 210A comprising iron and reduces typically also at least a part of the ferric iron into ferrous iron if reducing conditions are created. Preferably, a heater 85 is present to enable neutralization at elevated temperatures. A separation equipment 84 is provided to separate any remaining solid components 232, e.g. undissolved metallic iron or metallic Cu contamination. Such remaining solid components 232 may be re-entered into the process, e.g. to the dissolving reactor, or is disposed. The resulting liquid 233 is at least partially neutralized, i.e. the concentration of hydrochloric acid is reduced.

Optionally, if a ferric iron product is requested, the resulting liquid 233 can be entered into an oxidation vessel 86, to which also an oxidizing agent 234 is entered. The oxidizing agent 234 can e.g. be hydrogen peroxide, ozone, chlorine gas etc. A final ferric iron product 235 is created.

Expressed as a flow diagram, as in Figure 16, an embodiment of a method for chemical processing of sewage sludge ash may comprise step S26 in which a ferric chloride product comprising hydrochloride acid is at least partly neutralized by adding a neutralization agent. Step S26 follow on step S21. In an optional step S27, any ferrous iron is oxidized into ferric iron using an oxidizing agent.

To summarize, the neutralization chemical and/or conditions can be selected to obtain iron in a desired chemical form, e.g., reduced, oxidized or a mixture of these two. The chemical form of iron can be altered afterwards. For example, if ferric chloride is desired, any ferrous iron present can be oxidized using an oxidizing agent such as chlorine gas. Reduction of ferric iron to ferrous iron can be done with a reducing agent such as metallic iron.

As was considered further above, the dissolving of sewage sludge ash, also referred to as leaching, may be performed under different conditions, giving leachates of different compositions. If low-concentrated hydrochloric acid was used at an ambient temperature, the degree of dissolved iron was in general very low. Above, this low iron content has been extracted by purifying and concentrating the iron through preferably two successive stages of liquid-liquid extraction. Another approach could instead be to neglect the amount of iron that is leached and only concentrate on the extraction to the phosphorus and possibly further components. One way to control extraction of iron in an organic phase is to utilize the different oxidation states of iron.

All the recovery steps presented here involving iron can be controlled by controlling the chemical form of iron in solution, e.g., ferric iron, ferrous iron or a mixture of these two. It was determined by experiments that controlling the iron speciation controls the amounts of iron rejected or extracted by TBP in the iron extraction step and in the phosphorus extraction step, as well as the pH at which iron compounds precipitate. For example, ferrous iron species, e.g., ferrous hydroxide and ferrous phosphate, precipitate at significantly higher pH (above 6) compared to their ferric equivalents (pH below 3). Controlling and or changing the chemical form of iron in solution can be done at various points in the process, e.g., dissolution, pre-treatment, different solvent extraction blocks (extraction, stripping, scrubbing), recycling and recirculation loops etc. and is not limited to only one step. For example, oxidation or reduction of iron can be done several times throughout the process and/or can be alternated during process loops. For instance, ferrous iron can be up-concentrated in the aqueous solution during several loops, followed by oxidation and extraction in a subsequent loop. This enables efficient recovery of iron from ashes or leachates with low iron content.

It was seen by the present inventors that reduction of ferric iron in an aqueous stream is a viable method to reduce the amounts of iron extracted by TBP. For example, a hydrochloric acid sludge ash leachate with 0.1 M ferric iron, 0.7 M phosphoric acid and 2.7 M calcium chloride was stirred for 10 minutes at 21°C with the equivalent of 5.6 g/L metallic iron powder (0.1 mol). The leachate changed colour from strong yellow to pale blue-green within minutes, indicating reduction of ferric iron to ferrous iron. Generation of gas was not visible during this time and over 60 % of the iron powder added was left undissolved. The solution was filtered. Solvent experiments were performed with undiluted TBP where the organic-to-aqueous ratio was 1:1. In parallel, the same solvent extraction experiment was performed with non-reduced leachate. Analysis of the aqueous raffinate for the reduced sample revealed that most of the iron (>92 %) remained in solution and was not extracted by TBP. In contrast, 85 % of the ferric iron in the non-reduced sample was extracted. Extraction of phosphoric acid was similar for both solutions. About 45 % of the acid was extracted by TBP. The minor amounts of iron extracted from the reduced sample were either due to an incomplete reduction of ferric iron or the re-oxidation of ferrous iron back to ferric iron during the solvent extraction batch tests. To achieve good mixing of the aqueous and organic phases, the solutions were vigorously mixed for 5 minutes at ambient conditions. It is believed that the presence of oxygen in the air and the vigorous mixing may have caused re-oxidation of ferrous iron. In practice, this will not be the case as mixing can be done for significantly less time and the oxygen levels in the atmosphere can be controlled, e.g., by performing extraction under a nitrogen blanket.

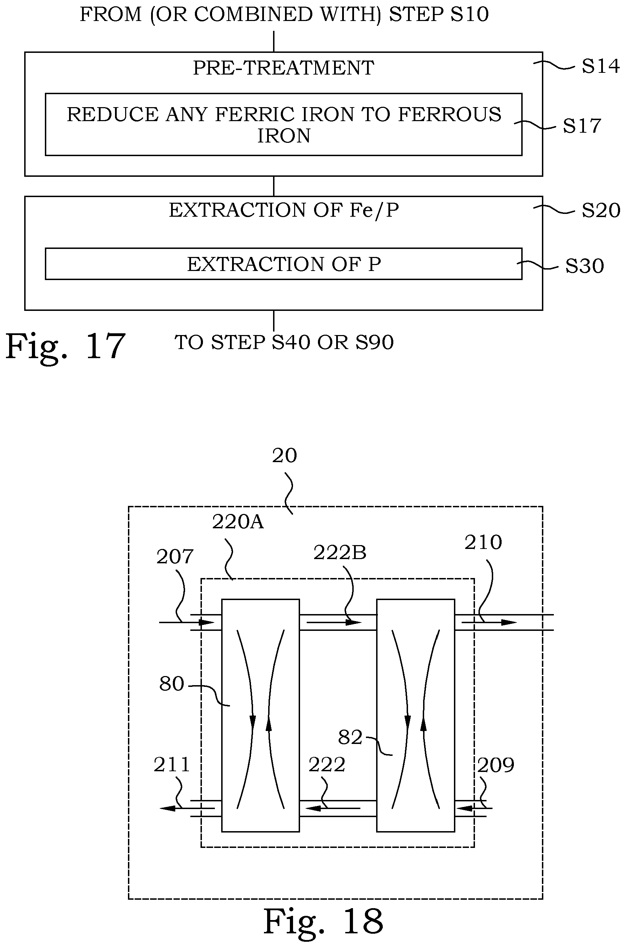

Reduction of iron can be exploited to minimize the amounts of iron co-extracted together with phosphoric acid in the phosphorus extraction step. Moreover, this can be used to bypass the iron extraction step completely. This is illustrated in Figure 17. In this embodiment, iron is reduced in step S17 of the pre-treatment step S14, which is performed during and/or after dissolving, i.e. step S10, but prior to the extraction of phosphoric acid, step S30. In this embodiment, the step S20 does not comprise significant iron extraction, but extraction of phosphorus S30.

The iron in the raffinate after recovery of phosphorus, step S30, can be reoxidized and further recovered e.g. using solvent extraction with TBP. This can be done at various steps in the process after the extraction of phosphoric acid, for example before or after precipitation of aluminium, as will be discussed further below. Ferrous iron allows selective precipitation of aluminium at pH below 3 (leaving iron in solution) since ferrous iron hydroxide precipitates at higher pH compared to ferric hydroxide, which would otherwise precipitate together with aluminium.

In a similar manner, oxidation of iron can be performed with oxidizing agents such as hydrogen peroxide, ozone, chlorine gas or others to promote its extraction by TBP and/or its precipitation as e.g. ferric hydroxide or ferric phosphate at lower pH. This can be implemented at different stages in the process, similar to above. In one embodiment, it is performed as step S18 (Fig. 1) of a pre-treatment step S14 (Fig. 1). For example, it was seen that for ashes and leachates with ferrous iron, extraction with TBP is not effective and ferrous iron ends up in the raffinate. Iron recovery can be maximized by oxidizing ferrous iron to ferric iron, enabling its extraction with TBP. In practical experiment with sludge ash also containing ferrous iron, some of the iron in the leachate (0.6 g/L) could not be completely extracted by TBP and remained in the raffinate. Subsequent extraction with fresh TBP could not extract this. Addition of a minor amount of hydrogen peroxide oxidized the ferrous iron to ferric iron and enabled its complete recovery with TBP, maximizing the iron recovery efficiency in the process.

As was considered further above, the dissolving of sewage sludge ash, also referred to as leaching, may be performed under different conditions, giving leachates of different compositions. If more concentrated hydrochloride acid was used and/or the temperature was increased and/or a longer leaching time was used, the degree of dissolved iron was in general higher. Thereby the iron:phosphorus ratio becomes higher than for e.g. more diluted hydrochloric acid leaching. This allows higher recovery rates of these elements from sludge ash and the production of a cleaner, iron-depleted silicate residue.

It was found that, due to the high iron content in such leachate streams, a first solvent extraction step can directly produce a relatively pure iron chloride product as extraction is performed close to the loading capacity of the organic phase with iron at higher O:A ratios, which gives less phosphorus and other impurities in the strip product. Any second extraction step to purify iron from phosphorus and to concentrate the iron is often not needed.

Figure 18 illustrates an embodiment of an extractor section 20 comprising one solvent extractor 220A. The resulting liquid 210 comprising iron and/or phosphorus may in this embodiment more or less comprise only iron, even after a single extraction, with or without scrubbing, if the organic-to-aqueous (O:A) ratio and/or the content of TBP in the organic phase were controlled to suit the available leachate composition.

In other words, in one embodiment, the step of dissolving the start material is performed with an acid having a hydrochloric acid concentration higher than 3 M. Preferably, the hydrochloric acid concentration is higher than 6 M. The step of extracting iron from the leachate further comprises controlling a loading capacity of the organic solvent to be in the vicinity of or lower than a content of Fe(III) in the leachate by controlling of a relative amount of the organic solvent to the leachate.

In a preferred embodiment, the step of dissolving the start material is performed under an elevated temperature to enhance the dissolution of iron.

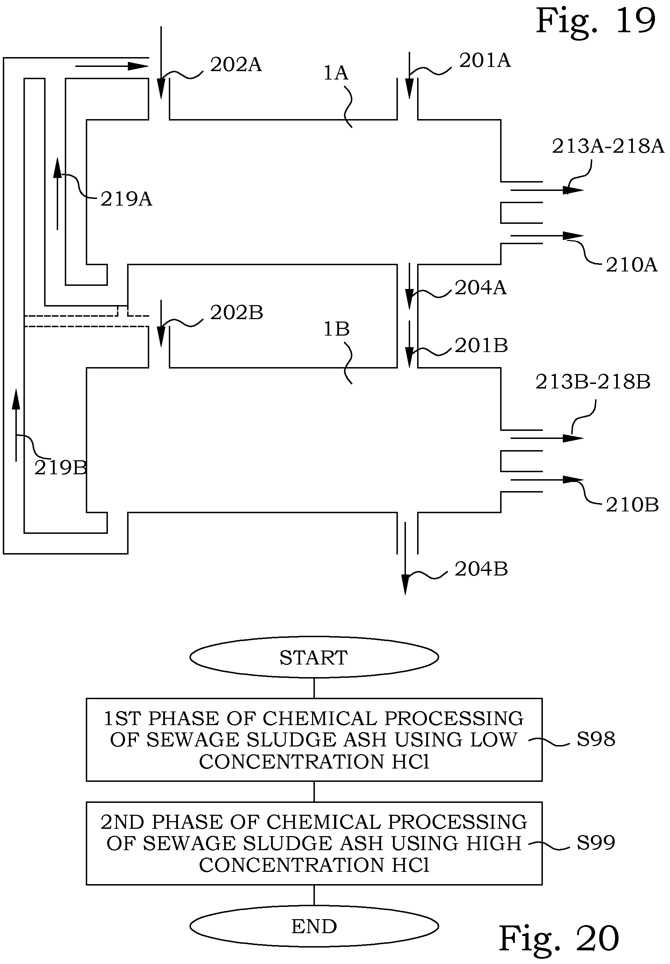

As mentioned above, sequential leaching can also be performed to obtain leachates with different iron:phosphorus ratios. Figure 19 illustrates schematically such a sequential two-phase solution. A first stage arrangement 1A for chemical processing of sewage sludge ash is provided with a start material 201A consisting of sewage sludge ash. A low concentration hydrochloric acid 202A is used for performing the leaching, i.e. the dissolving. The first stage arrangement 1A for chemical processing of sewage sludge ash outputs a liquid 210A comprising phosphorus and possibly other liquids comprising recovered elements 213A-218A. An undissolved residue 204A is outputted. A second stage arrangement 1B for chemical processing of sewage sludge ash is provided with a start material 201B consisting of the undissolved residue 204A from the first stage arrangement 1A for chemical processing of sewage sludge ash, which emanates from sewage sludge ash. A high concentration hydrochloric acid 202B is used, preferably at high temperature, for performing the leaching, i.e. the dissolving. The second stage arrangement 1B for chemical processing of sewage sludge ash outputs a liquid 210B comprising iron and possibly other liquids comprising recovered elements 213A-218A. An undissolved residue 204B is outputted. Preferably, at least parts of the raffinates 219A and 219B of the two stages are recycled to be used in different parts of the process, preferably for dissolving a start material, e.g. in the first stage arrangement 1A. Some parts of the raffinates 219A and 219B of the two stages may even be used in the second stage arrangement 1B, as indicated by the dotted lines.

Each stage thereby constitutes a complete processing entity in its own. The two stages may be performed in connection to each other in time and/or space, but may also be separated. It may e.g. be possible to use one and the same equipment for both phases, but then of course separated in time.

Figure 20 illustrates a flow diagram of an embodiment of a two-phase method. In a first phase S98, sewage sludge ash is processed using leaching with low concentration HCl. This processing gives a solution of recovered phosphorus and an amount of first undissolved residue. The first undissolved residue comprises a non-negligible amount of iron. In a second phase S99, the first undissolved residue is used as start material and is dissolved using high concentration HCl. This processing gives a solution of recovered iron and an amount of second undissolved residue.

Since phosphorus is a valuable constituent, a preferred next step according to the technology presented here is to separate phosphorus from the other constituents of the leachate, typically calcium, aluminium, magnesium, sodium, potassium and heavy metals. Several extractants are suggested in the literature as suitable for extraction of phosphoric acid. These can generally be divided into the following groups: 1) alkyl phosphates such as tributyl phosphate (TBP), 2) amines such as tri-n-octylamine, 3) alcohols such as isoamyl alcohol, n-amyl alcohol, cyclohexanol, methyl cyclohexanol, tertiary amyl alcohol, iso-butanol, n-butanol, heptanol, 4) ketones such as methyl-isobutyl ketone, methyl propyl ketone, diethyl ketone, methyl ethyl ketone, methyl- n-butyl ketone, 5) amides such as butyl acetamide, 6) aldehydes such as benzaldehyde, 7) esters such as ethyl acetate, butyl acetate, amyl acetate, cyclohexanone, 8) ethers such as diethyl ether, di-n-amyl ether, and glycol ethers such as di-ethylene glycol. Many of these extractants are somewhat soluble in aqueous solutions, particularly in the presence of acids, salts and/or other chemical species, and some are more soluble than others. This can result in the contamination of the aqueous stream and the final product with traces of extractant. These are undesired, especially given the goal to use the separated phosphorus as fertilizer. A high-water solubility usually requires recovery of dissolved extractant from the aqueous steam by distillation, which is costly and complex. For example, n-butanol has a water solubility of about 90 g/L at room temperature. Several of the mentioned solvents, e.g., diisopropyl ether, have other disadvantages in addition to high solubility such as flammability and/or explosion risk. Furthermore, several of the solvents mentioned show limited extraction capacity for phosphoric acid below a certain threshold concentration. This means the feed solution must have a high concentration of phosphoric acid, which usually requires concentration of the acid by water evaporation. In addition, only partial extraction of phosphoric acid is possible with such solvents. A typical example for a solvent with a significant threshold concentration for phosphoric acid extraction is methyl isobutyl ketone. In general, ethers, esters and selected ketones have a significant threshold concentration for phosphoric acid extraction; and are therefore not suitable for extracting phosphate from fairly low concentrations (about 1.5 M phosphoric acid), which is a concern for many sludge ash leachates. Alcohols with relatively long carbon chains have a relatively low water solubility. An alternative solvent for extracting phosphoric acid is therefore long carbon chain alcohols, e.g., heptanol, which has a solubility in water of less than 2 %. If the solubility is lower than such a level, the amount of solvent following the aqueous stream becomes reasonably low to be taken care of with relatively inexpensive and complex arrangements. Since there is very limited experience in the industry with the use of long chain alcohols, while TBP is a standard solvent used on large scale for more than 40 years, the preferred solvent according to the invention is TBP.

In other words, in one embodiment, where the start material is sewage sludge ash, the method comprises the step of extracting phosphorus in the form of phosphoric acid, by liquid-liquid extraction with an organic solvent. Preferably TBP is used as the organic solvent.

In one embodiment, the extraction of phosphorus is made from a raffinate of a step of extracting iron. In another embodiment, the extraction of phosphorus is made from a leachate where ferrous iron is present, e.g. after a pre-treatment step. In yet another embodiment, the extraction of phosphorus is made from a leachate with a low iron content, whereby this content level of iron can be accepted in the final phosphorus product or the iron contaminations can be removed in a later stage.

There is very limited data in the literature regarding the use of TBP for extraction of phosphoric acid from chloride systems. The main literature includes the following articles: 1) Habashi et al., 1987. "The hydrochloric acid route for phosphate rock." Journal of Chemical Technology and Biotechnology, 1987, Vol. 38; 2) Naito and Suzuki, 1961. "The mechanism of the extraction of several proton acids by tri.n.butyl phosphate." Japan Atomic Energy Research Institute; 3) Jin et al., 2010. "Liquid-Liquid Equilibrium in the System Phosphoric Acid/Water/Tri-n-butyl Phosphate/Calcium Chloride." J. Chem. Eng. Data 55, 3196-3199; 4) Fernando Pereira, 2013 Doctoral Thesis. Ecole Nationale Superieure Des Mines De Saint-Etienne. "Production d'acide phosphorique par attaquechlorhydrique de minerais phosphatés avec réduction desnuisances environnementales et récupération des terresrares en tant que sous-produits"; 5) Pereira and Bilal, 2013, "Phosphoric acid extraction and rare earth recovery from apatites of the Brazilian phosphatic ores. " Romanian Journal of Mineral Deposits, 2012, 85 (2), pp.49-52; and 6) Jin et al., 2015. "Extraction kinetics of phosphoric acid from the phosphoric acid - calcium chloride solution by tri-n-butyl phosphate." Industrial & Engineering Chemistry Research. January 2015.

Tributyl phosphate enables extraction of phosphoric acid in preference to dissolved salts such as chlorides and in preference to dissolved acids such as hydrochloric acid or sulfuric acid. The presence of dissolved salts or acids enhances extraction of phosphoric acid by a salting-out mechanism. Tributyl phosphate extracts nitric acid in preference to phosphoric acid, which makes selective extraction of phosphoric acid from nitric acid impossible. Therefore, leaching of sludge ash with hydrochloric acid is preferred over nitric acid. In general, solvents which have a low solubility in water extract nitric acid in preference to phosphoric acid. Solvents with increased selectivity for phosphoric acid such as amyl alcohol have high water solubility and still co-extract considerable amounts of nitric acid. The main advantage of using TBP as a solvent for extraction of phosphoric acid is that the low water solubility, which enables operation without a need for distilling the solvent from aqueous streams, which is costly and complex.

As mentioned before, extraction of phosphoric acid with TBP is typically done after extraction of iron. However, it can also be done in the presence of iron in solution. If ferric iron is present in solution, it will be extracted by TBP together with the phosphoric acid. This is a suitable option if the amounts of iron extracted in the phosphorus product are deemed acceptable and/or if iron to be subsequently removed from the phosphorus stream by means of solvent extraction, ion exchange, selective precipitation or others. If iron is reduced to ferrous iron prior to extraction of phosphorus, as described above, its extraction will be less efficient and ferrous iron will end up in the raffinate that goes to the next process step.

In the literature, it is described that almost complete extraction of phosphoric acid is possible using TBP and a calcium chloride background content of about 3 M. For example, Habashi et al., 1987 stated that more than 99% of phosphoric acid can be extracted in 3 stages at O:A ratio of 1:1. The same statement was repeated by Pereira, 2013.

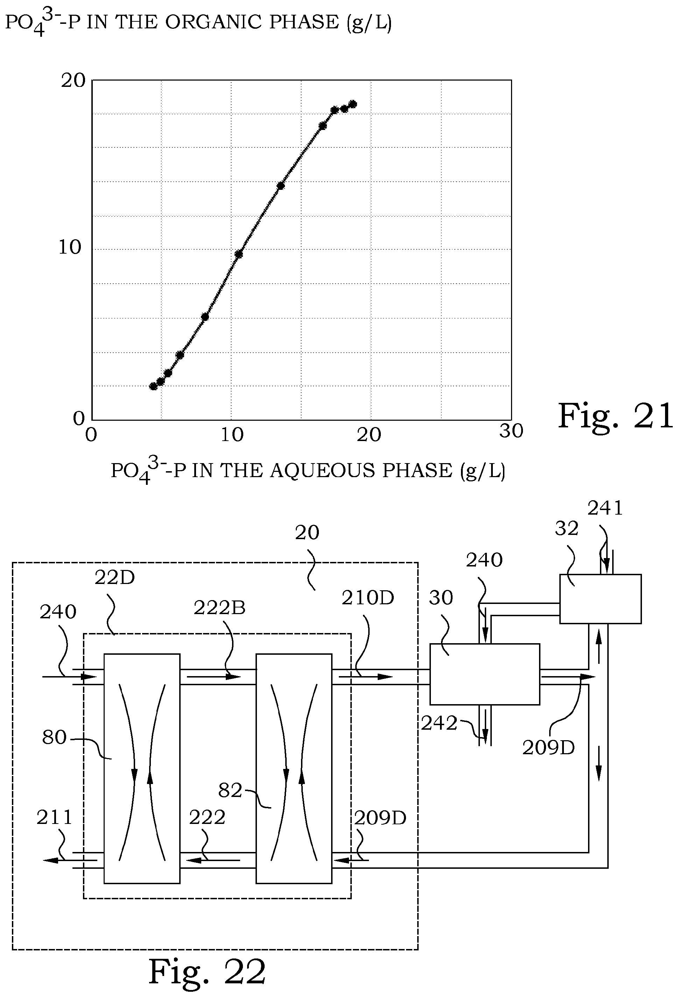

However, it has surprisingly been found by the present applicant that complete extraction of phosphoric acid with TBP from sewage sludge ash leachates under the above condition is not possible. The phosphoric acid concentration could only be lowered from about 0.7 M to about 0.15 M, as can be seen in Figure 21. This corresponds to about 78.5% of the maximum extraction yield. The diagram in the figure illustrates extraction of phosphoric acid from a solution obtained by leaching sewage sludge ash with 3 M hydrochloric acid, after extraction of iron. About 2.7 M calcium chloride was present in the background. The phosphorus content in solution was 21 g/L P, i.e. about 0.7 M phosphoric acid. The organic phase was TBP. Also, the loading capacities of the TBP solvent reported by e.g. Habashi et al. were not possible. Habashi et al. reported a loading of 3 M phosphoric acid in TBP in contact with 0.7 M phosphoric acid in apatite leachates. This was clearly not possible as can be seen from Figure 21, where only about 0.6 M phosphoric acid was loaded by TBP (slightly above 18 g/L phosphorus). This complicates recovery of phosphoric acid from the loaded organic phase using conventional water stripping. In this case, the strip product obtained will be of relatively low concentration. A large amount of water will have to be evaporated to produce a concentrated phosphoric acid solution.

Although technically possible, this negatively affects the economy of the process. Therefore, an approach described in one of the applicant's previous inventions, disclosed in the international patent application publication WO2010138045A1, was preferably used to mitigate this drawback for the phosphorus extraction. Figure 22 illustrates an extractor section 20 having equipment 22D for liquid-liquid extraction of phosphorus with an organic solvent. The equipment 22D for liquid-liquid extraction of phosphorus is configured for extracting phosphorus from the leachate or from the raffinate of an equipment for liquid-liquid extraction of iron. A stripping liquid 209D of a saturated monoammonium phosphate (MAP) solution is added and results in the provision of a liquid 210D comprising phosphorus in the form of MAP and phosphoric acid. A raffinate 211 at least partly depleted in phosphorus is provided from the extractor section 20.

In further detail, according to the international patent application publication WO2010138045A1, the TBP organic phase with phosphoric acid can be scrubbed using, e.g., water at high O:A ratio, to remove some of the co-extracted calcium and other unwanted impurities. The scrub product is returned to one of the previous process steps. The organic phase with phosphoric acid is as mentioned stripped with a saturated MAP solution 209D.

The strip product 210D, which contains phosphoric acid in saturated MAP is treated with a diammonium phosphate (DAP) solution 240 in a reactor 30. This converts the phosphoric acid to MAP, enabling its precipitation from what is now a supersaturated solution. The volume of the saturated MAP solution 209D increases by addition of DAP. The excess MAP solution is removed and converted in a chamber 32 to DAP 240 with ammonia 241, and is re-used in the process. The remaining saturated MAP solution 209D is re-used for stripping.

In other words, in one preferred embodiment, the method for chemical processing of sewage sludge ash comprises the further step of stripping the organic solvent in the step of extracting phosphorus with a saturated aqueous solution of monoammonium phosphate.

In a preferred embodiment, the method for chemical processing of sewage sludge ash comprises the further steps of scrubbing the organic solvent, in the step of extracting phosphorus before the step of stripping the organic solvent in the step of extracting phosphorus, with water into an aqueous scrub solution and returning the aqueous scrub solution to the raffinate of the step of extracting iron.

In another embodiment, the method for chemical processing of sewage sludge ash comprises the further step of stripping the organic solvent in the step of extracting phosphorus with water, resulting in a phosphoric acid solution.

The use of MAP as strip solution allows direct recovery of phosphorus as solid MAP, the most desired phosphorus fertilizer product. Conventional stripping of phosphoric acid with water, the need to concentrate diluted phosphoric acid via evaporation and conversion of the concentrated phosphoric acid to MAP is bypassed. In addition, the method allows effective processing of organic phases loaded with low amounts of phosphoric acid, an important advantage that enables processing of sludge ashes with low phosphorus content.

The technique presented in the international patent application publication WO2010138045A1 is, however, preferably further improved. One aspect is the handling of co-extracted impurities, especially heavy metals. Co-extracted metallic ions are stripped together with the phosphoric acid, ending up in the MAP strip solution. It was determined that several of these impurities also precipitate together with the MAP product, reducing its quality (see table 9). Iron, aluminium, barium, chromium and molybdenum effectively precipitate with the solid MAP product. Calcium and strontium precipitate to a relatively large extent. It is desired to remove such impurities from the system prior to the precipitation of MAP. This is also important because the saturated MAP solution is recirculated in the system and used for subsequent stripping, which contributes to an accumulation of impurities with every loop.

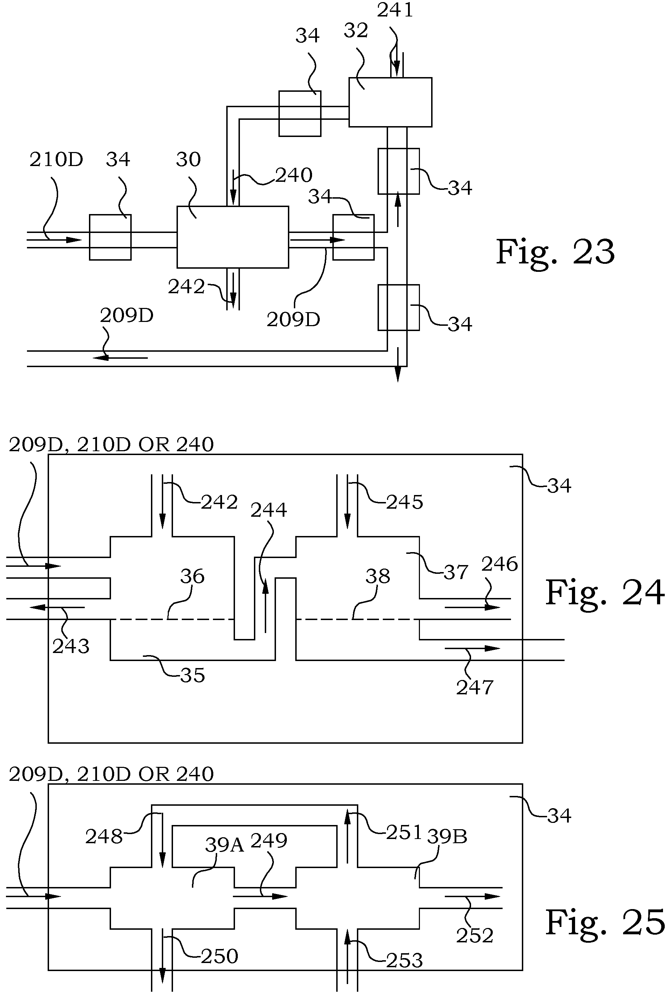

Impurities can be handled at various steps in the aqueous MAP-DAP loop, as can be seen from Figure 23. Impurity removing arrangements 34 may be implemented in one or several of the indicated positions, e.g., after stripping, after treatment with DAP in the resulting saturated MAP solution, in the common flow or in any of the divided flows or in the DAP solution 240.This is confirmed by the experimental results described below. One embodiment of such an impurity removing arrangement 34 is illustrated in Figure 24. Heavy metals can be precipitated as low soluble sulphides by adding a suitable sulphur-containing compound 242 to the stream, e.g., into a mixing chamber 35. The sulphur-containing compound 242 can, e.g., be a metal hydrogen sulphide, metal sulphide, organic sulphide or any mixture of these. The heavy metal precipitate 243 is removed from the stream using a solid/liquid separation equipment 36, e.g., filtration, centrifugation, sedimentation, clarification or equivalent. This results in a stream 244 with lower concentration of heavy metals. Any residual sulphur species left in solution can be removed, if desired, using a sulphur scavenger compound 245. It is added into a sulphur removing chamber 37. The sulphur scavenger compound 245 binds sulphur in a phase 246 that is easy to remove, e.g., a solid that can be removed using a separator equipment 38, e.g., according to one of the aforementioned solid-liquid separation techniques, leaving a heavy-metal and sulphur depleted solution 247. The phase 246 may also be a separate layer on the top or bottom which can be isolated from the stream by suitable separation techniques.

Table 9 - Precipitation of impurity elements from the MAP strip product loaded with phosphoric acid during precipitation of solid MAP by adding DAP to the stream

| Element | Concentration unit | Concentration in the MAP strip product loaded with phosphoric acid | Amount precipitated with the solid MAP product (%) |
|---------|--------------------|--------------------------------------------------------------------|----------------------------------------------------|
| Ca | g/L | 4.63 | 37 |
| Fe | g/L | 1.16 | 95 |
| Al | mg/L | 213.00 | 78 |
| As | mg/L | 8.72 | 17 |
| B | mg/L | 17.90 | 25 |
| Ba | mg/L | 0.66 | >99 |
| Cd | mg/L | 1.95 | 3 |
| Co | mg/L | 0.18 | < 1 |
| Cr | mg/L | 0.99 | 97 |
| Cu | mg/L | 198.00 | 18 |
| Mn | mg/L | 7.64 | 2 |
| Mo | mg/L | 2.79 | 83 |
| Ni | mg/L | 0.15 | 31 |
| Pb | mg/L | 3.86 | >99 |
| Sr | mg/L | 2.59 | 51 |
| Zn | mg/L | 588.00 | 15 |

In addition, or as an alternative treatment, heavy metals can be removed using ion exchange, preferably using ion exchange resins able to selectively bind heavy metals, e.g., thiol based ion exchangers or other sulphur-containing resins with high affinity for heavy metal ions. Removal of heavy metals using an ion exchange treatment is preferably done according to the embodiment presented in Figure 23. The contaminated MAP or DAP stream is entered into a first ion exchanger unit 39A. An added ion exchange resin 248 removes the heavy metals from the original MAP or DAP stream, which is then exited as a heavy-metal-depleted solution 250. Because some of the streams in the MAP - DAP loop have high pH, thiol resins can be used without severe degradation of risk of oxidizing thiol functional groups to disulphide, which would hinder the process. Moreover, due to generally low content of heavy metals in these streams (ppm levels), saturation is a very minor concern, as the loading capacities will not be reached fast. The saturated resin containing heavy metals in a small volume can be disposed off in an appropriate manner. Alternatively, the resin can be regenerated by using an appropriate solution, e.g., acidic solution, to recover the heavy metals in a very concentrated form in a small volume. The ion exchange resin loaded with heavy metals 249 is then brought into a second ion exchanger unit 39B. An eluant 253 is added, removing the heavy metals from the ion exchange resin and the depleted ion exchange resin 251 can be returned for a new ion exchange operation. This is preferably made after the eluant 253 is completely removed from the resin by employing, e.g., water washing. The eluate loaded with heavy metals 252 is removed.

Table 9 shows the concentration of impurities in a less pure MAP strip product obtained after the extraction and stripping of phosphoric acid. The strip product had an acidic pH of about 1.8. Several of the impurity elements precipitated with the solid MAP product when this was produced by adding DAP to the stream (table 9). Precipitation of impurities with sodium hydrogen sulphide was tested at different points in the MAP - DAP loop (MAP loaded with phosphoric acid, MAP-filtrate after precipitation of MAP, and DAP solution). The precipitation of copper, molybdenum and arsenic as metal sulphides directly from the MAP strip product loaded with phosphoric acid was effective but much of the zinc remained in solution. Sulphide precipitation of the heavy metals remaining in solution after precipitation of the solid MAP product but before generation of DAP, followed by generation of DAP and filtration resulted in the precipitation of most impurities, including zinc, copper and arsenic, and a relatively fast filtration (table 10). Sulphide precipitation at pH 3.8 prevented residual sulphides from remaining in solution. Precipitation of zinc and copper with sulphides from the DAP solution, at pH above 8 was possible while arsenic was precipitated with significantly less efficiency (table 10). Filtration was more difficult. Additionally, residual sulphides remained dissolved in solution, which can cause problems in the MAP precipitation stage. Zinc, calcium and cadmium could be precipitated in the DAP generation step without addition of sulphide, by raising the pH of the MAP filtrate with ammonia but arsenic and copper could not be precipitated this way.

Generation of hydrogen sulphide gas is a concern when precipitation is carried out at lower pH with metal hydrogen sulphides or metal sulphides. The use of organic sulphides can prevent this. The precipitation of impurity metals was also tested with two commercial organic sulphides. This was done in the acidic streams, the loaded MAP strip product and the filtrate after the precipitation of solid MAP, and was compared with the precipitation with sodium hydrogen sulphide. Precipitation of heavy metals, especially arsenic, zinc and copper, was more efficient from the filtrate after precipitation of solid MAP than from the MAP solution loaded with phosphoric acid. Precipitation with one of the organic sulphides tested was slightly more efficient than with sodium hydrogen sulphide. However, when using organic sulphides, residual sulphide remained in solution while with sodium hydrogen sulphide this was not seen. In this case, a scavenger for residual sulphide can be used to remove it from solution.

Table 10 - Precipitation of impurity elements with sodium hydrogen sulphide from the MAP filtrate a) after precipitation of the solid MAP product (pH 3.8); b) after precipitation of the solid MAP product (pH 3.8) but followed by increasing the pH to generate DAP; c) by adding sodium hydrogen sulphide to the solution after generation of DAP (pH 8.1).

| Element | Concentration unit | Concentration in the MAP filtrate | Amount precipitated at pH 3.8 (%) | Amount precipitated at pH 3.8, followed by pH increase to generate DAP (%) | Amount precipitated by adding sulphide after generation of DAP (pH 8.1) |
|---|---|---|---|---|---|
| Ca | g/L | 1.93 | <1 | 96 | 96 |
| Al | mg/L | 30.80 | <1 | <1 | <1 |
| As | mg/L | 4.79 | 99 | 94 | 11 |
| B | mg/L | 8.91 | 2 | 13 | 13 |
| Cd | mg/L | 1.25 | >99 | >99 | >99 |
| Co | mg/L | 0.12 | 3 | >99 | >99 |
| Cr | mg/L | 0.02 | < 1 | >99 | 2 |
| Cu | mg/L | 107.00 | >99 | >99 | >99 |
| Mn | mg/L | 4.97 | < 1 | 97 | 94 |
| Mo | mg/L | 0.32 | >99 | >99 | >99 |
| Ni | mg/L | 0.07 | < 1 | >50 | >50 |
| Sr | mg/L | 0.84 | <1 | 92 | 19 |
| Zn | mg/L | 331.00 | 99 | 97 | 70 |

As a summary, recovery of phosphorus is preferably done using solvent extraction with TBP, either mixed with a suitable diluent and/or modifier, or used undiluted. Phosphorus is extracted by TBP as phosphoric acid. Scrubbing of the organic phase to remove co-extracted impurities like calcium can be done at high O:A ratios with a suitable scrubbing agent (water, diluted acid solutions etc.). The scrub product can be re-used in the process, e.g., in the leaching step, the beginning of the solvent extraction step or in other steps. In conventional industrial operations, the loaded TBP is stripped with water to produce a diluted phosphoric acid solution, which is afterwards concentrated using evaporation, which is energy intensive and costly. However, for the process described here, production of solid monoammonium phosphate (MAP) directly from the loaded TBP phase is preferred. This is performed by stripping of phosphoric acid with saturated MAP solution, and subsequent processing of the MAP-phosphoric acid strip product. Several further preferred steps to remove impurities, including heavy metals co-extracted and stripped together with phosphoric acid, have been developed. These involve selective precipitation of impurities using metallic and/or organic sulphides at various points in the MAP-DAP process. Removal of impurities assures the MAP product recovered from sewage sludge ash has high purity, and that impurities do not accumulate in the process streams during production of MAP.

Three particular aspects of the extraction processes of the present technology are interconnected: supplying the high ionic strength needed for the effective extraction of iron and phosphorus; assuring a good water balance in the process; and maximizing product recovery while minimizing discharges. To effectively extract iron and phosphorus with TBP, a high enough ionic strength is needed in the aqueous stream, i.e. the leachate. This is achieved by having sufficient hydrochloric acid in solution, and/or other sources of chloride ions with salting-out effect. The present process relied on having free hydrochloric acid in the leachate, and/or dissolved calcium chloride, but the process is not limited to using only these two chemicals. The ionic strength can be supplied by any chloride salt or mixture of salts, preferably a soluble constituent of the ash that is not extracted by TBP (calcium, aluminium, magnesium, sodium, potassium and others). Even salts of elements not found in sludge ash can be used. Using calcium chloride has several advantages. Calcium is a major constituent of sewage sludge ash and is easily leached even with diluted hydrochloric acid. Calcium is poorly extracted by TBP, which assures most calcium present in the first leachate ends up in the raffinate after extraction of phosphorus. A significant part of this raffinate is returned to the leaching step, where additional calcium is leached. Re-use and recirculation of the raffinate with continuous leaching of calcium assures the ionic strength needed for the extraction of iron and phosphorus, minimizing the need to add an external calcium source to assure this. To keep the water balance and have an outlet for calcium and the other elements leached, an aqueous bleed is taken out of the recirculation loop for further treatment. The rest of the stream is recirculated back to the leaching step, where sludge ash constituents are leached, further increasing the concentration of the elements already present in this solution. The step where the bleed is taken out of can vary, e.g., it can be after the recovery of phosphorus, after the recovery of aluminium or in any later steps. The bleed is processed to recover the constituents in solution, typically as solid individual compounds. A general case for the treatment of a bleed taken after the recovery of iron and phosphorus follows.

The raffinate after extraction of iron and phosphorus will typically contain, in addition to hydrochloric acid, some of the phosphorus that was not extracted in the previous steps and also calcium, aluminium, magnesium, heavy metals, sodium and potassium. The pH of the raffinate is typically low, below pH 1.

Aluminium is usually present in sewage sludge ash and due to the recirculation of process liquids, the concentrations may gradually increase. Preferably, the method for chemical processing of sewage sludge ash comprises the further step of recovering aluminium from at least one of the at least partly iron-depleted solution and a bleed solution from the at least partly iron-depleted solution.

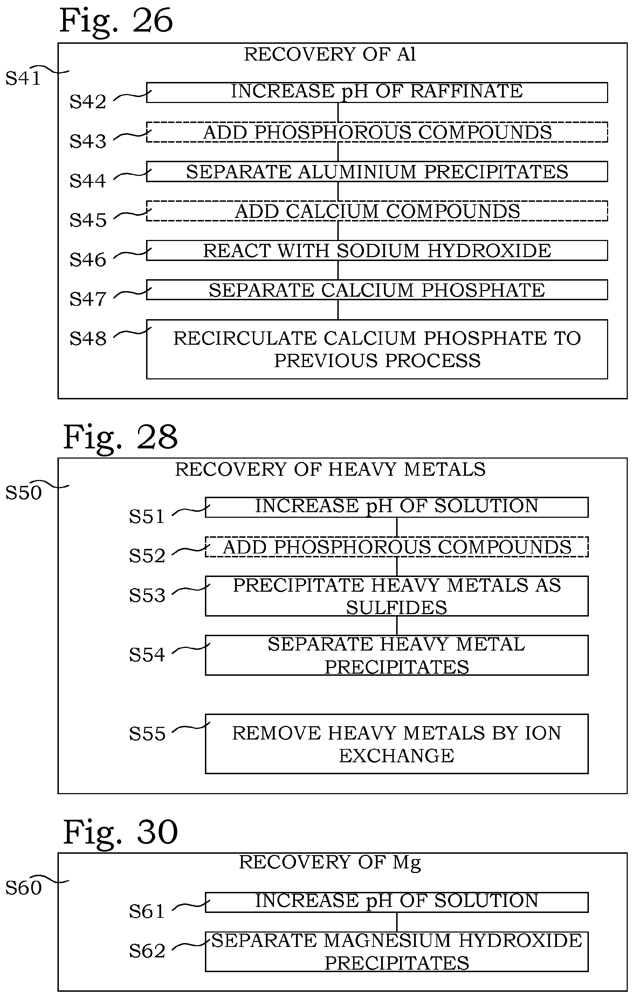

Recovery of aluminium is preferably done by increasing the pH of the solution after the phosphorus recovery step with a suitable compound, e.g., metal carbonates, metal oxides, ammonia, metal hydroxides or a mixture of these. Figure 26 illustrates a flow diagram of steps of an embodiment of step S41 where aluminium is recovered. In this embodiment, the pH is increased in step S42 using a compound that allows the metals introduced to be recovered later in the process, e.g. using calcium carbonate or lime, followed by recovery of calcium compounds later in the process.

Typically, the pH of the feed solution will be low due to the presence of hydrochloric acid and phosphoric acid, e.g., below 1. The nature of the previous process steps affects the aluminium recovery.

The aluminium:phosphorus ratio in solution and the precipitation agent used as well as the precipitation pH and temperature determine the chemical form in which aluminium is precipitated; aluminium phosphate, aluminium hydroxide, calcium aluminium phosphate or mixtures of these. Temperature plays an important role, affecting both the kinetics of the precipitation process and the filtration and washing of the aluminium precipitate. Higher temperatures are preferred, as they positively affect both of these. Testing has shown that aluminium phosphate was fully precipitated with lime between pH 1.1 - 1.6 at aluminium:phosphorus molar ratios below 1. A low aluminium:phosphorus molar ratio, e.g., 0.5 was found to be beneficial in terms of filtration speed compared to higher aluminium:phosphorus molar ratios, e.g., 1 and 1.5. Aluminium and phosphorus precipitated at higher pH at higher aluminium:phosphorus molar ratios in the raffinate.

Precipitation of aluminium with calcium carbonate was also effective at pH below 2; and filtration of the precipitate was faster compared to precipitation with lime. A deficit in phosphorus results in the precipitation of aluminium hydroxide. Precipitation of a combination of aluminium phosphate and aluminium hydroxide occurs at high aluminium:phosphorus ratios.

It was thus observed that aluminium compounds can be precipitated selectively from magnesium, calcium, sodium, potassium and other impurities, and precipitation can be triggered even at pH below 2. Aluminium precipitates as aluminium phosphate if enough phosphorus is present in solution, and/or aluminium hydroxide if there is a phosphorus deficit. This can be exploited to obtain aluminium in a certain chemical form.

If needed, the phosphorus content in solution can be tailored to the aluminium content in order to only precipitate aluminium phosphate or to produce certain mixtures containing aluminium phosphate. For example, it was possible to precipitate all phosphorus in solution as a mixture of aluminium phosphate and calcium phosphate at pH above 3 by adding calcium carbonate to a raffinate containing an aluminium:phosphorus molar ratio below 1. The selectivity can be controlled by controlling the pH. In this case, at pH below 2, only aluminium phosphate precipitated, leaving the excess phosphorus in solution.

The phosphorus content in the raffinate can be controlled by controlling the efficiency of the prior solvent extraction step, e.g., extracting only a desired fraction of the phosphoric acid with TBP. Another alternative, illustrated by the optional step S43, is dosing of a phosphorus compound to the raffinate to increase the concentration of phosphorus in solution in case there is a deficit.

In other words, in one embodiment, the recovery of aluminium comprises adjusting of a pH of the at least on of the iron-depleted solution and a bleed solution from the iron-depleted solution up to a pH value where at least a part of the aluminium precipitates as at least one of aluminium phosphate, calcium aluminium phosphate and aluminium hydroxide.

In step S44, the aluminium precipitate is separated from solution using a solid-liquid separation step. The aluminium precipitate can preferably be further processed. In an optional intermediary step, S45, a calcium source, e.g., lime is added to the aluminium precipitate. This is done if a calcium deficit is present in the aluminium precipitate, to facilitate precipitation of calcium phosphate in the next step. In step S46, the aluminium precipitate is reacted with sodium hydroxide. This produces, e.g., sodium aluminate solution and precipitate comprising of calcium phosphate that is separated in step S47. Production of sodium aluminate precipitates phosphorus leaving aluminium in solution, and therefore allows the return back of the phosphorus to a previous process step, assuring it is not lost. Therefore, in step S48, the phosphorus is recirculated to a previous process step. This stream has low volume and can be accommodated in some of the earlier described steps, typically the leaching/dissolving of sludge ash materials.

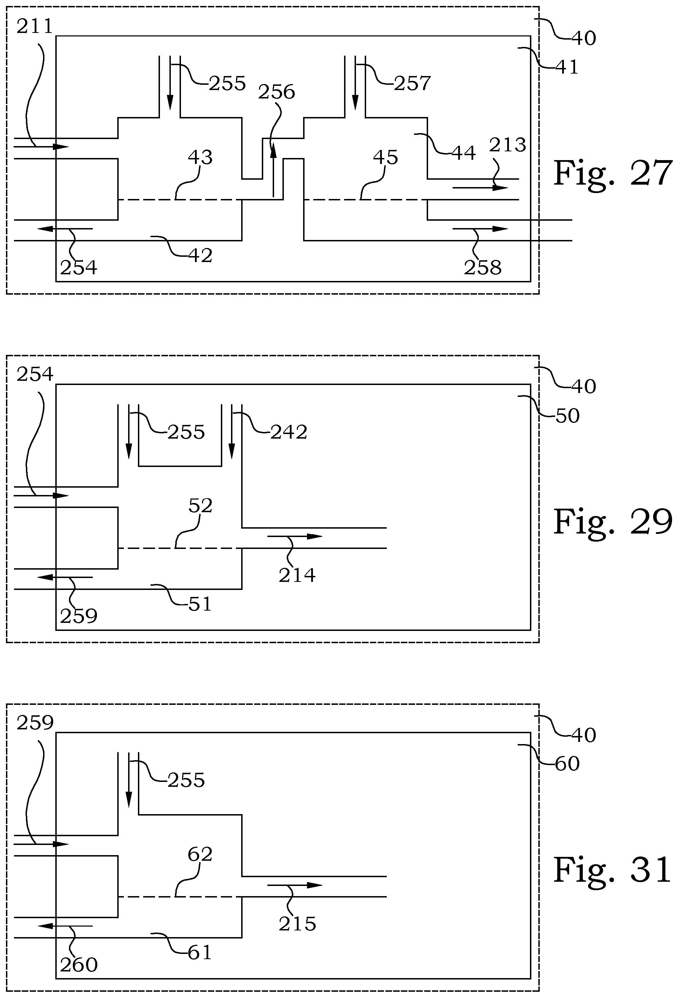

Figure 27 illustrates schematically an embodiment of an aluminium separation arrangement 41 comprised in post-treatment section 40. Raffinate 211 from the iron/phosphorus extraction is entered into an aluminium precipitation vessel 42 together with pH-increasing additives 255 and optionally phosphorus compounds. Aluminium precipitates as at least one of aluminium phosphate, calcium aluminium phosphate and aluminium hydroxide 256, which is separated by a solid-liquid separation equipment 43, giving an aluminium depleted solution 254, at least partly depleted. Preferably, the separated aluminium precipitate is brought into an aluminium reactor 44, where sodium hydroxide 257 and optionally a calcium sources are entered. The calcium source, e.g., lime may be added if the precipitate is calcium deficient. In the reactor 44, the aluminium precipitate converts into a sodium aluminate solution 213 and a solid fraction with phosphorus comprising calcium phosphate 258. A solid-liquid separation equipment 45 removes the solid fraction comprising phosphorus 258, which is recirculated to previous process steps, typically dissolution of sludge ash materials.

Preferably, the heavy metal ions in the resulting solution are subsequently recovered at higher pH. Their recovery is performed on the main stream emanating from the raffinate from the iron/phosphorus extraction, possibly with aluminium removed, or on a bleed solution therefrom. The removal of heavy metal ions is primarily performed to avoid contamination in other recovered fractions. However, the recovered heavy metal compounds could also be used as a feed material for further purification or processing making use of the actual value of the metal components. One approach, as indicated in Figure 28, comprises a step S51 in which the pH of the solution is increased further. This pH increase facilitates formation of insoluble metal hydroxides and/or phosphates, if phosphorus is present in solution. Similar to precipitation of aluminium, the amount of phosphorus present in solution can dictate which compounds precipitate, and this can be exploited to control the chemical form of the heavy metal product. In the optional step S52, phosphorus compounds are added for this purpose. Heavy metal ions precipitate in a wide pH range, typically 3 - 10. It was observed that precipitation of heavy metals can be done selectively from magnesium, calcium, sodium, potassium and, to a certain degree, strontium up to pH 9.3.

Another approach is to precipitate the heavy metals, as illustrated in step S53, as sulphides using metal hydrogen sulphides, metal sulphides, organic sulphides or mixtures of these. NaHS is a typical candidate. The sulphide precipitation by addition of sulphides can also be combined with a raising of the pH of the solution. If precipitation of heavy metals with sulphides is carried out at higher pH, the formation of hydrogen sulphide gas is avoided.

In step S54, the precipitated heavy metals are separated using a solid-liquid separation step.

A third approach, indicated by step S55, is to use ion exchange to purify the solution from heavy metals. Thiol base resins have high affinity for a variety of heavy metals. This may be performed in analogy with the separation of heavy metals from the extracted ammonium phosphate solutions, described earlier.

In other words, in one embodiment, the method for chemical processing of sewage sludge ash comprises the further step of recovering heavy metals from at least one of a solution emanating from the solution at least partly depleted in at least one of iron and phosphorus and a bleed solution from the solution emanating from the solution at least partly depleted in at least one of iron and phosphorus. The recovery is caused by adding at least one of pH-increasing additives and sulphur-containing compounds to the solution and by separating precipitated heavy metal compounds.

Figure 29 illustrates schematically an embodiment of a heavy metal separation arrangement 50 comprised in post-treatment section 40. Aluminium depleted solution 254 from the aluminium separation arrangement is entered into a heavy-metal precipitation vessel 51. Alternatively, if no aluminium removal is performed, the raffinate from the iron/phosphorus extraction is used. pH-increasing additives 255 and/or sulphur-containing compound 242 and optionally phosphate compounds are also entered, to cause precipitation of heavy-metal precipitates 214. Heavy-metal precipitates 214 are separated by a solid-liquid separation equipment 52, leaving a heavy-metal depleted solution 259.

Alternatively, an arrangement similar to Figure 23 can be utilized.

Removal of heavy metals results in a solution that contains mainly magnesium, calcium, sodium and potassium.

In one embodiment, the method for chemical processing of sewage sludge ash comprises the further step of recovering magnesium, calcium, sodium, and potassium from at least one of a solution emanating from the iron-depleted solution and a bleed solution from the solution emanating from the iron-depleted solution. Preferably, magnesium, calcium, sodium, and potassium are separated individually.

As illustrated by an embodiment in Figure 30, magnesium can be selectively precipitated as magnesium hydroxide in step S61 by further increasing the pH of the solution to a pH level causing precipitation of magnesium as magnesium hydroxide. Typically, this level is above pH 9.3. Hereby, e.g., alkali or alkaline-earth bases can be used. It was seen that most magnesium can be precipitated as magnesium hydroxide with lime before pH 10, selectively from the other constituents. The magnesium precipitate is recovered in step S62 from the solution using a solid-liquid separation step.

Figure 31 illustrates schematically an embodiment of a magnesium separation arrangement 60 comprised in post-treatment section 40. Heavy-metal depleted solution 259 from the heavy-metal separation arrangement is entered into a magnesium precipitation vessel 61. Alternatively, if no heavy-metal removal is performed, an aluminium depleted solution or the raffinate from the iron/phosphorus extraction is used. pH-increasing additives 255 are also entered, to cause precipitation of magnesium hydroxide 215. Magnesium hydroxide 215 is separated by a solid-liquid separation equipment 62, leaving a magnesium depleted solution 260.

The compound(s) used so far to increase the pH of the solution can preferably be selected so that one or more of the remaining constituents are concentrated. For example, sodium hydroxide can be used prior to a sodium removing step to enrich the solution in sodium. Similarly, calcium hydroxide can be used to assure a higher content of calcium in solution. Alternatively, different compounds can be used to increase the content of one or more species. If a suitable calcium compound is used to increase the pH, and the sewage sludge ash contains low amounts of sodium and potassium, the resulting solution will contain mostly calcium chloride, i.e. it gives a solution enriched in calcium chloride. This can be partly evaporated to obtain a calcium chloride concentrate or completely evaporated to produce solid calcium chloride.

If the solution contains high amounts of sodium and/or potassium in addition to calcium chloride, separation of the individual constituents is preferably done by exploiting the solubility differences between sodium and potassium chlorides at high temperature in the presence of a high calcium chloride background e.g. according to the international patent application publication WO2017/111685 A1.

The invention is not limited to the particular embodiments and examples described above, and can be varied within the limits of the claims. For example, leaching of sludge ash can be done under various conditions, with or without integrating some of the pre-treatment methods in this step. Side-streams and process water, such as raffinates, scrub solutions, wash waters etc., can be recirculated in different steps in the process to achieve the same outcome. For instance, returning two streams back to the leaching reactor and one to the leachate after filtration can achieve the same outcome as returning all three streams to the leaching reactor. Regardless of how the ionic strength needed in the solvent extraction steps is assured, e.g., by high enough acidity and/or chloride salt content, a key aspect of the process is the re-use and recirculation of these ionic species in the background until a steady state is reached. A bleed is processed to assure the water balance and to separate products. The location of the return and bleed points can be varied depending on the desired outcome, chemistry and composition of the feeds, chemicals used etc.

Typically, after the solvent extraction of phosphorus, the raffinate will contain hydrochloric acid, unextracted phosphoric acid, calcium, aluminium, heavy metals, magnesium, sodium and potassium. Ferrous iron will be present in solution if it was not handled as previously mentioned. Depending on how the ionic strength was controlled, this raffinate will contain a high amount of hydrochloric acid and/or chloride salts. At any point after extraction of phosphoric acid, the raffinate is split into two streams, a bleed stream which is processed separately to recover its constituents and a stream which is recycled in previous steps in the process, preferably the leaching step.

In other words, in one embodiment, the step of recirculating at least a part of the iron-depleted solution comprises recirculation of at least a part of the iron-depleted solution to a step of dissolving a start material comprising sewage sludge ash.

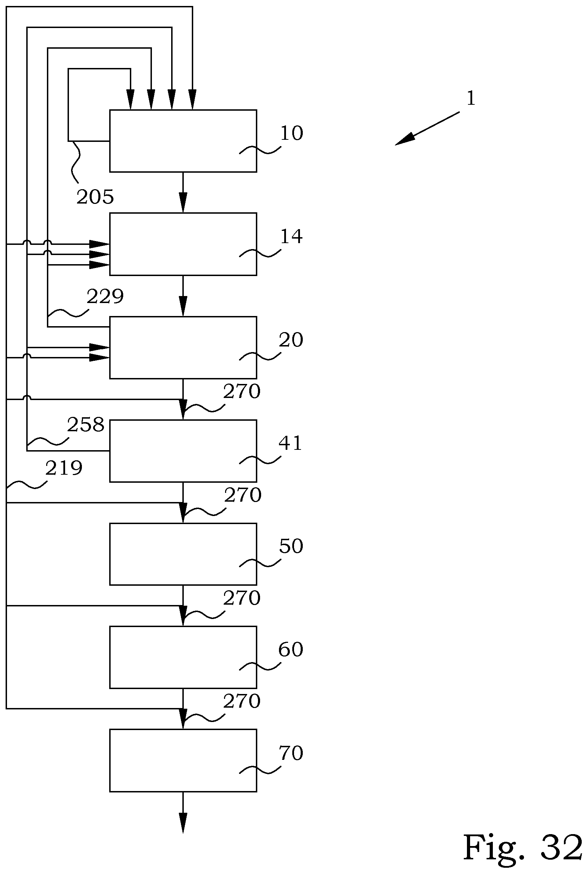

Figure 32 illustrates the recycling concept in a schematic manner. Downstream of extractor section 20, there are a number of possible stream splits, where one stream of a solution at least partly depleted in iron and/or phosphorus originating from the extractor section 20 is recirculated as a solution 219 back to previous stages of the process, and a blead stream 270 is forwarded to further component recovery stages. This can be performed in one or more of the illustrated places. The recirculated part 219 of the raffinate at least partly depleted in iron and/or phosphorus from the possible outlets constitutes a return flow. Several return outlets are possible. The return of the stream back to the leaching/dissolving step means that the leachate obtained will contain the elements in the return solution but also the newly leached sludge ash constituents. Therefore, the leachate will contain an increased amount non-extractable constituents and hydrochloric acid in addition to the iron and phosphorus leached. Returning the stream to the leaching/dissolving step after a subsequent extraction step, and leaching of new sewage sludge ash increases again the concentration of elements and the acidity in the leachate. This occurs until a steady-state is reached, e.g., the concentration of non-extractable/poorly extractable species remains somewhat stable. Since calcium is one of the elements present in sludge ash in significant amounts, the increased concentration of calcium chloride in solution partly or completely assures the ionic strength needed for effective extraction of iron and phosphorus.

In other words, in one embodiment, the recirculated part of the solution at least partly depleted in iron and/or phosphorus further comprises chloride ions.

In other words, in one embodiment, the step of recirculating at least a part of the iron-depleted solution comprises recirculation of at least a part of the iron-depleted solution to a step of dissolving a start material comprising sewage sludge ash.

Also other streams are returned within the system. As mentioned earlier, washing liquid 205 could be re-entered into the dissolving reactor 10. A second stage raffinate 229 from the extractor section 20, comprising phosphorus and calcium and possibly also some other contaminants may be reused in the process, e.g., in the dissolution reactor 10 or the pre-treatment section 14. The phosphorus stream 258 from the recovery of aluminium can also be returned into the dissolution reactor 10, the pre-treatment section 14 or the extractor section 20. These streams assure a higher total yield of e.g. phosphorus extraction, but do also contribute in the process of maintaining the ionic strength.

Testing has shown that adequate extraction of iron and phosphorus with TBP is obtained by supplying an additional 2 M calcium chloride in the background when sludge ash is leached with mild hydrochloric acid solution, e.g., 3 M hydrochloric acid. During the first loop, to assure this, a salting-out reagent needs to be added during or after leaching, e.g., calcium chloride is added so that the concentration of chlorides in the background reaches the desired value. Afterwards, the ionic strength is preferably maintained by recirculation of process streams back to the dissolution step. This is done by tailoring the volume of bleed taken out of the system and/or the volume returned to the leaching step. If needed, the return stream can be concentrated to mitigate losses of salting-out reagent. This can be done using, e.g., partial evaporation. A make-up of salting-out reagent can also be added to the return stream, leaching solution or the leachate, either from an external source or from later stages of the process. For example, the calcium chloride solution or solid chloride salts separated from the calcium chloride solution can be used for this purpose.

Of course, the ionic strength needed for extraction can be partly or fully supplied by the background concentration of hydrochloric acid. In such a particular embodiment, leaching is done with a hydrochloric acid solution of high enough concentration to assure a high hydrochloric acid/chloride background during extraction. The background acidity/chloride content is recirculated similar to described above. For example, leaching of sludge ash with 6 M hydrochloric acid solution was tested by the present inventors. Iron and phosphorus could be effectively recovered from the obtained leachate without the need for adding any salting-out reagent such as calcium chloride. Part of the acidic raffinate after extraction of phosphoric acid, still containing a high amount of background hydrochloric acid, was reused in the leaching step of fresh ash, and this alone was enough to supply the needed ionic strength in the subsequent extraction cycles. Moreover, in a modification of this embodiment, leaching was performed at elevated temperature, which resulted in almost complete leaching of iron from the sludge ash (over 90 % leaching efficiency for iron). In this particular case, the amount of iron in solution was 5-6 times higher than the amounts typically leached at ambient temperature (about 5 g/L). Because of the significantly higher iron content (about 25-30 g/L) in relation to phosphorus (also about 30 g/L), solvent extraction of iron could be performed close to the loading capacity of the organic phase without the need to use very low O:A ratios. In this case, extraction could be performed with O:A ratios between 0.5 and 1, were the system showed increased selectivity towards iron compared to operation under the same conditions but using leachates with much lower iron content.

As mentioned before, a bleed needs to be taken out of the system to keep the water balance and to recover other constituents. If phosphoric acid is not completely extracted with TBP, some phosphoric acid will still be present in the raffinate. A significant part of this stream is returned to the leaching step, which assures the phosphoric acid is not lost. The phosphoric acid removed with the bleed enables complete or partial recovery of aluminium as precipitated aluminium phosphate, and this was achieved at pH below 2, as was discussed further above.

The subsequent processing of the solution to recover the heavy metals and magnesium was already addressed further above. This is achieved using a stepwise increase in pH using suitable chemical compounds able to achieve this, e.g., metal carbonates, metal oxides, ammonia, metal hydroxides or a mixture of these. Further recovery of the sodium, potassium and calcium from the brine obtained after recovery of magnesium is achieved by exploiting the solubility differences of sodium, potassium at different temperatures and high calcium chloride concentrations, according to processes, as such known in prior art, e.g., in the international patent application publication WO 2017/111685 A1.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible. The scope of the present invention is, however, defined by the appended claims.

**Claims**

1. A method for chemical processing of sewage sludge ash, comprising the steps of:

   - dissolving (S10) a start material (201), emanating from sewage sludge ash, in acid comprising hydrochloric acid (202);
   said start material (201) comprising at least silicon and iron compounds;
   - separating (S12) undissolved residues (204), whereby a leachate (206) remains;
   - extracting (S20) at least one of iron and phosphorus from said leachate (206) by liquid-liquid extraction with an organic solvent (222);
   - controlling (S15) the amount of colloidal silica being present in leachate (206) provided to said step of extracting (S20) to be compatible with a silica crud amount in said liquid-liquid extraction with an organic solvent (222) low enough for making said liquid-liquid extraction with an organic solvent (222) operable;
   - recirculating (S90) at least a part (219) of a raffinate (211) at least partly depleted in at least one of iron and phosphorus originating from said step of extracting (S20) at least one of iron and phosphorus, for dissolving a start material (201), emanating from sewage sludge ash;
   said recirculated part (219) of said raffinate (211) at least partly depleted in at least one of iron and phosphorus comprising chloride ions;
   wherein said step of controlling (S15) is performed by at least one of:

      promoting (S151) coagulation to grow particles by adding a silica coagulant to at least one of said start material (201), dissolved start material emanating from sewage sludge ash and said leachate (206); and
      performing (S156) said dissolving step (S10) at an elevated temperature of at least 50°C.

2. The method according to claim 1, **characterized in that** wherein said step of controlling (S15) is performed by at least promoting (S151) coagulation to grow particles by adding a silica coagulant to at least one of said start material (201), dissolved start material emanating from sewage sludge ash and said leachate (206).

3. The method according to claim 1 or 2, **characterized in that** said promoting (S151) of coagulation to grow particles is at least partly performed by adding silica coagulant to said start material (201).

4. The method according to any of the claims 1 to 3, **characterized in that** said promoting (S151) of coagulation to grow particles is performed at least partly concurrently to said dissolving (S10) step.

5. The method according to any of the claims 1 to 4, **characterized in that** said promoting (S151) of coagulation to grow particles is performed at least partly in said leachate (206) after said step of separating (S12) undissolved residues (204), whereby said method optionally comprises the additional step of removing (S19) coagulated silica particles from said leachate (206).

6. The method according to any of the claims 1 to 5, **characterized by** at least one of the steps of:

   - performing (S154) said dissolving step (S10) by a hydrochloric acid solution of a concentration of more than 3 M; and
   - ageing (S155) said dissolved sewage sludge ash to promote at least one of conversion of ionic silicon to colloidal silica and growth of colloidal silica particles.

7. The method according to any of the claims 1 to 6, **characterized in that** said step of recirculating (S90) at least a part (219) of a raffinate (211) is controlled to provide a concentration of chloride salts and/or hydrochloric acid in said leachate (206) of at least 1 M.

8. The method according to any of the claims 1 to 7, **characterized in that** said start material (201) comprises sulphur, and wherein the method comprises the further step of preventing precipitation of calcium sulphate to occur just before or during said step of extracting (S20) at least one of iron and phosphorus, by performing at least one process of:

   - ageing (S161) said leachate, and
   - speeding (S163) $CaSO_4$ precipitation; before said step of extracting (S20) at least one of iron and phosphorus, wherein said speeding (S163) of $CaSO_4$ precipitation comprises at least one of:

- addition of calcium chloride at the latest during said step of dissolving (S10);
- addition of calcium chloride to said leachate (206) after said step of separating (S12) undissolved residues (204);
- returning calcium chloride-rich aqueous raffinate resulting after a preceding said step of extracting (S20) at least one of iron and phosphorus at the latest during said step of dissolving (S10);
- returning calcium chloride-rich aqueous raffinate resulting after a preceding said step of extracting (S20) at least one of iron and phosphorus after said step of separating (S12) undissolved residues (204);
- addition of $CaSO_4$ seed particles at the latest during said step of dissolving (S10);
- addition of $CaSO_4$ seed particles to said leachate (206) after said step of separating (S12) undissolved residues (204); and
- performing said step of dissolving (S10) at a temperature of at least 50°C.

9. The method according to any of the claims 1 to 8, **characterized in that** said step of extracting (S20) at least one of iron and phosphorus comprises extracting iron (S21) from said leachate (206) by liquid-liquid extraction with an organic solvent (222).

10. The method according to claim 9, **characterized in that** said step of extracting iron (S21) from said leachate (206) comprises subsequent extraction stages, wherein:

    - a first extraction stage (220A) comprises selective liquid-liquid extraction of an iron content from said leachate (206) and subsequent stripping into an intermediate strip solution (228); and
    - a second extraction stage (220B) comprises selective liquid-liquid extraction of mostly iron ions from said intermediate strip solution (228) and subsequent stripping into a second strip solution (210A) to achieve at least one of higher iron purity in the recovered iron product and higher iron concentration.

11. The method according to claim 10, **characterized in that**

    said first extraction stage (220A) comprises matching a loading capacity of said organic solvent (222) to a content of Fe(III) in said leachate (206) by controlling of a relative amount of said organic solvent (222) to said leachate (206); and
    at least one of said second extraction stage (220B) and said further extraction stage, if any, comprises controlling a loading capacity of said organic solvent (222) to be in the vicinity of or lower than a content of Fe(III) in said intermediate strip solution (228) by controlling of a relative amount of said organic solvent (222) to said intermediate strip solution (228), wherein said step of recirculating (S90) at least a part (219) of a raffinate (211) at least partly depleted in at least one of iron and phosphorus comprises recycling of a raffinate (229) from said liquid-liquid extraction of at least one of said second extraction stage (220B) and said further extraction stage, if any, to be used in a subsequent said step of dissolving (S10) a start material (201).

12. The method according to claim 9, **characterized in that** said step of dissolving (S10) said start material (201) is performed with an acid having a hydrochloric acid concentration higher than 3 M, preferably higher than 6 M, and wherein said step of extracting (S21) iron from said leachate (206) comprises controlling a loading capacity of said organic solvent (222) to be in the vicinity of or lower than a content of Fe(III) in said leachate (206) by controlling of a relative amount of said organic solvent (222) to said leachate (206).

13. The method according to any of the claims 1 to 12, **characterized in that** said start material (201) is sewage sludge ash, and wherein step of extracting (S20) at least one of iron and phosphorus further comprises extracting phosphorus (S22), by liquid-liquid extraction with an organic solvent (222), from a raffinate of said step of extracting iron (S21).

14. The method according to claim 9, **characterized in that** said start material (201) comprises undissolved residues (204) from a phosphorus leaching of sewage sludge ash, said step of dissolving (S10) said start material (201) is performed with an acid having a hydrochloric acid (202) concentration higher than 3 M, preferably higher than 6 M, and wherein said step of extracting iron (S21) from said leachate comprises controlling a loading capacity of said organic solvent (222) to be lower than a content of Fe(III) in said leachate (206) by controlling of a relative amount of said organic solvent (222) to said leachate (206).

15. The method according to claim 14, **characterized in that** said step of recirculating (S90) at least a part (219) of said raffinate (211) at least partly depleted in at least one of iron and phosphorus comprises recirculation of at least a part (219) of said raffinate (211) at least partly depleted in at least one of iron and phosphorus to a step of dissolving (S10) a start material (201) comprising sewage sludge ash.

16. The method according to any of the claims 1 to 15, **characterized by** the further step of recovering aluminium (S41) from at least one of said raffinate (211) at least partly depleted in at least one of iron and phosphorus and a bleed solution (270) from said raffinate (211) at least partly depleted in at least one of iron and phosphorus.

**Patentansprüche**

1. Verfahren zur chemischen Aufbereitung von Klärschlammasche, umfassend die folgenden Schritte:

   - Auflösen (S10) eines aus Klärschlammasche stammenden Ausgangsmaterials (201) in einer Säure, die Salzsäure (202) umfasst;
   wobei das Ausgangsmaterial (201) mindestens Silizium- und Eisenverbindungen umfasst;
   - Abtrennen (S12) ungelöster Rückstände (204), wodurch ein Sickerwasser (206) verbleibt;
   - Extrahieren (S20) mindestens eines aus Eisen und Phosphor aus dem Sickerwasser (206) durch Flüssig-Flüssig-Extraktion mit einem organischen Lösungsmittel (222);
   - Kontrolle (S15) der Menge an kolloidaler Kieselsäure, die im Sickerwasser (206) vorhanden ist, das dem Extraktionsschritt (S20) zugeführt wird, so dass sie mit einer ausreichend geringen Kieselsäureschlammenge in der Flüssig-Flüssig-Extraktion mit einem organischen Lösungsmittel (222) kompatibel ist, um die Flüssig-Flüssig-Extraktion mit einem organischen Lösungsmittel (222) zu ermöglichen;
   - Rückführung (S90) mindestens eines Teils (219) eines Raffinats (211), das zumindest teilweise an Eisen und/oder Phosphor abgereichert ist und aus dem Extraktionsschritt (S20) von Eisen und/oder Phosphor stammt, zur Auflösung eines Ausgangsmaterials (201), das aus Klärschlammasche stammt;
   wobei der rückgeführte Teil (219) des Raffinats (211), das zumindest teilweise an Eisen und/oder Phosphor abgereichert ist, Chloridionen enthält;
   wobei der Kontrollschritt (S15) durch mindestens eines der folgenden Verfahren durchgeführt wird:

      Förderung (S151) der Koagulation zum Partikelwachstum durch Zugabe eines Kieselsäurekoagulans zu mindestens einem der Ausgangsmaterialien (201), gelöstem Ausgangsstoff aus Klärschlammasche und Sickerwasser (206) erfolgt; und
      Durchführung (S156) des Auflösungsschritts (S10) bei einer erhöhten Temperatur von mindestens 50 °C.

2. Verfahren nach Anspruch 1, **dadurch gekennzeichnet, dass** der Kontrollschritt (S15) zumindest durch die Förderung (S151) der Koagulation zum Partikelwachstum durch Zugabe eines Kieselsäurekoagulans zu mindestens einem der Ausgangsmaterialien (201), gelöstem Ausgangsmaterial aus Klärschlammasche und Sickerwasser (206) erfolgt.

3. Verfahren nach Anspruch 1 oder 2, **dadurch gekennzeichnet, dass** die Förderung (S151) der Koagulation zum Partikelwachstum zumindest teilweise durch Zugabe eines Kieselsäurekoagulans zum Ausgangsmaterial (201) erfolgt.

4. Verfahren nach einem der Ansprüche 1 bis 3, **dadurch gekennzeichnet, dass** die Förderung (S151) der Koagulation zum Partikelwachstum zumindest teilweise gleichzeitig mit dem Auflösungsschritt (S10) erfolgt.

5. Verfahren nach einem der Ansprüche 1 bis 4, **dadurch gekennzeichnet, dass** die Förderung (S151) der Koagulation zum Partikelwachstum zumindest teilweise im Sickerwasser (206) nach dem Schritt der Abtrennung (S12) ungelöster Rückstände (204) erfolgt, wobei das Verfahren optional den zusätzlichen Schritt der Entfernung (S19) koagulierter Kieselsäurepartikel aus dem Sickerwasser (206) umfasst.

6. Verfahren nach einem der Ansprüche 1 bis 5, **gekennzeichnet durch** mindestens einen der folgenden Schritte:

   - Durchführen (S154) des Auflösungsschritts (S10) mit einer Salzsäurelösung mit einer Konzentration von mehr als 3 M; und
   - Altern (S155) der gelösten Klärschlammasche, um die Umwandlung von ionischem Silizium in kolloidale Kieselsäure und/oder das Wachstum kolloidaler Kieselsäurepartikel zu fördern.

7. Verfahren nach einem der Ansprüche 1 bis 6, **dadurch gekennzeichnet, dass** der Schritt der Rückführung (S90) zumindest eines Teils (219) eines Raffinats (211) so gesteuert wird, dass eine Konzentration an Chloridsalzen und/oder Salzsäure im Sickerwasser (206) von mindestens 1 M erreicht wird.

8. Verfahren nach einem der Ansprüche 1 bis 7, **dadurch gekennzeichnet, dass** das Ausgangsmaterial (201) Schwefel enthält, und wobei das Verfahren ferner den Schritt der Verhinderung der Ausfällung von Calciumsulfat unmittelbar vor oder während des Extraktionsschritts (S20) von mindestens einem der Bestandteile Eisen und Phosphor durch mindestens einen der folgenden Prozesse umfasst:

   - Alterung (S161) des Sickerwassers und
   - Beschleunigung (S163) der $CaSO_4$-Ausfällung;

   vor dem Schritt der Extraktion (S20) von mindestens einem der Stoffe Eisen und Phosphor, wobei die Beschleunigung (S163) der $CaSO_4$-Ausfällung mindestens eines der folgenden Verfahren umfasst:

   - Zugabe von Calciumchlorid spätestens während des Auflösungsschritts (S10);
   - Zugabe von Calciumchlorid zum Sickerwasser (206) nach dem Schritt der Abtrennen (S12) ungelöster Rückstände (204);
   - Rückführung des calciumchloridreichen wässrigen Raffinats, das nach dem vorhergehenden Extraktionsschritt (S20) von mindestens einem der Stoffe Eisen und Phosphor entstanden ist, spätestens während des Auflösungsschritts (S10);
   - Rückführung des calciumchloridreichen wässrigen Raffinats, das nach dem vorhergehenden Extraktionsschritt (S20) von mindestens einem der Stoffe Eisen und Phosphor entstanden ist, nach dem Schritt der Abtrennen (S12) ungelöster Rückstände (204);
   - Zugabe von $CaSO_4$-Keimpartikeln spätestens während des Auflösungsschritts (S10);
   - Zugabe von $CaSO_4$-Keimpartikeln zum Sickerwasser (206) nach dem Schritt der Abtrennung (S12) ungelöster Rückstände (204); und
   - Durchführung des Auflösungsschritts (S10) bei einer Temperatur von mindestens 50 °C.

9. Verfahren nach einem der Ansprüche 1 bis 8, **dadurch gekennzeichnet, dass** der Extraktionsschritt (S20) von mindestens einem der Bestandteile Eisen und Phosphor die Extraktion von Eisen (S21) aus dem Sickerwasser (206) durch Flüssig-Flüssig-Extraktion mit einem organischen Lösungsmittel (222) umfasst.

10. Verfahren nach Anspruch 9, **dadurch gekennzeichnet, dass** der Schritt der Extraktion von Eisen (S21) aus dem Sickerwasser (206) nachfolgende Extraktionsstufen umfasst, wobei:

   - eine erste Extraktionsstufe (220A) die selektive Flüssig-Flüssig-Extraktion eines Eisengehalts aus dem Sickerwasser (206) und anschließende Strippung in eine Zwischenstripplösung (228) umfasst; und
   - eine zweite Extraktionsstufe (220B) die selektive Flüssig-Flüssig-Extraktion von hauptsächlich Eisenionen aus der Zwischenstripplösung (228) und anschließende Strippung in eine zweite Stripplösung (210A) umfasst, um mindestens eine höhere Eisenreinheit im gewonnenen Eisenprodukt und/oder eine höhere Eisenkonzentration zu erreichen.

11. Verfahren nach Anspruch 10, **dadurch gekennzeichnet, dass**

   die erste Extraktionsstufe (220A) die Anpassung der Beladungskapazität des organischen Lösungsmittels (222) an den Fe(III)-Gehalt des Sickerwassers (206) durch Steuerung der relativen Menge des organischen Lösungsmittels (222) zum Sickerwasser (206) umfasst; und
   mindestens eine der zweiten Extraktionsstufen (220B) und gegebenenfalls die weitere Extraktionsstufe die Steuerung der Beladungskapazität des organischen Lösungsmittels (222) umfasst, so, dass sie in der Nähe des Fe(III)-Gehalts in der Zwischenstrippinglösung (228) oder darunter liegt, durch Steuerung der relativen Menge des organischen Lösungsmittels (222) zur Zwischenstrippinglösung (228), wobei der Schritt der Rückführung (S90) zumindest eines Teils (219) eines Raffinats (211), das zumindest teilweise an Eisen und/oder Phosphor abgereichert ist, die Rückführung eines Raffinats (229) aus der Flüssig-Flüssig-Extraktion mindestens einer der zweiten Extraktionsstufen (220B) und gegebenenfalls der weiteren Extraktionsstufe umfasst, um es in einem nachfolgenden Auflösungsschritt (S10) eines Ausgangsmaterials (201) zu verwenden.

12. Verfahren nach Anspruch 9, **dadurch gekennzeichnet, dass** der Auflösungsschritt (S10) des Ausgangsmaterials (201) mit einer Säure mit einer Salzsäurekonzentration von mehr als 3 M, vorzugsweise mehr als 6 M, durchgeführt wird und dass der Schritt des Extrahierens (S21) von Eisen aus dem Sickerwasser (206) die Steuerung der Beladungskapazität des organischen Lösungsmittels (222) umfasst, sodass diese in der Nähe des Fe(III)-Gehalts im Sickerwasser (206) oder darunter liegt, durch Kontrolle der relativen Menge des organischen Lösungsmittels (222) zum Sickerwasser (206).

13. Verfahren nach einem der Ansprüche 1 bis 12, **dadurch gekennzeichnet, dass** das Ausgangsmaterial (201) Klärschlammasche ist und dass der Extraktionsschritt (S20) von mindestens einem der Bestandteile Eisen und Phosphor ferner die Extraktion von Phosphor (S22) durch Flüssig-Flüssig-Extraktion mit einem organischen Lösungsmittel (222) aus einem Raffinat des Schritts der Eisenextraktion (S21) umfasst.

14. Verfahren nach Anspruch 9, **dadurch gekennzeichnet, dass** das Ausgangsmaterial (201) ungelöste Rückstände (204) aus der Phosphorlaugung von Klärschlammasche umfasst, wobei der Auflösungsschritt (S10) des Ausgangsmaterials (201) mit einer Säure mit einer Salzsäurekonzentration (202) von mehr als 3 M, vorzugsweise mehr als 6 M, durchgeführt wird, und wobei der Schritt des Extrahierens von Eisen (S21) aus dem Sickerwasser die Steuerung der Beladungskapazität des organischen Lösungsmittels (222) umfasst, sodass diese niedriger ist als der Fe(III)-Gehalt im Sickerwasser (206), indem die relative Menge des organischen Lösungsmittels (222) zum Sickerwasser (206) gesteuert wird.

15. Verfahren nach Anspruch 14, **dadurch gekennzeichnet, dass** der Schritt der Rückführung (S90) mindestens eines Teils (219) des an Eisen und/oder Phosphor zumindest teilweise abgereicherten Raffinats (211) die Rückführung mindestens eines Teils (219) des an Eisen und/oder Phosphor zumindest teilweise abgereicherten Raffinats (211) zu einem Auflösungsschritt (S10) eines Klärschlammasche umfassenden Ausgangsmaterials (201) umfasst.

16. Verfahren nach einem der Ansprüche 1 bis 15, **gekennzeichnet durch** den weiteren Schritt der Rückgewinnung von Aluminium (S41) aus mindestens einem an Eisen und/oder Phosphor zumindest teilweise abgereicherten Raffinat (211) und einer Ausblaslösung (270) aus dem an Eisen und/oder Phosphor zumindest teilweise abgereicherten Raffinat (211).

## Revendications

1. Procédé de traitement chimique de cendres de boues d'épuration, comprenant les étapes de :

    - dissolution (S10) d'un matériau de départ (201), issu de cendres de boues d'épuration, dans un acide comprenant l'acide chlorhydrique (202) ;
    ledit matériau de départ (201) comprenant au moins des composés à base de silicium et de fer ;
    - séparation (S12) des résidus non dissous (204), moyennant quoi un lixiviat (206) reste ;
    - extraction (S20) d'au moins un parmi le fer et le phosphore dudit lixiviat (206) par extraction liquide-liquide avec un solvant organique (222) ;
    - régulation (S15) de la quantité de silice colloïdale présente dans le lixiviat (206) fourni à ladite étape d'extraction (S20) afin qu'elle soit compatible avec une quantité de boues de silice dans ladite extraction liquide-liquide avec un solvant organique (222) suffisamment faible pour rendre ladite extraction liquide-liquide avec un solvant organique (222) fonctionnelle ;
    - remise en circulation (S90) d'au moins une partie (219) d'un raffinat (211) au moins partiellement appauvri en au moins un parmi le fer et le phosphore provenant de ladite étape d'extraction (S20) d'au moins un parmi le fer et le phosphore, afin de dissoudre un matériau de départ (201), issu de cendres de boues d'épuration ;
    ladite partie remise en circulation (219) dudit raffinat (211) au moins partiellement appauvri en au moins un parmi le fer et le phosphore comprenant des ions chlorure ;
    dans lequel ladite étape de régulation (S15) est réalisée par au moins un parmi :

        le fait de favoriser (S151) la coagulation pour la croissance des particules par ajout d'un coagulant à base de silice à au moins un parmi ledit matériau de départ (201), un matériau de départ dissous issu de cendres de boues d'épuration et ledit lixiviat (206) ; et
        la réalisation (S156) de ladite étape de dissolution (S10) à une température élevée d'au moins 50 °C.

2. Procédé selon la revendication 1, **caractérisé en ce que** dans lequel ladite étape de régulation (S15) est réalisée par au moins le fait de favoriser (S151) la coagulation pour la croissance des particules par ajout d'un coagulant à base de silice à au moins un parmi ledit matériau de départ (201), un matériau de départ dissous issu de cendres de boues d'épuration et ledit lixiviat (206).

3. Procédé selon la revendication 1 ou 2, **caractérisé en ce que** ledit fait de favoriser (S151) la coagulation pour la croissance des particules est au moins partiellement réalisé par ajout d'un coagulant de silice audit matériau de départ (201).

4. Procédé selon l'une quelconque des revendications 1 à 3, **caractérisé en ce que** ledit fait de favoriser (S151) la coagulation pour la croissance des particules est au moins partiellement réalisé simultanément à ladite étape de dissolution (S10).

5. Procédé selon l'une quelconque des revendications 1 à 4, **caractérisé en ce que** ledit fait de favoriser (S151) la coagulation pour la croissance des particules est au moins partiellement réalisé dans ledit lixiviat (206) après ladite étape de séparation (S12) des résidus non dissous (204), moyennant quoi ledit procédé comprend éventuellement l'étape supplémentaire d'élimination (S19) des particules de silice coagulées dudit lixiviat (206).

6. Procédé selon l'une quelconque des revendications 1 à 5, **caractérisé par** au moins une des étapes de :

   - réalisation (S154) de ladite étape de dissolution (S10) par une solution d'acide chlorhydrique d'une concentration de plus de 3 M ; et
   - vieillissement (S155) desdites cendres de boues d'épuration dissoutes pour favoriser au moins une parmi la conversion de silicium ionique en silice colloïdale et la croissance des particules de silice colloïdale.

7. Procédé selon l'une quelconque des revendications 1 à 6, **caractérisé en ce que** ladite étape de remise en circulation (S90) d'au moins une partie (219) d'un raffinat (211) est régulée pour fournir une concentration en sels de chlorure et/ou en acide chlorhydrique dans ledit lixiviat (206) d'au moins 1 M.

8. Procédé selon l'une quelconque des revendications 1 à 7, **caractérisé en ce que** ledit matériau de départ (201) comprend du soufre, et dans lequel le procédé comprend l'étape supplémentaire de prévention de la précipitation de sulfate de calcium de se produire juste avant ou pendant ladite étape d'extraction (S20) d'au moins un parmi le fer et le phosphore, en réalisant au moins un procédé parmi :

   - le vieillissement (S161) dudit lixiviat, et
   - l'accélération (S163) de la précipitation de $CaSO_4$ ;

   avant ladite étape d'extraction (S20) d'au moins un parmi le fer et le phosphore, dans lequel ladite accélération (S163) de la précipitation de $CaSO_4$ comprend au moins un parmi :

   - l'ajout de chlorure de calcium au plus tard pendant ladite étape de dissolution (S10) ;
   - l'ajout de chlorure de calcium audit lixiviat (206) après ladite étape de séparation (S12) des résidus non dissous (204) ;
   - le renvoi du raffinat aqueux riche en chlorure de calcium résultant de ladite étape d'extraction (S20) précédente d'au moins un parmi le fer et le phosphore au plus tard pendant ladite étape de dissolution (S10) ;
   - le renvoi du raffinat aqueux riche en chlorure de calcium résultant de ladite étape d'extraction (S20) précédente d'au moins un parmi le fer et le phosphore après ladite étape de séparation (S12) des résidus non dissous (204) ;
   - l'ajout de particules d'ensemencement de $CaSO_4$ au plus tard pendant ladite étape de dissolution (S10) ;
   - l'ajout de particules d'ensemencement de $CaSO_4$ audit lixiviat (206) après ladite étape de séparation (S12) des résidus non dissous (204) ; et
   - la réalisation de ladite étape de dissolution (S10) à une température d'au moins 50 °C.

9. Procédé selon l'une quelconque des revendications 1 à 8, **caractérisé en ce que** ladite étape d'extraction (S20) d'au moins un parmi le fer et le phosphore comprend l'extraction de fer (S21) dudit lixiviat (206) par extraction liquide-liquide avec un solvant organique (222).

10. Procédé selon la revendication 9, **caractérisé en ce que** ladite étape d'extraction de fer (S21) dudit lixiviat (206) comprend des stades d'extraction ultérieurs, dans lequel :

    - un premier stade d'extraction (220A) comprend une extraction liquide-liquide sélective d'une teneur en fer dudit lixiviat (206) et un dépouillement ultérieur en une solution de séparation intermédiaire (228) ; et

- un second stade d'extraction (220B) comprend une extraction liquide-liquide sélective des ions fer principalement de ladite solution de dépouillement intermédiaire (228) et un dépouillement ultérieur en une seconde solution de séparation (210A) afin d'obtenir au moins une parmi une pureté de fer plus élevée dans le produit de fer récupéré et une concentration en fer plus élevée.

**11.** Procédé selon la revendication 10, **caractérisé en ce que**

ledit premier stade d'extraction (220A) comprend la mise en correspondance d'une capacité de charge dudit solvant organique (222) par rapport à une teneur en Fe(III) dans ledit lixiviat (206) en régulant une quantité relative dudit solvant organique (222) par rapport audit lixiviat (206) ; et
au moins un parmi ledit second stade d'extraction (220B) et ledit stade d'extraction supplémentaire, le cas échéant, comprend la régulation d'une capacité de charge dudit solvant organique (222) pour être proche de ou inférieure à une teneur en Fe(III) dans ladite solution de dépouillement intermédiaire (228) en régulant une quantité relative dudit solvant organique (222) par rapport à ladite solution de dépouillement intermédiaire (228), dans lequel ladite étape de remise en circulation (S90) d'au moins une partie (219) d'un raffinat (211) au moins partiellement appauvri en au moins un parmi le fer et le phosphore comprend le recyclage d'un raffinat (229) de ladite extraction liquide-liquide d'au moins un parmi ledit second stade d'extraction (220B) et ledit stade d'extraction supplémentaire, le cas échéant, à utiliser dans ladite étape de dissolution (S10) ultérieure d'un matériau de départ (201).

**12.** Procédé selon la revendication 9, **caractérisé en ce que** ladite étape de dissolution (S10) dudit matériau de départ (201) est réalisée avec un acide ayant une concentration en acide chlorhydrique supérieure à 3 M, de préférence supérieure à 6 M, et dans lequel ladite étape d'extraction de fer (S21) dudit lixiviat (206) comprend la régulation d'une capacité de charge dudit solvant organique (222) pour être proche de ou inférieure à une teneur en Fe(III) dans ledit lixiviat (206) en régulant une quantité relative dudit solvant organique (222) par rapport audit lixiviat (206).

**13.** Procédé selon l'une quelconque des revendications 1 à 12, **caractérisé en ce que** ledit matériau de départ (201) est des cendres de boues d'épuration, et dans lequel l'étape d'extraction (S20) d'au moins un parmi le fer et le phosphore comprend en outre l'extraction de phosphore (S22), par extraction liquide-liquide avec un solvant organique (222), d'un raffinat de ladite étape d'extraction de fer (S21).

**14.** Procédé selon la revendication 9, **caractérisé en ce que** ledit matériau de départ (201) comprend des résidus non dissous (204) d'une lixiviation au phosphore de cendres de boues d'épuration, ladite étape de dissolution (S10) dudit matériau de départ (201) est réalisée avec un acide ayant une concentration en acide chlorhydrique (202) supérieure à 3 M, de préférence supérieure à 6 M, et dans lequel ladite étape d'extraction du fer (S21) dudit lixiviat comprend la régulation d'une capacité de charge dudit solvant organique (222) pour qu'elle soit inférieure à une teneur en Fe(III) dans ledit lixiviat (206) par régulation d'une quantité relative dudit solvant organique (222) par rapport audit lixiviat (206).

**15.** Procédé selon la revendication 14, **caractérisé en ce que** ladite étape de remise en circulation (S90) d'au moins une partie (219) dudit raffinat (211) au moins partiellement appauvri en au moins un parmi le fer et le phosphore comprend la remise en circulation d'au moins une partie (219) dudit raffinat (211) au moins partiellement appauvri en au moins un parmi le fer et le phosphore vers une étape de dissolution (S10) d'un matériau de départ (201) comprenant des cendres de boues d'épuration.

**16.** Procédé selon l'une quelconque des revendications 1 à 15, **caractérisé par** l'étape supplémentaire de récupération d'aluminium (S41) d'au moins un parmi ledit raffinat (211) au moins partiellement appauvri en au moins un parmi le fer et le phosphore et une solution de purge (270) dudit raffinat (211) au moins partiellement appauvri en au moins un parmi le fer et le phosphore.

Fig. 1

Fig. 2

| S10 | DISSOLVE START MATERIAL IN HCl | S14 PRE-TREATMENT |
| S12 | SEPARATE UNDISSOLVED RESIDUES | |
| | | S15 CONTROL AMOUNT OF COLLOIDAL SILICA |
| | | S19 REMOVE SILICA PARTICLES |

Fig. 3

| S10 | DISSOLVE START MATERIAL IN HCl | S14 PRE-TREATMENT S15 CONTROL AMOUNT OF COLLOIDAL SILICA |
| S12 | SEPARATE UNDISSOLVED RESIDUES | |

Fig. 4

S15
CONTROL AMOUNT OF COLLOIDAL SILICON

S151 PROMOTE COAGULATION TO GROW PARTICLES

S152 CONVERT TO IONIC SILICON

S153 REMOVE IONIC SILICA FAST

S154 DISSOLVE AT HIGH ACIDITY

S155 AGE DISSOLVED START MATERIAL

S156 DISSOLVE AT ELEVATED TEMPERATURE

TREATING OF SULPHUR

S16

S161 — AGING OF LEACHATE

S162 — ADD GYPSUM INHIBITORS

S163 — PROMOTE GYPSUM FORMATION

## Fig. 5

S14

DISSOLVE START MATERIAL IN HCl

S10

PRE-TREATMENT

SEPARATE UNDISSOLVED RESIDUES

S12

S16 — TREATING OF SULPHUR

S169 — REMOVE GYPSUM

## Fig. 6

S14

DISSOLVE START MATERIAL IN HCl

S10

S16 — PRE-TREATMENT

TREATING OF SULPHUR

SEPARATE UNDISSOLVED RESIDUES

S12

## Fig. 7

Fig. 8

Fig. 9

Fig. 10

220

223

221    222B    222C    226

81    223B

80

82

227    222    225

## Fig. 11

20

220A    230    220B

207    222B    228    222B    210A

80    80

211    222    209    222    209

229

## Fig. 12

## Fig. 13

EXTRACTION OF Fe — S21

1ST EXTRACTION STAGE OF LIQUID-LIQUID EXTRACTION OF IRON FROM LEACHATE — S22

1ST STRIPPING INTO AN INTERMEDIATE STRIP SOLUTION — S23

2ND EXTRACTION STAGE OF LIQUID-LIQUID EXTRACTION OF MOSTLY IRON IONS FROM INTERMEDIATE STRIP SOLUTION — S24

2ND STRIPPING INTO A STRIP SOLUTION — S25

FROM STEP S21

NEUTRALIZE FERRIC CHLORIDE PRODUCT COMPRISING HYDROCHLORIDE ACID BY ADDING A NEUTRALIZATION AGENT — S26

OXIDIZE ANY FERROUS IRON TO FERRIC IRON USING AN OXIDIZING AGENT — S27

END

## Fig. 16

223

222B                                    222C

81

Fig. 14

24

231

210A            83

85

232

84      233

234

86      235

Fig. 15

FROM (OR COMBINED WITH) STEP S10

| PRE-TREATMENT | S14 |
| REDUCE ANY FERRIC IRON TO FERROUS IRON | S17 |

| EXTRACTION OF Fe/P | S20 |
| EXTRACTION OF P | S30 |

TO STEP S40 OR S90

**Fig. 17**

**Fig. 18**

# Fig. 19

202A
1A
201A
213A-218A
219A
210A
204A
202B
201B
1B
213B-218B
219B
210B
204B

START

1ST PHASE OF CHEMICAL PROCESSING OF SEWAGE SLUDGE ASH USING LOW CONCENTRATION HCl — S98

2ND PHASE OF CHEMICAL PROCESSING OF SEWAGE SLUDGE ASH USING HIGH CONCENTRATION HCl — S99

END

# Fig. 20

PO$_4^{3-}$-P IN THE ORGANIC PHASE (g/L)

Fig. 21

PO$_4^{3-}$-P IN THE AQUEOUS PHASE (g/L)

Fig. 22

Fig. 23

Fig. 24

Fig. 25

# Fig. 26

| RECOVERY OF Al |
|---|

S41

| S42 | INCREASE pH OF RAFFINATE |
|---|---|
| S43 | ADD PHOSPHOROUS COMPOUNDS |
| S44 | SEPARATE ALUMINIUM PRECIPITATES |
| S45 | ADD CALCIUM COMPOUNDS |
| S46 | REACT WITH SODIUM HYDROXIDE |
| S47 | SEPARATE CALCIUM PHOSPHATE |
| S48 | RECIRCULATE CALCIUM PHOSPHATE TO PREVIOUS PROCESS |

# Fig. 28

| RECOVERY OF HEAVY METALS |
|---|

S50

| S51 | INCREASE pH OF SOLUTION |
|---|---|
| S52 | ADD PHOSPHOROUS COMPOUNDS |
| S53 | PRECIPITATE HEAVY METALS AS SULFIDES |
| S54 | SEPARATE HEAVY METAL PRECIPITATES |
| S55 | REMOVE HEAVY METALS BY ION EXCHANGE |

# Fig. 30

| RECOVERY OF Mg |
|---|

S60

| S61 | INCREASE pH OF SOLUTION |
|---|---|
| S62 | SEPARATE MAGNESIUM HYDROXIDE PRECIPITATES |

211

40
41

255  256  257

43    256    45    44    213

42

254    42    258

## Fig. 27

254

40
50

255    242

52

214

259    51

## Fig. 29

259

40
60

255

62

215

260    61

## Fig. 31

58

Fig. 32

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2015091946 A1
- WO 2015067328 A1
- WO 2015165481 A1
- WO 2018046621 A1
- EP 3266742 B1
- WO 2020169708 A1
- WO 9506004 A1
- WO 2011025440 A1
- WO 2014178788 A1
- WO 2010138045 A1
- WO 2017111685 A1

### Non-patent literature cited in the description

- Phosphorus: Polluter and Resource of the Future - Removal and Recovery from Wastewater. IWA Publishing
- Phosphorus: Polluter and Resource of the Future - Removal and Recovery from Wastewater. IWA Publishing, 2018
- Dealing with a siliceous crud problem in solvent extraction. *Hydrometallurgy*, 1985, vol. 15
- Coagulation of colloidal silica by calcium ions, mechanism, and effect of particle size. *Journal of Colloid and Interface Science*, 1975, vol. 53 (3), 576-588
- Composite Fouling of Calcium Sulfate and Calcium Carbonate in a Dynamic Seawater Reverse Osmosis Unit. MSc. Thesis. The University of New South Wales, 2005
- **SATO T.** Liquid-liquid extraction of iron (III) from hydrochloric acid solutions by tributyl phosphate. *Shingen-to-Sozai*, 2002, vol. 118, 612-616
- **HABASHI et al.** The hydrochloric acid route for phosphate rock.. *Journal of Chemical Technology and Biotechnology*, 1987, vol. 38
- **NAITO** ; **SUZUKI**. The mechanism of the extraction of several proton acids by tri.n.butyl phosphate.. Japan Atomic Energy Research Institute, 1961
- **JIN et al.** Liquid-Liquid Equilibrium in the System Phosphoric Acid/Water/Tri-n-butyl Phosphate/Calcium Chloride. *J. Chem. Eng. Data*, 2010, vol. 55, 3196-3199
- Production d'acide phosphorique par attaquechlorhydrique de minerais phosphatés avec réduction desnuisances environnementales et récupération des terresrares en tant que sous-produits. **FERNANDO PEREIRA**. Doctoral Thesis. Ecole Nationale Superieure Des Mines De Saint-Etienne, 2013
- **PEREIRA** ; **BILAL**. Phosphoric acid extraction and rare earth recovery from apatites of the Brazilian phosphatic ores.. *Romanian Journal of Mineral Deposits*, 2012, vol. 85 (2), 49-52
- **JIN et al.** Extraction kinetics of phosphoric acid from the phosphoric acid - calcium chloride solution by tri-n-butyl phosphate.. *Industrial & Engineering Chemistry Research*, January 2015